(19) **Europäisches Patentamt / European Patent Office / Office européen des brevets**

(11) **EP 3 820 149 A1**

(12) **EUROPEAN PATENT APPLICATION**
published in accordance with Art. 153(4) EPC

(43) Date of publication:
**12.05.2021 Bulletin 2021/19**

(21) Application number: **19830632.6**

(22) Date of filing: **09.05.2019**

(51) Int Cl.:
**H04N 19/109** *(2014.01)*    **H04N 19/139** *(2014.01)*
**H04N 19/176** *(2014.01)*    **H04N 19/54** *(2014.01)*

(86) International application number:
**PCT/JP2019/018616**

(87) International publication number:
**WO 2020/008724 (09.01.2020 Gazette 2020/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.07.2018 JP 2018129536**

(71) Applicant: **Sony Corporation**
**108-0075 Tokyo (JP)**

(72) Inventor: **KONDO, Kenji**
**Tokyo 108-0075 (JP)**

(74) Representative: **D Young & Co LLP**
**120 Holborn**
**London EC1N 2DY (GB)**

(54) **IMAGE PROCESSING DEVICE, IMAGE PROCESSING METHOD AND PROGRAM**

(57) When a motion detecting unit (122a) (a motion compensating unit), which has a plurality of motion compensation modes for compensating the state of the motion occurring with time in a partial area representing some part of an image, detects the state of the motion occurring in the partial area, and when the state of the motion detected by the motion detecting unit satisfies a predetermined condition; a motion compensation execution control unit (122c) (an execution control unit) makes the motion detecting unit (122a) skip the motion compensation mode corresponding to the predetermined condition. The application concerned can be applied in, for example, an image coding device.

# FIG.12

122 INTER-PREDICTION UNIT

122a MOTION DETECTING UNIT

122b CONDITION DETERMINING UNIT

122c MOTION COMPENSATION EXECUTION CONTROL UNIT

EP 3 820 149 A1

**Description**

Field

The application concerned is related to an image processing device, an image processing method, and a program; and is particularly related to an image processing device, an image processing method, and a program that enable performing motion compensation at a fast rate as well as enable achieving enhancement in the encoding efficiency of images.

Background

In the ITU-T (International Telecommunication Union Telecommunication Standardization Sector), the JVET (Joint Video Exploration Team) that is formed to explore next-generation video encoding has given a proposal about an inter-prediction operation (affine motion compensation (MC) prediction) in which motion compensation is carried out by performing affine transformation with respect to a reference image based on the motion vectors at two apices in the reference image (for example, refer to Non Patent Literature 1 and Non Patent Literature 2). According to the inter-prediction operation, not only the translation (parallel translation) among the screens can be compensated, but the rotational transfer and the linear motion (generally called affine transformation) such as enlargement and reduction can also be compensated; and a predicted image having high accuracy can be generated.

Citation List

Patent Literature

Non Patent Literature 1: Jianle Chen et al., "Algorithm Description of Joint Exploration Test Model 4 (JVET-C1001)", JVET of ITU-T SG16 WP3 and ISO/IEC JTC1/SC29/WG11, 26 May-1 June 2016
Non Patent Literature 2: Feng Zou, "Improved affine motion prediction (JVET-C0062)", JVET of ITU-T SG16 WP3 and ISO/IEC JTC1/SC29/WG11, 26 May-1 June 2016

Summary

Technical Problem

However, at the time of performing motion compensation involving affine transformation, there is an increase in the number of parameters as compared to an inter-prediction operation in which a predicted image is generated by compensating only the translation based on a single motion vector. Hence, there occurs an increase in the overhead, thereby leading to a decline in the encoding efficiency.

In that regard, in the application concerned, an image processing device, an image processing method, and a program are proposed that enable performing motion compensation at a fast rate as well as enable achieving enhancement in the encoding efficiency of images.

Solution to Problem

According to the present disclosure, an image processing device is provided that includes: a motion compensating unit that has a plurality of motion compensation modes for compensating state of motion occurring with time in a partial area representing some part of an image, detects state of motion occurring in the partial area, and compensates the detected state of motion and generates a predicted image; and an execution control unit that, either when the state of motion detected by the motion compensating unit satisfies a predetermined condition or when condition under which the motion compensating unit generates the predicted image satisfies the predetermined condition, makes the motion compensating unit skip motion compensation mode corresponding to the predetermined condition.

According to the present disclosure, an image processing method is provided in which a plurality of motion compensation modes is provided for compensating state of motion occurring with time in a partial area representing some part of an image, state of motion occurring in the partial area is detected, and the detected state of motion is compensated and a predicted image is generated, wherein the image processing method includes: skipping that, either when state of motion detected in the partial area satisfies a predetermined condition or when condition for generating the predicted image satisfies the predetermined condition, includes skipping motion compensation mode corresponding to the predetermined condition.

According to the present disclosure, a program is provided that causes a computer, which is included in an image processing device, to function as: a motion compensating unit that has a plurality of motion compensation modes for compensating state of motion occurring with time in a partial area representing some part of an image, detects state of motion occurring in the partial area, and compensates the detected state of motion and generates a predicted image; and an execution control unit that, either when the state of motion detected by the motion compensating unit satisfies a predetermined condition or when condition under which the motion compensating unit generates the predicted image satisfies the predetermined condition, makes the motion compensating unit skip motion compensation mode corresponding to the predetermined condition.

Advantageous Effects of Invention

According to the application concerned, it becomes possible to enhance the encoding efficiency of images. That is, according to the application concerned, in the case of generating a predicted image based on motion vectors, it becomes possible to reduce the overhead and enhance the encoding efficiency.

Meanwhile, the abovementioned effect is not necessarily limited in scope and, in place of or in addition to the abovementioned effect, any other effect mentioned in the present written description can also be achieved.

Brief Description of Drawings

FIG. 1 is a diagram for explaining an inter-prediction operation for performing motion compensation based on a single motion vector.

FIG. 2 is a first diagram for explaining the inter-prediction operation for performing motion compensation based on two motion vectors.

FIG. 3 is a second diagram for explaining the inter-prediction operation for performing motion compensation based on two motion vectors.

FIG. 4 is a diagram for explaining the inter-prediction operation for performing motion compensation based on three motion vectors.

FIG. 5 is a diagram illustrating the number of parameters detected from a reference image, the types of detectable motions, and motion compensation modes.

FIG. 6 is a diagram for explaining block partitioning in the HEVC.

FIG. 7 is a diagram illustrating a first example of the state of occurrence of a specific motion in each PU in an image.

FIG. 8 is a diagram illustrating a second example of the state of occurrence of a specific motion in each PU in an image.

FIG. 9 is a diagram illustrating a third example of the state of occurrence of a specific motion in each PU in an image.

FIG. 10 is a diagram illustrating a fourth example of the state of occurrence of a specific motion in each PU in an image.

FIG. 11 is a functional block diagram illustrating an exemplary configuration of an image encoding device, which represents an example of an image processing device in which the application concerned is applied, according to an embodiment.

FIG. 12 is a functional block diagram illustrating a detailed functional configuration of a motion predicting unit of the image encoding device.

FIG. 13 is a diagram for explaining about a merge mode.

FIG. 14 is a flowchart illustrating an exemplary flow of operations performed in the image encoding device.

FIG. 15 is a flowchart for explaining an exemplary flow of operations by which the image encoding device estimates RD costs in the inter-prediction mode.

FIG. 16 is a flowchart for explaining an exemplary flow of a motion prediction operation performed in an AMVP mode by the image encoding device.

FIG. 17 is a flowchart for explaining an exemplary flow of an encoding operation performed by the image encoding device.

FIG. 18 is a diagram illustrating an example of the neighboring areas set at the time of performing the motion prediction operation in the merge mode.

FIG. 19 is a flowchart for explaining an exemplary flow of the motion prediction operation performed by the image encoding device.

FIG. 20 is a flowchart for explaining an exemplary flow of operations by which the image encoding device sets the motion compensation mode according to the size of a CU, and performs motion compensation and encoding.

FIG. 21 is a flowchart for explaining an exemplary flow of operations by which the image encoding device sets the motion compensation mode according to a QP value, and performs motion compensation and encoding.

FIG. 22 is a functional block diagram illustrating an exemplary configuration of an image decoding device, which represents an example of an image processing device in which the application concerned is applied.

FIG. 23 is a flowchart for explaining an exemplary flow of a decoding operation performed by the image decoding device.

FIG. 24 is a flowchart for explaining an exemplary flow of operations by which the image decoding device decodes video signals that have been encoded in the merge mode.

FIG. 25 is a flowchart for explaining an exemplary flow of operations by which the image decoding device decodes video signals that have been encoded in the AMVP mode.

FIG. 26 is a flowchart for explaining an exemplary flow of operations by which the image decoding device decodes video signals that have been encoded after being subjected to motion compensation corresponding to the size of the CU.

FIG. 27 is a flowchart for explaining an exemplary flow of operations by which the image decoding device decodes video signals that have been encoded after being subjected to motion compensation corresponding to the QP value.

FIG. 28 is a block diagram illustrating an exemplary hardware configuration of a computer.

FIG. 29 is a block diagram illustrating an exemplary schematic configuration of a television device.

FIG. 30 is a block diagram illustrating an exemplary schematic configuration of a cellular phone.

FIG. 31 is a block diagram illustrating an exemplary schematic configuration of a recording-reproducing device.

FIG. 32 is a block diagram illustrating an exemplary schematic configuration of an imaging device.

FIG. 33 is a block diagram illustrating an exemplary schematic configuration of a video set.

FIG. 34 is a block diagram illustrating an exemplary schematic configuration of a video processor.

FIG. 35 is a block diagram illustrating another exemplary schematic configuration of the video processor.

FIG. 36 is a block diagram illustrating an exemplary schematic configuration of a network system.

Description of Embodiments

Preferred embodiments of the application concerned are described below in detail with reference to the accompanying drawings. In the embodiments described below, identical constituent elements are referred to by the same reference numerals, and the explanation is not given repeatedly.

<Explanation of motion prediction method in inter-prediction operation)

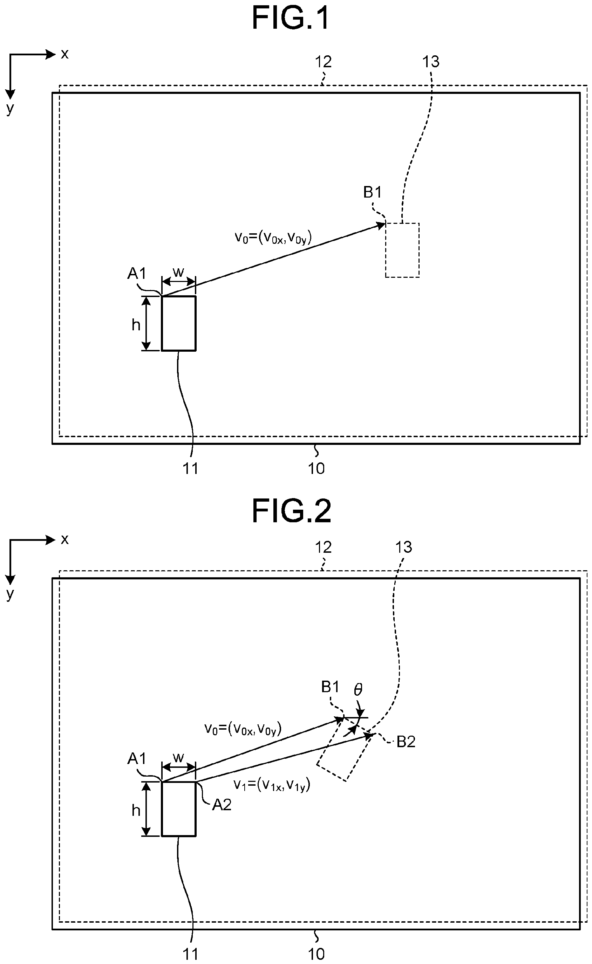

Firstly, the explanation is given about a motion prediction method in an inter-prediction operation meant for generating a predicted image. In the inter-prediction operation, an image that would be obtained after a predetermined period of time from the current timing is predicted under the assumption that the motions of the past images are maintained. Herein, the motions under consideration include translation and linear transformation (rotation, enlargement-reduction, and skewing (shearing)) that are describable using what is called affine transformation (linear transformation). FIG. 1 is a diagram for explaining the inter-prediction operation for performing motion compensation based on a single motion vector.

In the following explanation, unless specified otherwise, the horizontal direction of an image represents the x direction and the vertical direction of an image represents the y direction.

In the inter-prediction operation, from among decoded images, two decoded images taken at different timings are selected as reference images and, as illustrated in FIG. 1, regarding a partial area representing some part of a first reference image 10, the position to which that partial area has moved in a second reference image 12 is decided. The direction of movement and the amount of movement of the partial area is expressed using a motion vector $v_0$. Then, based on the decided motion vector $v_0$, the target image for encoding is predicted. Meanwhile, in FIG. 1, a PU (Prediction Unit) 11 representing the partial area is an example of a partial area according to the application concerned. It is assumed that the PU 11 is a rectangular area having a width w and a height h.

The motion vector $v_0$ is a vector joining a point A1 present in the PU 11 to the corresponding point of the point A1 in the second reference image 12. The corresponding point of the point A1 in the second reference image 12 is detected by, for example, searching the second reference image 12 for an area having a contrast distribution with a high correlation with the contrast distribution around the point A1 in the first reference image 10. In FIG. 1 is illustrated an example in which a point B1 is detected in the second reference image 12 as the corresponding point of the top left point A1 of the PU 11. Meanwhile, in the PU 11, the point to be set for the purpose of detecting the corresponding point is not limited to the top left point of the PU 11. Moreover, the search for the corresponding point is performed by matching the apices of the first reference image 10 and the second reference image 12. However, in FIG. 1, for the purpose of illustration, the first reference image 10 and the second reference image 12 are drawn with a slight misalignment therebetween. In image processing, such a search for the corresponding points is a commonly-used method in, for example, searching the corresponding points between the left-side images and the right-side images taken by a stereo camera.

Hence, the detailed explanation about the search is not given. Meanwhile, the first reference image 10 and the second reference image 12 represent examples of an image according to the application concerned.

When a single pair of corresponding points (for example, the pair of the points A1 and B1 illustrated in FIG. 1) is detected, a single motion vector $v_0$ ($v_{0x}$, $v_{0y}$) joining those corresponding points is decided. In the example illustrated in FIG. 1, a single motion vector $v_0$ ($v_{0x}$, $v_{0y}$) joining the points A1 and B1 is decided. That state is referred to as the state in which two parameters are detected. That is, in order to decide a single motion vector $v_0$, it is sufficient to detect two parameters (a pair of corresponding points). Subsequently, in the example illustrated in FIG. 1, it is interpreted that the PU 11 undergoes translation and moves to a corresponding block 13. That is, as a result of detecting a pair of corresponding points (two points) with respect to the PU 11, it becomes possible to detect the translation occurring in the partial area (the PU 11).

Then, in the direction equivalent to the detected motion vector $v_0$, the position of the corresponding block 13 in the second reference image 12 is moved (i.e., the motion is compensated) by an amount equivalent to the size of the motion vector $v_0$; and a predicted image is generated that indicates the predicted position of the corresponding block 13.

FIG. 2 is a first diagram for explaining the inter-prediction operation for performing motion compensation based on two motion vectors. Particularly, FIG. 2 is a diagram for explaining the case in which the partial area (the PU 11) formed in the first reference image 10 undergoes translation and rotational transfer.

With respect to two different points A1 and A2 in the PU 11, corresponding points B1 and B2 are respectively detected in the second reference image 12, and two motion vectors are decided. In FIG. 2 is illustrated an example in which motion vectors $v_0$ ($v_{0x}$, $v_{0y}$) and $v_1$ ($v_{1x}$, $v_{1y}$) are decided. That state is referred to as the state in which four parameters are detected. That is, in order to decide two single motion vectors $v_{01}$ and $v_{02}$, it is sufficient to detect four parameters (two pairs of corresponding points). Subsequently, in the example illustrated in FIG. 2, it is interpreted that the PU 11 undergoes translation and then undergoes rotational transfer by a rotation angle $\theta$, and moves to the corresponding block 13. That is, as a result of detecting two pairs of corresponding points (four points) with respect to the PU 11, it becomes possible to detect the motion including translation and rotational transfer occurring in the partial area (the PU 11). Meanwhile, mathematically, if three parameters including a single motion vector (two parameters) enabling identification of translation and the rotation angle (one parameter) enabling identification of the amount of rotation are decided, it becomes possible to identify the motion including translation and rotational transfer. However, herein, it is assumed that four parameters (two pairs of corresponding points) are identified.

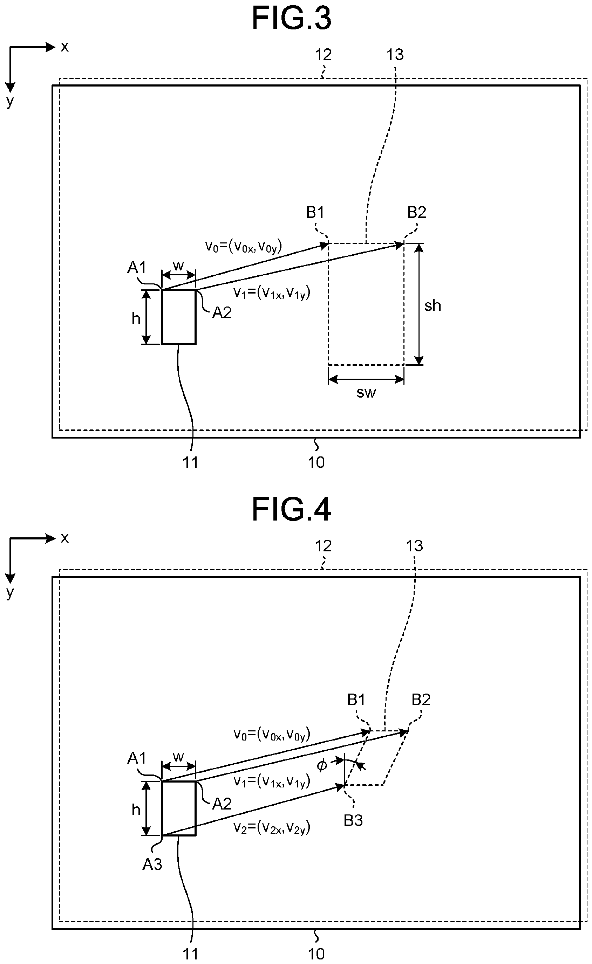

FIG. 3 is a second diagram for explaining the inter-prediction operation for performing motion compensation based on two motion vectors. Particularly, FIG. 3 is a diagram for explaining the case in which the partial area (the PU 11) formed in the first reference image 10 undergoes translation and enlargement-reduction (scaling).

With respect to the two different points A1 and A2 in the PU 11, the corresponding points B1 and B2 are respectively detected in the second reference image 12, and two motion vectors are decided. In FIG. 3 is illustrated an example in which the motion vectors $v_0$ ($v_{0x}$, $v_{0y}$) and $v_1$ ($v_{1x}$, $v_{1y}$) are decided. That state represents the state in which four parameters are detected. Subsequently, in the example illustrated in FIG. 3, it is interpreted that the PU 11 undergoes translation and then undergoes enlargement-reduction by a scaling factor "s" (when s>1 holds true, undergoes enlargement; and, when s<1 holds true, undergoes reduction), and moves to the corresponding block 13. That is, as a result of detecting two pairs of corresponding points (four points) with respect to the PU 11, it becomes possible to detect the motion including translation and enlargement-reduction occurring in the partial area (the PU 11). Meanwhile, mathematically, if three parameters including a single motion vector (two parameters) enabling identification of translation and the scaling factor (one parameter) enabling identification of the enlargement factor/reduction factor are decided, it becomes possible to identify the motion including translation and enlargement-reduction. However, herein, it is assumed that four parameters (two pairs of corresponding points) are identified.

FIG. 4 is a diagram for explaining the inter-prediction operation for performing motion compensation based on three motion vectors. Particularly, FIG. 4 is a diagram for explaining the case in which the partial area (the PU 11) formed in the first reference image 10 undergoes translation and skew deformation.

With respect to three different points in the PU 11, the corresponding points are detected in the second reference image 12, and three motion vectors are decided. In FIG. 3 is illustrated an example in which motion vectors $v_0$ ($v_{0x}$, $v_{0y}$), $v_1$ ($v_{1x}$, $v_{1y}$), and $v_2$ ($v_{2x}$, $v_{2y}$) are decided. That state is referred to as the state in which six parameters are detected. That is, in order to decide three motion vectors $v_0$, $v_1$, and $v_2$; six parameters (three pairs of corresponding points) can be detected. Subsequently, in the example illustrated in FIG. 4, it is interpreted that the PU 11 undergoes translation and then undergoes skew deformation by a shear angle $\phi$, and moves to the corresponding block 13. That is, as a result of detecting three pairs of corresponding points with respect to the PU 11, it becomes possible to detect the motion including translation, rotational transfer, enlargement-reduction, and skew deformation occurring in the partial area (the PU 11).

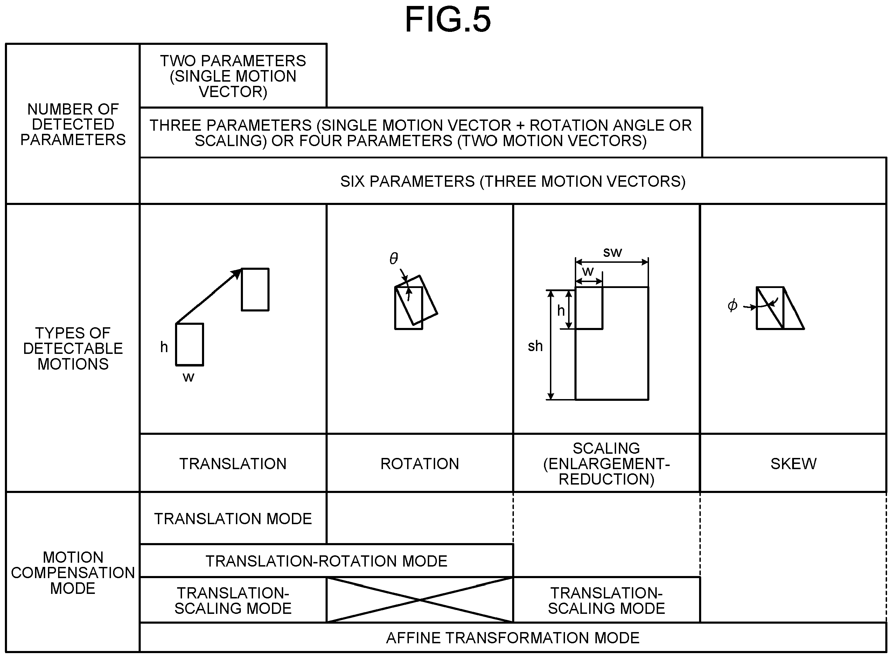

FIG. 5 is a diagram illustrating the number of parameters detected from a reference image, the types of detectable motions, and motion compensation modes. As illustrated in FIG. 5, as the number of detected parameters increases from two to four (three) to six; the number of types of detectable motions also increases. That is, as the number of detected parameters increases, the accuracy of the predicted image also improves. However, an increase in the number of detected parameters leads to an increase in the calculation cost of the search for corresponding points and an increase in the amount of encoding to be transmitted. As a result, the overhead increases and the encoding efficiency undergoes a decline.

A translation mode represents the mode for compensating the motion that is generated due to translation (parallel translation).

A translation-rotation mode represents the mode for compensating the motion that is generated due to a combination of translation and rotational transfer.

A translation-scaling mode represents the mode for compensating the motion that is generated due to a combination of translation and enlargement-reduction.

An affine transformation mode represents the mode for compensating the motion that is generated due to a combination of translation, rotational transfer, enlargement-reduction, and skewing.

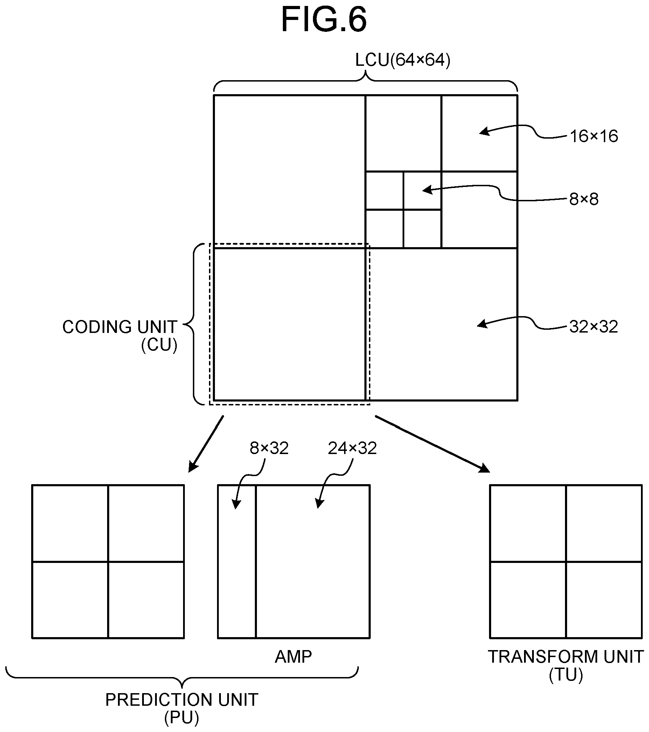

Given below is the explanation about generation of a predicted image and about the block partitioning of an image as required for image encoding. FIG. 6 is a diagram for explaining the block partitioning in the HEVC (High Efficiency Video encoding).

In an image encoding method such as the MPEG2 (Moving Picture Experts Group 2 (ISO/IEC 13818-2)) or the AVC, the encoding operation is performed in processing units called macro blocks. A macro block is a block having the uniform size of, for example, 16 pixels×16 pixels. In contrast, in the HEVC representing a new video encoding method, the encoding operation is performed in processing units called coding units (CUs). Moreover, the prediction operation is performed in processing units called prediction units (PUs). Furthermore, in order to compress the volume of information, a transformation operation for orthogonal transformation (described later) is performed with respect to the prediction result in processing units called transform units (TUs). Meanwhile, the CUs, the PUs, and the TUs can also be identical blocks.

The largest CU equivalent to a conventional macro block is called an LCU (Largest coding unit) that has the size of, for example, 64×64. The LCU is partitioned into CUs on the basis of quadtree partitioning, and each CU is partitioned into independent PUs and TUs. Moreover, the PUs and TUs are partitioned on the basis of quadtree partitioning. As far as the PUs are concerned, partitions of oblong sizes such as 32×8, 32×24, 16×4, and 16×12 called AMPs (Asymmetric Motion Partitions) are allowed. As a result of allowing such asymmetric block partitioning, the degree of freedom gets enhanced at the time of partitioning an image into areas. That enables generation of prediction blocks that are in accordance with the moving objects in an image, thereby enabling achieving enhancement in the motion prediction performance.

<Explanation of motion occurring in image>

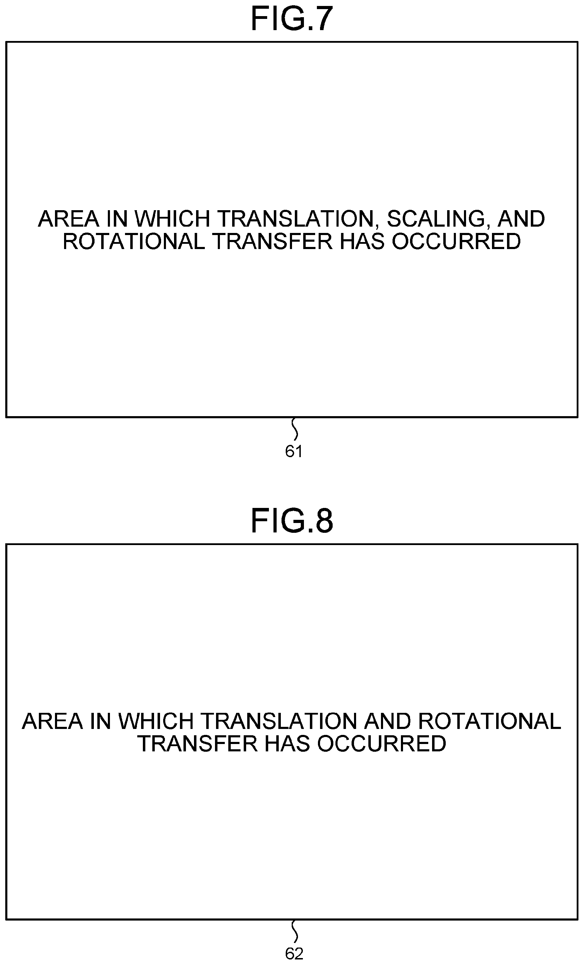

FIGS. 7 to 10 are diagrams for explaining the state of occurrence of specific motions in each PU in an image.

In the example illustrated in FIG. 7, in an entire image 61; translation, scaling (enlargement-reduction), and rotational transfer has occurred between two reference images. In that case, in the inter-prediction operation for all PUs in the image 61, motion compensation is performed according to the translation-rotation mode or the translation-scaling mode.

In the example illustrated in FIG. 8, in an entire image 62; translation and rotational transfer has occurred with respect to a reference image due to the camera shake at the time of taking images. In that case, in the inter-prediction operation for all PUs in the image 62, motion compensation need not be performed according to the translation-scaling mode.

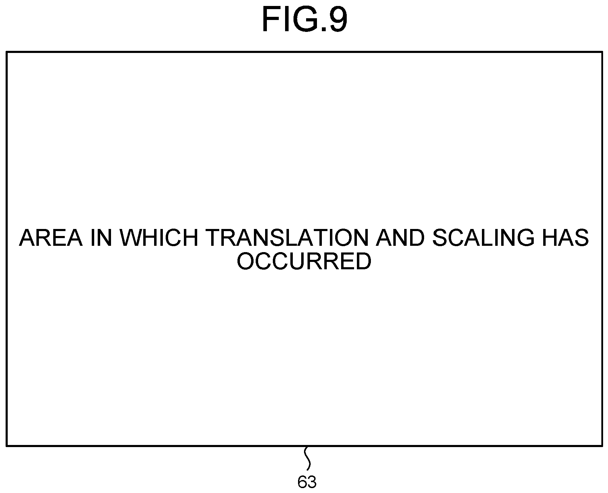

In the example illustrated in FIG. 9, in an entire image 63, translation and scaling has occurred between two reference images. In that case, in the inter-prediction operation for all PUs in the image 63, motion compensation need not be performed according to the translation-rotation mode.

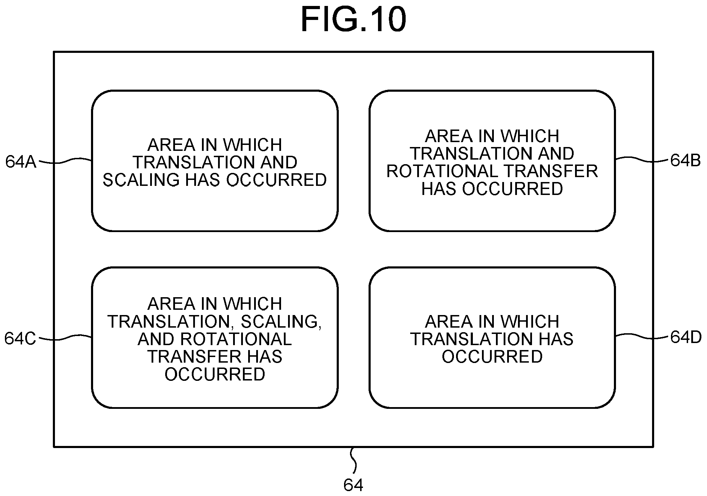

In the example illustrated in FIG. 10, an image 64 includes: an area 64A in which translation and scaling has occurred between two reference images; an area 64B in which translation and rotational transfer has occurred between two reference images; an area 64C in which translation, scaling, and motion in the rotational direction has occurred between two reference images; and an area 64D in which only translation has occurred.

In that case, in the inter-prediction operation for the PUs in the area 64C, it is desirable to perform motion compensation according to the translation-rotation mode or the translation-scaling mode. However, in the areas 64A, 64B, and 64D; it is not necessary to compensate the translation, the rotational transfer, and the scaling. That is, regarding the area 64A, it is sufficient to perform motion compensation according to the translation-scaling mode. Regarding the area 64B, it is sufficient to perform motion compensation according to a rotation-scaling mode. Regarding the area 64D, it is sufficient to perform scaling according to the translation mode.

In this way, when it is possible to predict the state of the motion occurring in each PU in an image, it is not necessary to perform all types of motion compensation, and only the predicted motion can be compensated. Moreover, if the state of the occurring motion can be predicted in an early stage of the motion prediction operation, then the evaluation about whether other types of motion have occurred can be discontinued.

That is, if the state of the predicted motion indicates translation, then it is desirable to perform motion compensation according to two-parameter detection having as fewer parameters to be detected as possible. Moreover, if the state of the motion is predicted to include rotational transfer or enlargement-reduction, then it is desirable to perform motion compensation according to four-parameter detection (or three-parameter detection) having as fewer parameters to be detected as possible. Furthermore, if the state of the motion is predicted to include the skew motion, it is desirable to perform motion compensation according to six-parameter detection. In the application concerned, such a line of thinking is applied so as to reduce the overhead and enhance the encoding efficiency.

<First embodiment>

(Explanation of configuration of image encoding device)

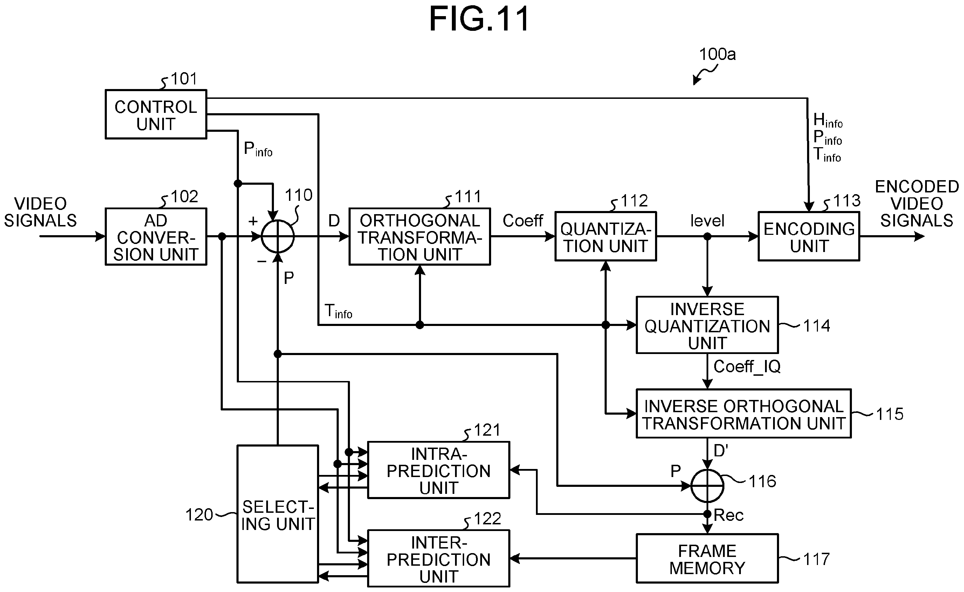

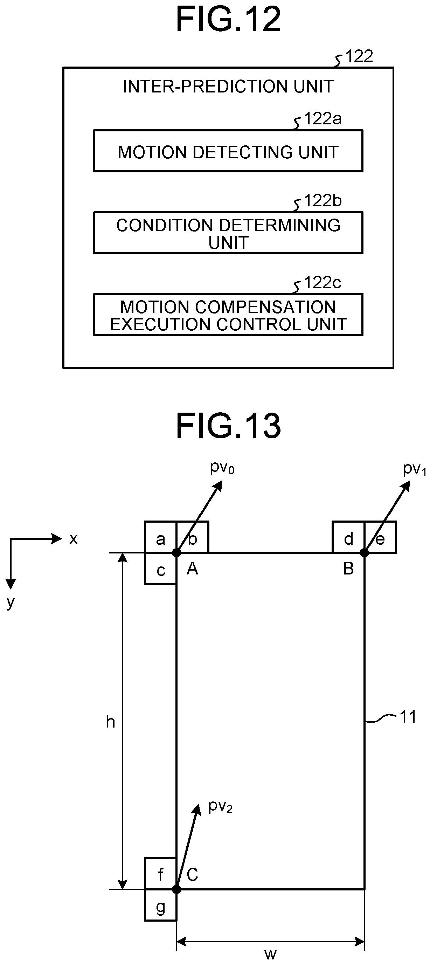

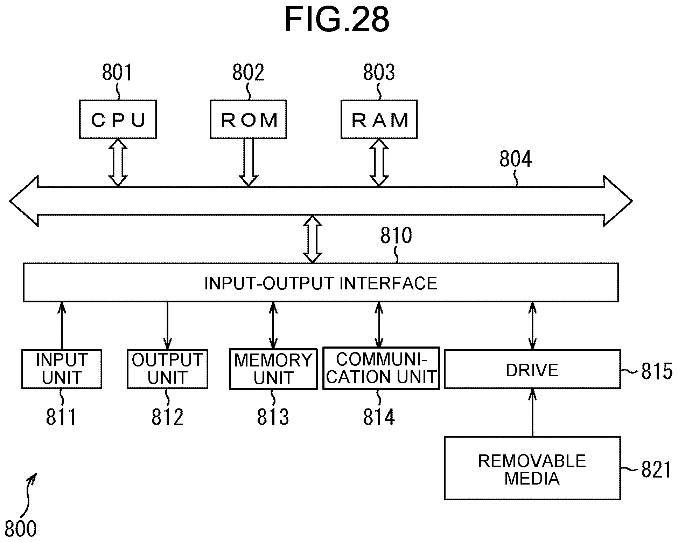

FIG. 11 is a functional block diagram illustrating an exemplary configuration of an image encoding device 100a, which represents an example of an image processing device in which the application concerned is applied, according to an embodiment. FIG. 12 is a functional block diagram illustrating a detailed functional configuration of a motion predicting unit 123 of the image encoding device 100a. Regarding the functions illustrated in FIG. 11, for example, a CPU 801 and memory devices such as a ROM 802 and a RAM 803 can be used as illustrated in FIG. 28 (described later), and the functions of each constituent element (described later) of the image encoding device 100a can be implemented when the CPU 801 executes programs stored in the ROM 802 or the RAM 803. Alternatively, the functions of some or all of the constituent elements illustrated in FIG. 11 can be implemented using dedicated hardware.

With reference to FIG. 11, the image encoding device 100a is, what is called, a video encoder that encodes the predictive residue between an image and a predicted image of that image, as in the case of the AVC or the HEVC. The image encoding device 100a implements, for example, the technology proposed in the HEVC or the technology proposed in the JVET.

Meanwhile, in FIG. 11, only the main details such as the processing units and the data flow are illustrated, and the details illustrated in FIG. 11 do not necessarily represent the entire configuration. That is, there can be processing units that are not illustrated as blocks in the image encoding device 100a in FIG. 11, and there can be operations and data flows that are not illustrated as arrows in FIG. 11.

As may be necessary, the image encoding device 100a encodes images (videos) according to the inter-prediction operation or an intra-prediction operation. In the intra-prediction operation, what is called in-frame prediction is performed in which the prediction is performed using the information available only in a single reference image. An encoded video has a GOP (Group of Pictures) structure and, for example, is configured with I-pictures encoded according to the intra-prediction, P-pictures encoded according to the inter-prediction, and B-pictures predicted from the I-pictures and B-pictures.

Meanwhile, as the motion compensation modes for performing motion compensation in the inter-prediction operation, the image encoding device 100a performs appropriate motion compensation for compensating the detected motion according to the state of the motion (translation, rotation, enlargement-reduction, skew motion, and combined motion) occurring in the reference images.

In FIG. 11, the image encoding device 100a includes a control unit 101, an AD conversion unit 102, an arithmetic unit 110, an orthogonal transformation unit 111, a quantization unit 112, an encoding unit 113, an inverse quantization unit 114, an inverse orthogonal transformation unit 115, an arithmetic unit 116, and a frame memory 117. Moreover, the image encoding device 100 includes a selecting unit 120, an intra-prediction unit 121, and an inter-prediction unit 122.

The image encoding device 100a performs encoding with respect to input video signals (videos) in units of frames, and performs encoding with respect to each of a plurality of CUs (or PUs) formed in images.

The control unit 101 sets various encoding parameters (header information Hinfo, prediction information Pinfo, and transformation information Tinfo) based on the input from outside and based on the RD (Rate Distortion) cost. Then, from among the encoding parameters, the control unit 101 supplies the parameters required in each block illustrated in FIG. 11 to that block.

From among the encoding parameters, the header information Hinfo represents information in which various initial values are defined that are required at the time of encoding the video signals. For example, the header information Hinfo contains information such as a video parameter set, a sequence parameter set, a picture parameter set, and a slice header. Moreover, the header information Hinfo contains information for defining the image size, the bit depth, the maximum CU size, and the minimum CU size. Meanwhile, the header information Hinfo can have arbitrary contents, and can contain some other information other than the example given above.

The prediction information Pinfo contains, for example, a split flag indicating the presence or absence of partitioning in the horizontal direction or the vertical direction in each partitioning hierarchy at the time of formation of the PUs (CUs). Moreover, the prediction information contains, for each PU, mode information pred_mode_flag indicating whether the prediction operation in that PU is the intra-prediction operation or the inter-prediction operation.

When the mode information pred_mode_flag indicates the inter-prediction operation, the prediction information Pinfo contains a merge flag, motion compensation mode information, parameter information, and reference image identification information that enables identification of the reference images.

The merge flag is information indicating whether the mode for the inter-prediction operation is a merge mode or an AMVP (Adaptive Motion Vector Prediction) mode. For example, the merge flag is set to "1" when indicating the merge mode and is set to "0" when indicating the AMVP mode.

The image encoding device 100a performs operations in either the merge mode or the AMVP mode. The merge mode is a mode in which the inter-prediction operation of the PU to be processed is performed based on the parameters (motion vector, rotation angle information, and scaling information; hereinafter, called adjacent parameters) used in motion compensation in the already-encoded PUs adjacent to the PU to be processed. The AMVP mode is a mode in which the inter-prediction operation of the PU to be processed is performed based on the parameters used in motion compensation of that PU.

The motion compensation mode is information indicating whether the state of the motion in the target partial area for prediction (i.e., the PU to be processed or the CU to be processed) represents the translation mode, or the translation-rotation mode, or the translation-scaling mode, or the affine transformation mode.

When the merge flag is set to "1", the parameter information enables identification of the parameters to be used in the inter-prediction operation as predicted parameters (predicted vector, predicted-rotation-angle information, predicted-scaling information) from among the candidates including adjacent parameters. When the merge flag is set to "0", the parameter information enables identification of the predicted parameters, and indicates the difference between the predicted parameters and the parameters of the PU to be processed.

The transformation information Tinfo contains information such as the size of the TU. Of course, the transformation information Tinfo can have arbitrary contents, and other information other than the size of the TU can be included in the transformation information Tinfo.

Given below is the explanation about the RD cost. The RD cost is a parameter calculated after performing the encoding, and represents the extent of encoding. For example, the RD cost is calculated from the encoding skew and the encoding cost calculated from the square error between the actually-observed image and the predicted image. Herein, lower the RD cost, the smaller is the difference between the actually-observed image and the predicted image. That is, a low RD cost indicates that the encoding is performed with efficiency. Based on the RD cost, the image encoding device 100a evaluates the extent of encoding, varies the encoding parameters according to the evaluation result, and adopts the encoding parameters having lower RD cost.

Returning to the explanation with reference to FIG. 11, the AD conversion unit 102 performs frame-by-frame AD conversion of the video signals that are input as input signals in the units of frames. Regarding the information, such as the quantization bit count and the sampling frequency, that is required at the time of performing AD conversion, predetermined values are used.

The arithmetic unit 110 functions as a difference operation unit and calculates the difference between a predicted image P, which is received from the selecting unit 120, and the target image for encoding that has been subjected to AD conversion in the AD conversion unit 102. Then, the arithmetic unit 110 sends the image obtained as the result of subtraction as a predictive residue image D to the orthogonal transformation unit 111.

The orthogonal transformation unit 111 performs orthogonal transformation such as discrete cosine transform or Karhunen-Loeve transform with respect to the predictive residue image D, which is received from the arithmetic unit 110, based on the transformation information Tinfo received from the control unit 101. Then, the orthogonal transformation unit 111 sends a transformation coefficient Coeff, which is obtained as the result of performing orthogonal transformation, to the quantization unit 112.

The quantization unit 112 performs scaling of the transformation coefficient Coeff, which is received from the orthogonal transformation unit 111, based on the transformation information Tinfo, which is received from the arithmetic unit 110; and calculates a quantized transform coefficient level "level". Then, the quantization unit 112 sends the quantized transform coefficient level "level" to the encoding unit 113 and the inverse quantization unit 114. The quantization unit 112 quantizes the transformation coefficient Coeff, which is obtained as a result of orthogonal transformation, by a quantization level count corresponding to the quantization parameter (QP). Generally, higher the value of the QP (the QP value), the higher becomes the compression ratio.

The encoding unit 113 encodes the quantized transform coefficient level "level", which is received from the quantization unit 112, according to a predetermined method. For example, in line with the definition of a syntax table, the encoding unit 113 converts the encoding parameters (the header information Hinfo, the prediction information Pinfo, and the transformation information Tinfo), which are received from the control unit 101, and the quantized transform coefficient level "level", which is received from the quantization unit 112, into syntax values of syntax elements. Then, the encoding unit 113 encodes each syntax value. As a specific encoding method, for example, CABAC (Context-based Adaptive Binary Arithmetic Coding) is used.

At that time, the encoding unit 113 changes the context of the probability model of the CABAC based on the motion compensation mode information of the adjacent PU; sets the probability model of the CABAC in such a way that the probability of the motion compensation mode information of the adjacent PU becomes higher; and encodes the motion compensation mode information of the concerned PU.

That is, it is highly likely that a particular PU has identical motion compensation mode information to the motion compensation mode information of the adjacent PU. Thus, the encoding unit 113 can set the probability model of the CABAC and encode the motion compensation mode information of the concerned PU in such a way that the probability of the motion compensation mode information of the adjacent PU becomes higher. As a result, the overhead can be reduced, and the encoding efficiency can be improved.

When a plurality of adjacent PUs is present, the encoding unit 113 can set the probability model of the CABAC based on the frequency of appearance of the motion compensation mode information of each adjacent PU. Moreover, based on the motion compensation mode information, instead of changing the context of the probability model of the CABAC, the encoding unit 113 can change the code (bit sequence) assigned to the motion compensation mode information.

For example, the encoding unit 113 multiplexes the encoding data representing the bit sequence of each syntax element obtained as the result of performing encoding, and outputs a bit stream as encoded video signals.

The inverse quantization unit 114 performs scaling (inverse quantization) of the value of the quantization conversion coefficient level "level", which is received from the quantization unit 112, based on the transformation information Tinfo received from the control unit 101; and calculates a post-inverse-quantization transformation coefficient Coeff_IQ. Then, the inverse quantization unit 114 sends the transformation coefficient Coeff_IQ to the inverse orthogonal transformation unit 115. Meanwhile, the inverse quantization performed by the inverse quantization unit 114 is the inverse operation of the quantization performed by the quantization unit 112.

The inverse orthogonal transformation unit 115 performs inverse orthogonal transformation with respect to the transformation coefficient Coeff_IQ, which is received from the inverse quantization unit 114, based on the transformation information Tinfo, which is received from the control unit 101; and calculates a predictive residue image D'. Then, the inverse orthogonal transformation unit 115 sends the predictive residue image D' to the arithmetic unit 116. Meanwhile, the inverse orthogonal transformation performed by the inverse orthogonal transformation unit 115 is the inverse operation of the orthogonal transformation performed by the orthogonal transformation unit 111.

The arithmetic unit 116 adds the predictive residue image D', which is received from the inverse orthogonal transformation unit 115, and the predicted image P, which is received from the inter-prediction unit 122 and which corresponds to the predictive residue image D'; and calculates a local decoded image Rec. Then, the arithmetic unit 116 sends the local decoded image Rec to the frame memory 117.

The frame memory 117 rebuilds the decoded image for each picture unit using the local decoded image Rec received from the arithmetic unit 116, and stores the rebuilt decoded image. Moreover, the frame memory 117 reads, as the reference image, the decoded image specified by the inter-prediction unit 122, and sends that decoded image to the inter-prediction unit 122 and the motion predicting unit 123. Furthermore, the frame memory 117 can store, in an internal buffer, the head information Hinfo, the prediction information Pinfo, the transformation information Tinfo related to the generation of decoded images.

When the mode information pred_mode_flag of the prediction information Pinfo indicates the intra-prediction operation; the intra-prediction unit 121 obtains, as the reference image, the decoded image that is stored in the frame memory 117 and that has the exact same timing as the target CU for encoding. Then, the intra-prediction unit 121 uses the reference image and performs the intra-prediction operation with respect to the target PU for encoding.

When the mode information pred_mode_flag indicates the inter-prediction operation, the inter-prediction unit 122 obtains, as the reference image, a decoded image that is stored in the frame memory 117 and that has a different timing than the target CU for encoding. Moreover, the inter-prediction unit 122 detects the motion vector in the target CU for encoding; predicts the state of the motion of that CU; and generates motion compensation mode information in that CU. Then, the inter-prediction unit 122 performs the inter-prediction operation of the target PU for encoding by performing motion compensation with respect to the reference image based on the merge flag, the motion compensation mode information, and the parameter information. That is, the inter-prediction unit 122 has a plurality of motion compensation modes for compensating the state of the motion occurring with time in the CU (partial area) which represents some part of an image; and detects the state of the motion occurring in the CU and generates the predicted image P by compensating the detected state of the motion. Meanwhile, as a plurality of motion compensation modes, the image encoding device 100a has the translation mode, the translation-rotation mode, the translation-scaling mode, and the affine transformation mode mentioned above.

The selecting unit 120 sends the predicted image P, which is generated as a result of performing the intra-prediction operation and the inter-prediction operation, to the arithmetic unit 110 and the arithmetic unit 116.

Explained below with reference to FIG. 12 is an internal configuration of the inter-prediction unit 122. As illustrated in FIG. 12, the inter-prediction unit 122 includes a motion detecting unit 122a, a condition determining unit 122b, and a motion compensation execution control unit 122c.

The motion detecting unit 122a represents an example of a motion compensating unit according to the application concerned. The motion detecting unit 122a has a plurality of motion compensation modes for compensating the state of the motion occurring with time in a partial area (for example, a PU) that represents some part of an image. Thus, the motion detecting unit 122a detects the state of the motion occurring in the partial area, compensates the detected state of the motion, and generates the predicted image P.

The condition determining unit 122b determines, based on the directions and the lengths of the motion vectors at a maximum of three apices of the rectangular partial area detected by the motion detecting unit 122a (the motion compensating unit) and based on the width and the height of the partial area, whether the state of the motion of the partial area satisfies a predetermined condition, that is, whether the state of the motion of the partial area involves translation and rotation, or involves translation and enlargement-reduction, or involves translation, rotation, enlargement-reduction, and skew deformation.

The motion compensation execution control unit 122c represents an example of an execution control unit according to the application concerned. When the state of the motion detected by the motion detecting unit 122a (the motion compensating unit) satisfies a predetermined condition, the motion compensation execution control unit 122c makes the motion detecting unit 122a skip the motion compensation mode corresponding to that predetermined condition.

More particularly, when the predetermined condition indicates that the state of the motion of the partial area as detected by the motion detecting unit 122a involves translation and rotation, and when that predetermined condition is satisfied; the motion compensation execution control unit 122c makes the motion detecting unit 122a skip the translation-scaling mode, which is meant for compensating the motion involving translation and enlargement-reduction, and skip the affine transformation mode, which is meant for compensating the motion involving translation, rotation, enlargement-reduction, and skew deformation.

When the predetermined condition indicates that the state of the motion of the partial area as detected by the motion detecting unit 122a involves translation and enlargement-reduction, and when the condition determining unit 122b determines that the predetermined condition is satisfied; the motion compensation execution control unit 122c makes the motion detecting unit 122a skip the translation-rotation mode, which is meant for compensating the motion involving translation and rotation, and skip the affine transformation mode, which is meant for compensating the motion involving translation, rotation, enlargement-reduction, and skew deformation.

When the predetermined condition indicates that the state of the motion of the partial area as detected by the motion detecting unit 122a accompanies translation, rotation, enlargement-reduction, and skew deformation, and when the condition determining unit 122b determines that the predetermined condition is satisfied; the motion compensation execution control unit 122c makes the motion detecting unit 122a skip the translation-scaling mode, which is meant for compensating the motion involving translation and enlargement-reduction, and skip the translation-rotation mode, which is meant for compensating the motion involving translation and rotation.

<Explanation of inter-prediction operation in merge mode>

Regarding the details of the operations performed in the merge mode, the specific explanation is given below with reference to the drawings. FIG. 13 is a diagram for explaining about the merge mode. When the image encoding device 100a is operating in the merge mode, the motion detecting unit 122a decides on a predicted vector $pv_0$ at the top left apex A of the PU 11, which represents the target for prediction in FIG. 13, based on the already-encoded motion vectors present in the neighboring regions of the apex A. That is, with reference to FIG. 13, based on the motion vector in a neighboring region "a" at the upper left side of the apex A, based on the motion vector in a neighboring region "b" at the upper right side of the apex A, and based on the motion vector in a neighboring region "c" at the lower left side of the apex A; the predicted vector $pv_0$ to be predicted at the apex A is decided.

Similarly, the motion detecting unit 122a decides on a predicted vector $pv_1$ at the top right apex B of the PU 11 based on the already-encoded motion vectors present in the neighboring regions of the apex B. That is, with reference to FIG. 13, based on the motion vector in a neighboring region "d" at the upper left side of the apex B and based on the motion vector in a neighboring region "e" at the upper right side of the apex B; the predicted vector $pv_1$ to be predicted at the apex B is decided. Moreover, the motion detecting unit 122a decides on a predicted vector $pv_2$ at the bottom left apex C of the PU 11 based on the motion vectors in neighboring regions "f" and "g" of the apex C. Meanwhile, it is assumed that the motion vectors detected in the neighboring regions "a" to "g" are stored in the motion detecting unit 122a.

As described above, regarding the candidates for the predicted vector $pv_0$ at the apex A, the predicted vector $pv_1$ at the apex B, and the predicted vector $pv_2$ at the apex C; a total of 12 ($=3 \times 2 \times 2$) candidate combinations are available. From among the 12 candidate combinations, the motion predicting unit 123 decides, as the motion vectors at the apices A, B, and C, the combination having the lowest cost DV as obtained according to Equation (1) given below.

$$DV = \left| \left(v_{1x}' - v_{0x}'\right)h - \left(v_{2y}' - v_{0y}'\right)w \right| + \left| \left(v_{1y}' - v_{0y}'\right)h - \left(v_{2x}' - v_{0x}'\right)w \right| \qquad (1)$$

In Equation (1), $v_{0x}'$ and $v_{0y}'$ represent the x-direction component and the y-direction component, respectively, of the motion vector in one of the neighboring regions "a" to "c" that is used in deciding the predicted vector $pv_0$. In an identical manner, in Equation (1), $v_{1x}'$ and $v_{1y}'$ represent the x-direction component and the y-direction component, respectively, of the motion vector in one of the neighboring regions "d" and "e" that is used in deciding the predicted vector $pv_1$. Moreover, in Equation (1), $v_{2x}'$ and $v_{2y}'$ represent the x-direction component and the y-direction component, respectively, of the motion vector in one of the neighboring regions "f" and "g" that is used in deciding the predicted vector $pv_2$.

When the image encoding device 100a performs inter-prediction in the merge mode, the motion detecting unit 122a uses the result of motion compensation in a plurality of motion-compensated neighboring areas of the concerned partial area, compensates the state of the motion in the partial area, and generates the abovementioned predicted image.

Then, the motion compensation execution control unit 122c detects the state of the motion in the partial area based on: the frequency of occurrence of the motion compensation modes used in motion compensation of a plurality of neighboring areas; and the costs (RD costs) indicating the extent of prediction according to the predicted images P that are generated when motion compensation is performed by applying, to the partial area, the motion compensation modes used in motion compensation of the neighboring areas.

Meanwhile, when the image encoding device 100a performs inter-prediction in the merge mode, the motion detecting unit 122a calculates the RD costs in order of the frequency of occurrence of the motion compensation modes in a plurality of neighboring areas.

Subsequently, when the image encoding device 100a performs inter-prediction in the merge mode, if the predetermined condition indicates that the state of the motion of the partial area involves translation and rotation and if that predetermined condition is satisfied; the motion compensation execution control unit 122c makes the motion detecting unit 122a skip the translation-scaling mode, which is meant for compensating the motion involving translation and enlargement-reduction, and skip the affine transformation mode, which is meant for compensating the motion involving translation, rotation, enlargement-reduction, and skew deformation.

Moreover, when the image encoding device 100a performs inter-prediction in the merge mode, if the predetermined condition indicates that the state of the motion of the partial area involves translation and enlargement-reduction and if that predetermined condition is satisfied, the motion compensation execution control unit 122c makes the motion detecting unit 122a skip the translation-rotation mode, which is meant for compensating the motion involving translation and rotation, and skip the affine transformation mode, which is meant for compensating the motion involving translation, rotation, enlargement-reduction, and skew deformation.

Furthermore, when the image encoding device 100a performs inter-prediction in the merge mode, if the predetermined condition indicates that the state of the motion of the partial area involves translation, rotation, enlargement-reduction, and skew deformation and if that predetermined condition is satisfied; the motion compensation execution control unit 122c makes the motion detecting unit 122a skip the translation-scaling mode, which is meant for compensating the motion involving translation and enlargement-reduction, and skip the translation-rotation mode, which is meant for compensating the motion involving translation and rotation.

<Explanation of motion compensation mode information and parameter information>

Given below is the specific explanation about the motion compensation mode information and the parameter information.

The motion compensation mode information is configured using, for example, affine_flag, affine3parameter_flag, and rotate_scale_idx. The affine_flag (affine transformation information) is information indicating whether the motion compensation mode is the affine transformation mode, or the translation-scaling mode, or the translation-rotation mode, except the translation mode. For example, the affine_flag is set to "1" when the motion compensation mode is set to the affine transformation mode, or the translation-scaling mode, or the translation-rotation mode. On the other hand, the affine_flag is set to "0" when the motion compensation mode is none of the affine transformation mode, the translation-scaling mode, and the translation-rotation mode, that is, when the motion compensation mode is the translation mode.

The affine3parameter_flag (translation expansion information) is information indicating whether the motion compensation mode is the translation-scaling mode or the translation-rotation mode; and is set when the affine_flag is set to "1". The affine3parameter_flag is set to "1" when the motion compensation mode is set to the translation-scaling mode or the translation-rotation mode. On the other hand, the affine3parameter_flag is set to "0" when the motion compensation mode is neither set to the translation-rotation mode nor set to the translation-scaling mode, that is, when the motion compensation mode is set to the affine transformation mode.

The rotate_scale_idx (translation rotation information) is information indicating whether the motion compensation mode is the translation-rotation mode; and is set when the affine3parameter_flag is set to "1". The rotate_scale_idx is set to "1" when the motion compensation mode is set to the translation-rotation mode. On the other hand, the rotate_scale_idx is set to "0" when the motion compensation mode is not set to the translation-rotation mode, that is, when the motion compensation mode is set to the translation-scaling mode.

Thus, when the motion compensation mode is set to the translation mode, the motion compensation mode information is configured using the affine_flag that is set to "0". Alternatively, when the motion compensation mode is set to the affine transformation mode, the motion compensation mode information is configured using the affine_flag that is set to "1" and the affine3parameter_flag that is set to "0".

Still alternatively, when the motion compensation mode is set to the translation-scaling mode or the translation-rotation mode, the motion compensation mode information is configured using the affine_flag, the affine3parameter_flag, and the rotate_scale_idx. When the motion compensation mode is set to the translation-scaling mode, the affine_flag and the affine3parameter_flag are set to "1", and the rotate_scale_idx is set to "0". When the motion compensation mode is set to the translation-rotation mode, the affine_flag, the affine3parameter_flag, and the rotate_scale_idx are set to "1".

Meanwhile, when the mode information pred_mode_flag indicates the intra-prediction operation, the prediction information Pinfo contains intra-prediction mode information indicating the intra-prediction mode. Of course, the prediction information Pinfo can have arbitrary contents, and other information other than the abovementioned example can be included in the prediction information Pinfo.

When the mode of the inter-prediction operation is set to the AMVP mode; if the motion compensation mode is set to the translation mode, then the information enabling identification of the motion vector $v_0$ of the PU to be processed, that is, the information enabling identification of the predicted vector $pv_0$ corresponding to the motion vector $v_0$ of the apex A of the concerned PU is set as "refidx0" in the parameter information; and the difference between the single motion vector $v_0$ and the predicted vector $pv_0$ is set as "mvd0" in the parameter information.

When the motion compensation mode is set to the translation-rotation mode; in an identical manner to the case of the translation mode, "redfidx0" and "mvd0" in the parameter information are set. Moreover, the information enabling identification of predicted-angle information corresponding to angle information of the PU 11 to be processed is set as "refidx1" in the parameter information; and the difference between the angle information and the predicted-angle information is set as "dr" in the parameter information.

Thus, when the angle information represents the rotation angle $\theta$, "dr" is set as a difference "d$\theta$" between the rotation angle $\theta$ of the PU 11 to be processed and a rotation angle $\theta'$ representing predicted-angle information. Meanwhile, when angle information represents a difference "dvy", "dr" is set as a difference "mvd1.y" between the difference "dvy" of the PU 11 to be processed and the difference "dvy" representing the predicted-angle information.

When the motion compensation mode is set to the translation-scaling mode; in an identical manner to the case of the translation mode, "refidx0" and "mvd0" in the parameter information are set. Moreover, the information enabling identification of the predicted-scaling information corresponding to the scaling information of the PU 11 to be processed is set as "refidx1" in the parameter information; and the difference between the scaling information and the predicted-scaling information is set as "ds" in the parameter information.

Thus, when the scaling information represents the scaling factor "s", "ds" represents the difference "ds" between the scaling factor "s" of the PU 11 to be processed and the scaling factor "s" representing the predicted-scaling information. On the other hand, when the scaling information represents a difference "dvx", "ds" represents a difference "mvd1.x" between the difference "dvx" of the PU 11 to be processed and the difference "dvx" representing the predicted-scaling information.

When the motion compensation mode is set to the translation-rotation mode or the translation-scaling mode; in an identical manner to the case of the translation mode, "refidx0" and "mvd0" in the parameter information are set. Moreover, the information enabling identification of the predicted vector $pv_1$ corresponding to the motion vector $v_1$ of the PU to be processed, that is, corresponding to the motion vector $v_1$ of the apex B of the PU 11 is set as "refidx1" in the parameter information; and the difference between the motion vector $v_1$ and the predicted vector $pv_1$ is set as "mvd1" in the parameter information.

When the motion compensation mode is the affine transformation mode; in an identical manner to the translation-rotation mode or the translation-scaling mode, "refidx0" and "mvd0" as well as "refidx1" and "mvd1" in the parameter information are set. Moreover, the information enabling identification of the predicted vector $pv_2$ corresponding to the other motion vector $v_2$ of the PU 11 to be processed, that is, corresponding to the motion vector $v_2$ of the apex C of the PU 11 to be processed is set as "refidx2" of the parameter information; and the difference between the motion vector $v_2$ and the predicted vector $pv_2$ is set as "mvd2" of the parameter information.

When the mode of the inter-prediction operation is set to the merge mode; "mvd0", "mvd1", "mvd2", "ds", "dr", "refidx0", "refidx1", and "refidx2" are not set.

(Explanation of flow of operations performed in image encoding device)

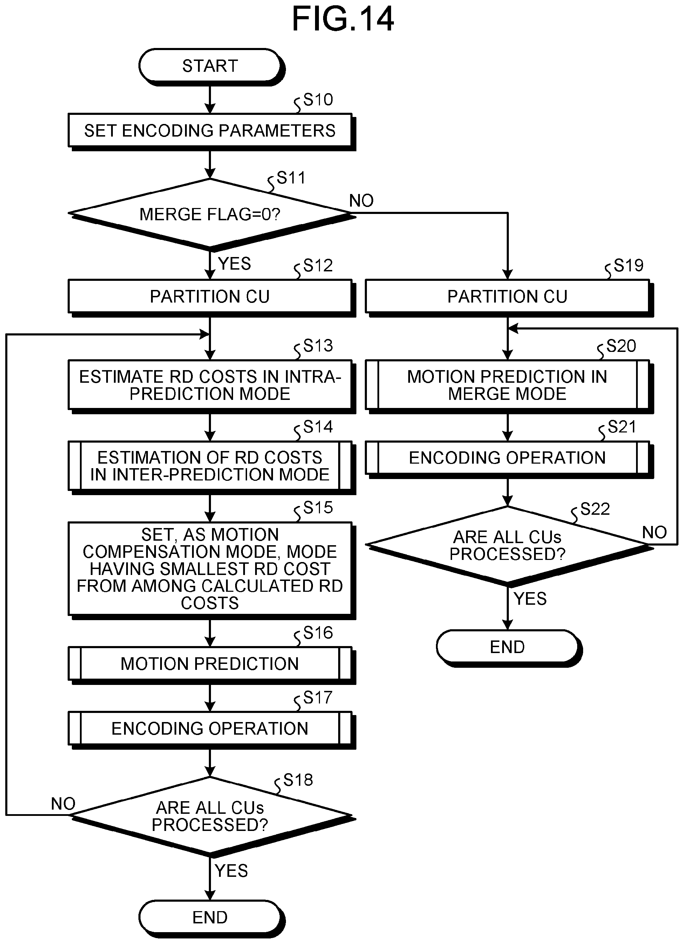

Explained below with reference to FIGS. 14 to 17 and FIG. 19 is the flow of operations performed in the image encoding device 100a.

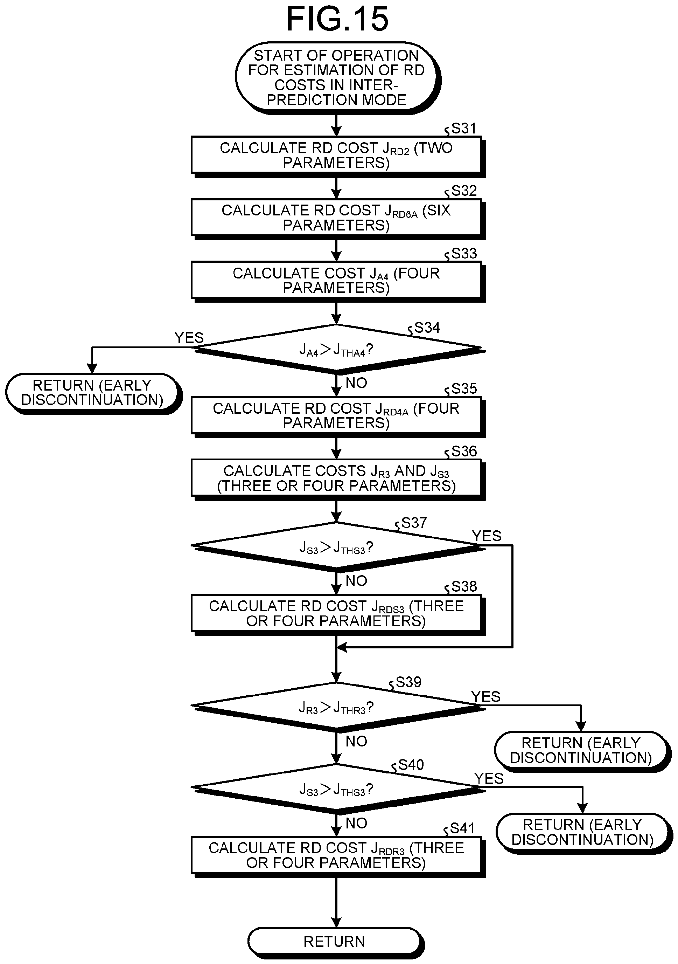

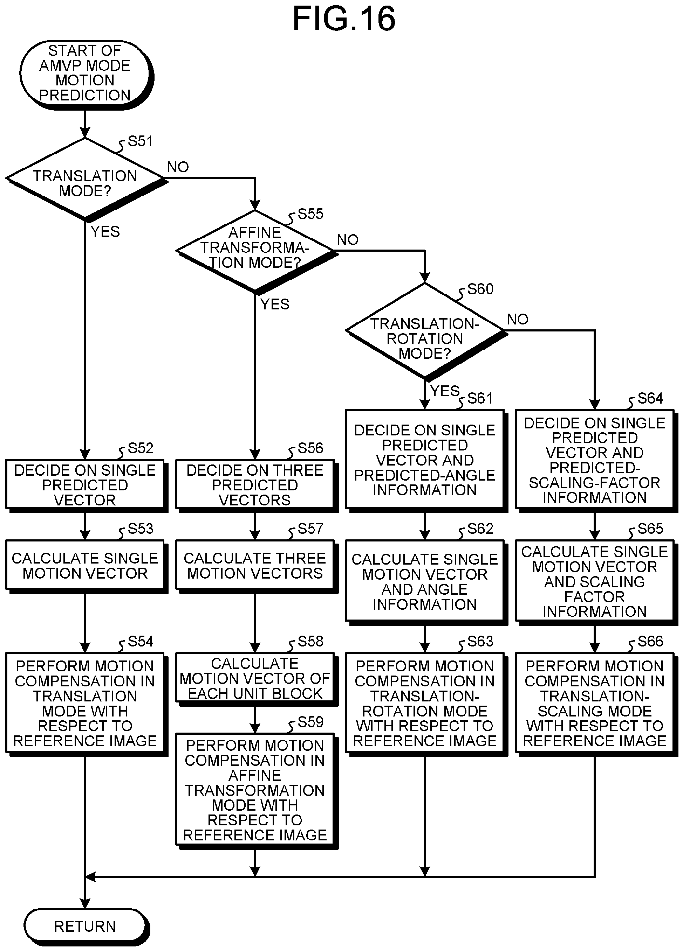

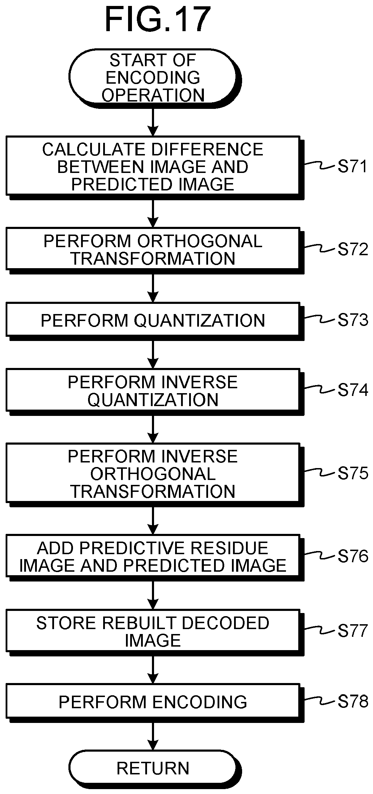

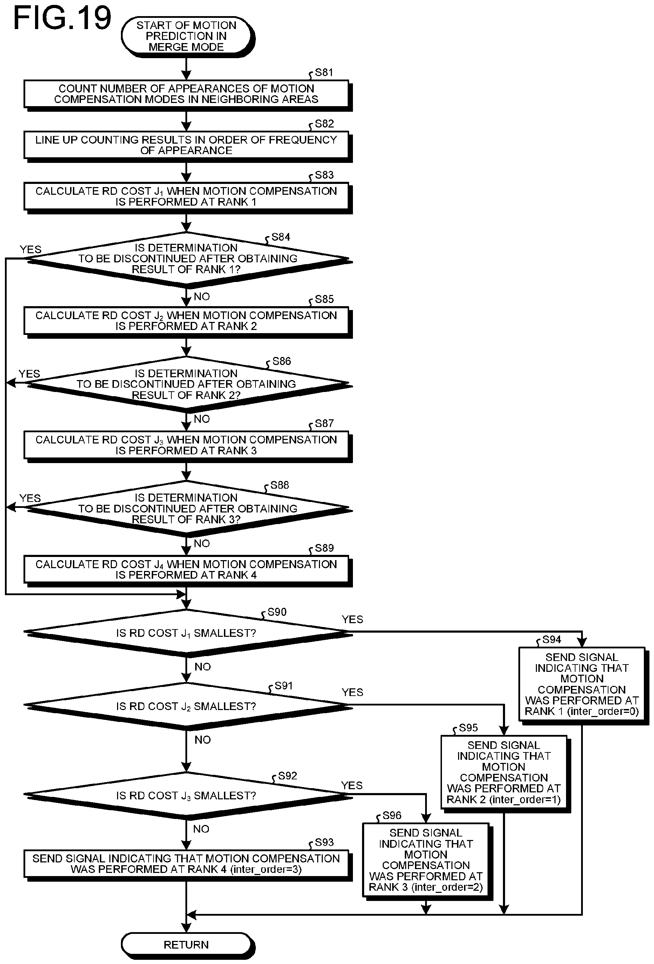

FIG. 14 is a flowchart illustrating an exemplary flow of operations performed in the image encoding device 100a. FIGS. 15 to 17 and FIG. 19 are flowcharts for explaining the detailed flow of the major operations illustrated in FIG. 14. More particularly, FIG. 15 is a flowchart for explaining an exemplary flow of operations by which the image encoding device 100a estimates RD costs in the inter-prediction mode. FIG. 16 is a flowchart for explaining an exemplary flow of a motion prediction operation performed in the AMVP mode by the image encoding device 100a. FIG. 17 is a flowchart for explaining an exemplary flow of an encoding operation performed by the image encoding device 100a. FIG. 19 is a flowchart for explaining an exemplary flow of a motion prediction operation performed by the image encoding device 100a.

At Step S10 illustrated in FIG. 14, the control unit 101 sets the encoding parameters (the header information Hinfo, the prediction information Pinfo, and the conversion information Tinfo).

Then, at Step S11, the condition determining unit 122b determines whether the merge flag is set to "0". At Step S11, if it is determined that the merge flag is set to "1" (Yes at Step S11), then the system control proceeds to Step S12. On the other hand, at Step S11, if it is not determined that the merge flag is set to "1" (No at Step S11), then the system control proceeds to Step S19.

When the determination indicates Yes at Step S11; at Step S12, the motion detecting unit 122a reads the reference images stored in the frame memory 117, and partitions the CUs for the purpose of motion prediction. More particularly, the motion detecting unit 122a partitions the reference images in areas likely to serve as units of occurrence of the motion. At that time, the CUs are partitioned according to the method explained with reference to FIG. 6. Meanwhile, the area partitioning that serves as the units of occurrence of the motion is performed using a known image processing method such as merging pixels having similar pixel values into a single area.

Subsequently, at Step S13, the intra-prediction unit 121 estimates the RD costs in the intra-prediction mode.

Then, at Step S14, the motion compensation execution control unit 123c estimates the RD costs in the inter-prediction mode. Regarding the detailed flow of operations performed at Step S14, the explanation is given later (see FIG. 15).

Subsequently, at Step S15, the condition determining unit 122b decides, as the motion compensation mode, the mode having the smallest RD cost from among the calculated RD costs. Although not illustrated in FIG. 14, the operation performed at Step S15 is performed when the estimation of the RD costs performed at Step S14 does not end promptly. At Step S14, if the estimation of the RD costs performed at Step S14 ends promptly, then the condition determining unit 122b determines to apply, in motion compensation, the motion compensation mode corresponding to the state that ended promptly. The detailed explanation is given later with reference to FIG. 15.

Subsequently, at Step S16, the inter-prediction unit 122 performs motion prediction according to the motion compensation mode decided at Step S15 or (the motion compensation mode decided at Step S14). Regarding the detailed flow of operations performed at Step S16, the explanation is given later (see FIG. 16). Herein, although not explained in FIG. 14, at Step S15, if an RD cost in the intra-prediction mode is the lowest, the intra-prediction operation is performed instead of performing the operation at Step S16.

Then, at Step S17, the orthogonal transformation unit 111, the quantization unit 112, and the encoding unit 113 perform the encoding operation in cooperation. Regarding the detailed flow of operations performed at Step S17, the explanation is given later (see FIG. 17).

Subsequently, at Step S18, the condition determining unit 122b determines whether or not the encoding operation has been performed with respect to all CUs in the target image for encoding. At Step S18, if it is determined that the encoding operation has been performed with respect to all CUs in the image (Yes at Step S18), then the image encoding device 100a ends the operations illustrated in FIG. 14. On the other hand, at Step S18, if it is not determined that the encoding operation has been performed with respect to all CUs in the image (No at Step S18), then the system control returns to Step S13 and the operations from Step S13 to Step S18 are performed with respect to the next PU.

Meanwhile, when the determination indicates No at Step S11; at Step S19, the motion detecting unit 122a reads the reference images and partitions the CUs. The operations performed herein are same as the operations explained at Step S12.

At Step S20, the motion detecting unit 122a performs motion prediction in the merge mode. Regarding the detailed flow of operations performed at Step S20, the explanation is given later (see FIG. 19).

At Step S21, the orthogonal transformation unit 111, the quantization unit 112, and the encoding unit 113 perform the encoding operation in cooperation. Regarding the detailed flow of operations performed at Step S21, the explanation is given later (see FIG. 17).

Subsequently, at Step S22, the condition determining unit 122b determines whether or not the encoding operation has been performed with respect to all CUs in the target image for encoding. At Step S22, if it is determined that the encoding operation has been performed with respect to all CUs in the image (Yes at Step S22), then the image encoding device 100a ends the operations illustrated in FIG. 14. On the other hand, at Step S22, if it is not determined that the encoding operation has been performed with respect to all CUs in the image (No at Step S22), then the system control returns to Step S20 and the operations from Step S20 to Step S22 are performed with respect to the next PU.

(Explanation of flow of RD cost estimation operation in inter-prediction mode)

Explained below with reference to FIG. 15 is a flow of an RD cost estimation operation performed in the inter-prediction mode by the image encoding device 100a.

At Step S31 illustrated in FIG. 15, the motion compensation execution control unit 122c assumes that translation has occurred in the target CU and calculates an RD cost $J_{RD2}$ when encoding is performed based on the normal inter-prediction, that is, calculates the RD cost when motion compensation estimated using two parameters is performed.

Then, at Step S32, the motion compensation execution control unit 122c calculates an RD cost $J_{RD6A}$ when encoding is performed under the assumption that the motion specified in the affine transformation mode has occurred in the target CU, that is, calculates the RD cost when motion compensation estimated using six parameters is performed.

Moreover, at Step S33, the motion compensation execution control unit 122c calculates an evaluation cost $J_{A4}$ when motion compensation with respect to the target CU is performed in the affine transformation mode. The evaluation cost $J_{A4}$ is calculated using, for example, Equation (2) given below. The evaluation cost $J_{A4}$ represents the extent of skew deformation of the target CU. That is, greater the evaluation cost $J_{A4}$, the higher is the possibility that the target CU has undergone skew deformation.

$$J_{A4} = \left| h(v_{1x} - v_{0x}) - w(v_{2y} - v_{0y}) \right| + \left| h(v_{1y} - v_{0y}) - w(v_{2x} - v_{0x}) \right| \qquad (2)$$

Then, at Step S34, the condition determining unit 122b determines whether the evaluation cost $J_{A4}$, which is calculated at Step S33, is greater than a predetermined threshold value $J_{THA4}$. At Step S34, if $J_{A4} > J_{THA4}$ holds true (Yes at Step S34), then the system control returns to the main routine (i.e., the flowchart illustrated in FIG. 14). When $J_{A4} > J_{THA4}$ is determined to hold true at Step S34, it is determined that there is a high possibility of skew deformation of the target CU. Then, the motion compensation execution control unit 122c determines to apply motion compensation according to the affine transformation mode (i.e., motion compensation using six parameters) with respect to the target CU. Subsequently, the operations illustrated in FIG. 15 are promptly discontinued and the system control returns to the main routine illustrated in FIG. 14, thereby enabling speeding up of the operations. That is, in this case, the setting is such that motion compensation according to the translation mode, the translation-rotation mode, and the translation-scaling mode is skipped.

Meanwhile, although not illustrated in FIG. 15, when the determination indicates Yes at Step S34, a flag is set to indicate that the RD cost estimation operation has been discontinued early, and information is added that indicates application of motion compensation according to the affine transformation mode. Then, the system control returns to the main routine illustrated in FIG. 14. Subsequently, at Step S15 illustrated in FIG. 14, when the flag indicating that the RD cost estimation operation has been discontinued early is set and when information indicating application of motion compensation according to the affine transformation mode is added, motion compensation at Step S16 is performed according to the affine transformation mode.

Meanwhile, at Step S34, if $J_{A4} > J_{THA4}$ does not hold true (No at Step S34), then the system control proceeds to Step S35.

At Step S35, the motion compensation execution control unit 122c calculates the RD cost $J_{RD4A}$ when encoding is performed under the assumption that the motion specified in the translation-rotation mode or the translation-scaling mode has occurred in the target CU, that is, calculates the RD cost when motion compensation estimated using four (three) parameters is performed.

Then, at Step S36, the motion compensation execution control unit 122c calculates an evaluation cost $J_{R3}$ when motion compensation with respect to the target CU is performed in the translation-rotation mode and calculates an evaluation cost $J_{S3}$ when motion compensation with respect to the target CU is performed in the translation-scaling mode.

The evaluation cost $J_{R3}$ is calculated using, for example, Equation (3) given below. The evaluation cost $J_{R3}$ represents the extent of translation-rotation of the target CU. That is, greater the evaluation cost $J_{R3}$, the higher is the possibility that the target CU has undergone translation-rotation.

$$J_{S3} = \left| h(v_{1x} - v_{0x}) - w(v_{2y} - v_{0y}) \right| + \left| \frac{h}{w}(v_{1y} - v_{0y}) \right| + \left| \frac{w}{h}(v_{2x} - v_{0x}) \right| \qquad (3)$$

The evaluation cost $J_{S3}$ is calculated using, for example, Equation (4) given below. The evaluation cost $J_{S3}$ represents the extent of translation-scaling of the target CU. That is, greater the evaluation cost $J_{S3}$, the higher is the possibility that the target CU has undergone translation-scaling.

$$J_{R3} = \left| h(v_{1x} - v_{0x}) - w(v_{2y} - v_{0y}) \right| + \left| h(v_{1y} - v_{0y}) \right| + \left| (v_{1x} - v_{0x}) + \frac{(v_{2y} - v_{0y})^2}{2w} \right| \qquad (4)$$

Subsequently, at Step S37, the condition determining unit 122b determines whether the evaluation cost $J_{S3}$ calculated at Step S36 is greater than a predetermined threshold value $J_{THS3}$. At Step S37, if $J_{S3} > J_{THS3}$ holds true (Yes at Step S37), then the system control proceeds to Step S39. When $J_{S3} > J_{THS3}$ is determined to hold true at Step S37, it is determined that there is a high possibility of translation-scaling of the target CU.

On the other hand, if $J_{S3} > J_{THS3}$ does hold true (No at Step S37), then the system control proceeds to Step S38.

At Step S38, the motion compensation execution control unit 122c calculates an RD cost $J_{RDS3}$ when encoding is performed under the assumption that the motion specified in the translation-scaling mode has occurred in the target CU, that is, calculates the RD cost when motion compensation estimated using four (three) parameters is performed.

Then, at Step S39, the condition determining unit 122b determines whether the evaluation cost $J_{R3}$ calculated at Step S36 is greater than a predetermined threshold value $J_{THR3}$. At Step S39, if $J_{R3} > J_{THR3}$ holds true (Yes at Step S39), then the system control returns to the main routine (see FIG. 14). When $J_{R3} > J_{THR3}$ is determined to hold true at Step S39, it is determined that there is a high possibility of translation-rotation of the target CU. Then, the motion compensation execution control unit 122c determines to apply motion compensation according to the translation-rotation mode (i.e., motion compensation using four (three) parameters) with respect to the target CU. Subsequently, the operations illustrated in FIG. 15 are promptly discontinued and the system control returns to the main routine illustrated in FIG. 14, thereby enabling speeding up of the operations. That is, in this case, the setting is such that motion compensation according to the translation mode, the translation-scaling mode, and the affine transformation mode is skipped.

Meanwhile, although not illustrated in FIG. 15, when the determination indicates Yes at Step S39, a flag is set to indicate that the RD cost estimation operation has been discontinued early, and information is added that indicates application of motion compensation according to the translation-rotation mode. Then, the system control returns to the main routine illustrated in FIG. 14. Subsequently, at Step S15 illustrated in FIG. 14, when the flag indicating that the RD cost estimation operation has been discontinued early is set and when information indicating application of motion compensation according to the translation-rotation mode is added, motion compensation at Step S16 is performed according to the translation-rotation mode.

Meanwhile, at Step S37, if it is determined that $J_{S3} > J_{THS3}$ holds true; then, as described above, there is a high possibility that the target CU is performing translation-scaling. Thus, at the point of time when the determination indicates Yes at Step S37, the system control can return to the main routine. However, there remains a possibility that the target CU is performing translation-rotation. Hence, in the flowchart illustrated in FIG. 15, even if the determination indicates Yes at Step S37, the operation at Step S39 is performed. However, in this case, the operation at Step S38 is skipped so as to speed up the operations.

Meanwhile, at Step S39, if $J_{R3} > J_{THR3}$ does not hold true (No at Step S39), then the system control proceeds to Step S40.

At Step S40, the condition determining unit 123b again determines whether the evaluation cost $J_{S3}$ calculated at Step S36 is greater than the predetermined threshold value $J_{THS3}$. Although this operation is same as the determination operation performed at Step S37, it is performed again in order to promptly discontinue the determination of the motion compensation mode when $J_{S3} > J_{THS3}$ as well as $J_{R3} \leq J_{THR3}$ holds true.

At Step S40, if $J_{S3} > J_{THS3}$ holds true (Yes at Step S40), then the system control returns to the main routine (see FIG. 14). When $J_{S3} > J_{THS3}$ is determined to hold true at Step S40, it is determined that there is a high possibility of translation-scaling of the target CU. Then, the motion compensation execution control unit 123c determines to apply motion compensation according to the translation-scaling mode (i.e., motion compensation using four (three) parameters) with respect to the target CU. Subsequently, the operations illustrated in FIG. 15 are promptly discontinued and the system control returns to the main routine illustrated in FIG. 14, thereby enabling speeding up of the operations. That is, in this case, the setting is such that motion compensation according to the translation mode, the translation-rotation mode, and the affine transformation mode is skipped.

Meanwhile, although not illustrated in FIG. 15, when the determination indicates Yes at Step S40, a flag is set to indicate that the RD cost estimation operation has been discontinued early, and information is added that indicates application of motion compensation according to the translation-scaling mode. Then, the system control returns to the main routine illustrated in FIG. 14. Subsequently, at Step S15 illustrated in FIG. 14, when the flag indicating that the RD cost estimation operation has been discontinued early is set and when information indicating application of motion compensation according to the translation-scaling mode is added, motion compensation at Step S16 is performed according to the translation-scaling mode.

Meanwhile, at Step S40, if $J_{S3} > J_{THS3}$ does not hold true (No at Step S40), then the system control proceeds to Step S41. At Step S41, the motion compensation execution control unit 122c calculates an RD cost $J_{RDR3}$ when encoding is performed under the assumption that the motion specified in the translation-rotation mode has occurred in the target CU, that is, calculates the RD cost when motion compensation estimated using four (three) parameters is performed. Subsequently, the system control returns to the main routine (see FIG. 14).

(Explanation of flow of motion prediction operation in AMVP mode)

Explained below with reference to FIG. 16 is the flow of a motion prediction operation performed in the AMVP mode by the image encoding device 100a. The motion prediction operation is performed in the units of CUs. In FIG. 16 is explained the detailed flow of operations performed at Step S16 illustrated in FIG. 14.

In the initial stage of the operations illustrated in FIG. 16 (i.e., at Steps S51, S55, and S60), the motion compensation mode that is set is identified. The motion compensation mode can be identified by referring to the motion compensation mode information (affine_flag, affine3parameter_flag, and rotate_scale_idx). In the following explanation, for the sake of simplicity, it is assumed that the determination is performed to determine whether or not a specific motion compensation mode is set. The actual determination is performed by referring to the state of the flags and the index mentioned above.

Firstly, at Step S51, the condition determining unit 122b determines whether the motion compensation mode is set to the translation mode. If it is determined that the motion compensation mode is set to the translation mode (Yes at Step S51), then the system control proceeds to Step S52. On the other hand, if it is not determined that the motion compensation mode is set to the translation mode (No at Step S51), then the system control proceeds to Step S55.

When the determination indicates Yes at Step S51; at Step S52, the motion detecting unit 122a decides on the predicted vector $pv_0$. More particularly, if the parameter information enables identification of an adjacent vector as the predicted vector; then, based on the motion vectors of the neighboring regions "a" to "g" (see FIG. 13), the motion detecting unit 122a sets, as the predicted vector $pv_0$, the adjacent vector generated from the motion vector of the neighboring region having the lowest cost DV from among the neighboring regions "a" to "c".

Then, at Step S53, the motion detecting unit 122a adds the single predicted vector $pv_0$, which is decided at Step S52, to a difference $dv_0$ between the predicted vector $pv_0$ specified in the parameter information and the motion vector $v_0$ of the PU to be processed; and calculates the motion vector $v_0$ of the PU to be processed.

Subsequently, at Step S54, using the motion vector $v_0$ calculated at Step S53, the inter-prediction unit 122 performs motion compensation in the translation mode with respect to the reference image identified according to the reference image identification information stored in the frame memory 117. Then, the motion detecting unit 122a sends the motion-compensated reference image as the predicted image P to the arithmetic unit 110 or the arithmetic unit 116. Subsequently, the system control returns to the main routine (see FIG. 14).

At Step S51, if it is not determined that the motion compensation mode is set to the translation mode (No at Step S51); then, at Step S55, the condition determining unit 122b determines whether the motion compensation mode is set to the affine transformation mode. If it is determined that the motion compensation mode is set to the affine transformation mode (Yes at Step S55), then the system control proceeds to Step S56. On the other hand, if it is not determined that the motion compensation mode is set to the affine transformation mode (No at Step S51), then the system control proceeds to Step S60.

When the determination indicates Yes at Step S55; at Step S56, the motion detecting unit 122a decides on three predicted vectors $pv_0$, $pv_1$, and $pv_2$ based on the parameter information.

Then, at Step S57, the motion detecting unit 122a adds each of the three predicted vectors $pv_0$, $pv_1$, and $pv_2$, which are decided at Step S46, to the difference specified in the parameter information corresponding to the concerned predicted vector; and obtains the three motion vectors $v_0$, $v_1$, and $v_2$ in the PU 11 to be processed.

Subsequently, at Step S58, using the three motion vectors $v_0 = (v_{0x}, v_{0y})$, $v_1 = (v_{1x}, v_{1y})$, and $v_2 = (v_{2x}, v_{2y})$; the motion detecting unit 122a calculates the motion vector $v (v_x, v_y)$ of each unit block (for example, the PU 11) according to, for example, Equation (5) given below.

$$v_x = (v_{1x} - v_{0x})x/w - (v_{2y} - v_{0y})y/h + v_{0x}$$

$$v_y = (v_{1y} - v_{0y})x/w - (v_{2x} - v_{0x})y/h + v_{0y} \qquad (5)$$

In Equation (5), "w", "h", "x", and "y" represent the width of the PU 11, the height of the PU 11, the position of the PU 11 in the x-direction, and the position of the PU 11 in the y-direction, respectively. According to Equation (5), the motion vector v in the PU 11 is obtained by prorating the motion vectors $v_0$ to $v_2$ according to the position (x, y) of the PU 11.

Subsequently, at Step S59, for each unit block, based on the motion vector v, the motion detecting unit 122a performs affine transformation with respect to the block of the reference image identified according to the reference image identification information, and thus performs motion compensation in the affine transformation mode with respect to the reference image. Moreover, the motion detecting unit 122a sends the motion-compensated reference image as the predicted image P to the arithmetic unit 110 or the arithmetic unit 116. Then, the system control returns to the main routine (see FIG. 14).

Meanwhile, at Step S55, if it is not determined that the motion compensation mode is set to the affine transformation mode (No at Step S55); then, at Step S60, the condition determining unit 122b determines whether the motion compensation mode is set to the translation-rotation mode. If it is determined that the motion compensation mode is set to the translation-rotation mode (Yes at Step S60), then the system control proceeds to Step S61. On the other hand, if it is not determined that the motion compensation mode is set to the translation-rotation mode (No at Step S60), then the system control proceeds to Step S64.

When the determination indicates Yes at Step S60; at Step S61, the motion detecting unit 122a decides on the single predicted vector $pv_0$ based on the parameter information. Moreover, the motion detecting unit 123a decides on the predicted-angle information based on the parameter information.

Subsequently, at Step S62, the motion detecting unit 122a calculates the single motion vector $v_0$ in an identical manner to the operation performed at Step S53. Moreover, the motion detecting unit 122a adds the predicted-angle information decided at Step S61 to the difference between the predicted-angle information specified in the parameter information and the angle information of the PU to be processed, and calculates the angle information of the PU to be processed.

Then, at Step S63, using the single motion vector $v_0$ and the angle information calculated at Step S62, the motion detecting unit 122a performs motion compensation with respect to the reference image in the translation-rotation mode. Moreover, the motion detecting unit 122a sends the motion-compensated reference image as the predicted image P to the arithmetic unit 110 or the arithmetic unit 116. Then, the system control returns to the main routine (see FIG. 14).

Meanwhile, at Step S60, if it is not determined that the motion compensation mode is set to the translation-rotation mode (No at Step S60); then, at Step S64, based on the parameter information, the motion detecting unit 122a decides on the single predicted vector $pv_0$ in an identical manner to the operation performed at Step S52. Moreover, the motion detecting unit 122a decides on predicted-scaling-factor information based on the parameter information.

Subsequently, at Step S65, the motion detecting unit 123a calculates the single motion vector $v_0$ in an identical manner to the operation illustrated at Step S53. Moreover, the motion detecting unit 123a adds the predicted-scaling-factor information decided at Step S64 to the difference between the predicted-scaling-factor information specified in the parameter information and the scaling factor information of the PU to be processed, and calculates the scaling factor of the PU to be processed.

Then, at Step S66, using the single motion vector $v_0$ and the scaling factor information calculated at Step S65, the motion detecting unit 122a performs motion compensation with respect to the reference image in the translation-scaling mode. Moreover, the motion detecting unit 122a sends the motion-compensated reference image as the predicted image P to the arithmetic unit 110 or the arithmetic unit 116. Then, the system control returns to the main routine (see FIG. 14).

(Explanation of flow of encoding operation)

Explained below with reference to FIG. 17 is the flow of the encoding operation performed in the image encoding device 100a. Firstly, at Step S71, the arithmetic unit 110 calculates the difference between the target image for encoding, which has been subjected to AD conversion by the AD conversion unit 102, and the predicted image P. The calculation result is sent as the predictive residue image D to the orthogonal transformation unit 111. The predictive residue image D has a reduced volume of data as compared to the target image for encoding. Thus, as compared to the case in which the target image for encoding is encoded without any modification, it becomes possible to compress the volume of data.

At Step S72, based on the transformation information Tinfo received from the control unit 101, the orthogonal transformation unit 111 performs orthogonal transformation with respect to the predictive residue image D received from the arithmetic unit 110; and calculates the transformation coefficient Coeff. Then, the orthogonal transformation unit 111 sends the transformation coefficient Coeff to the quantization unit 112. More particularly, the orthogonal transformation unit 111 performs orthogonal transformation as typified by discrete cosine transform (DCT).

At Step S73, based on the transformation information Tinfo received from the control unit 101, the quantization unit 112 performs scaling (quantization) of the transformation coefficient Coeff received from the orthogonal transformation unit 111; and calculates the quantization transform coefficient level "level". Then, the quantization unit 112 sends the quantization transform coefficient level "level" to the encoding unit 113 and the inverse quantization unit 114.

At Step S74, based on the transformation information Tinfo received from the control unit 101, the inverse quantization unit 114 performs inverse quantization of the quantization transform coefficient level "level", which is received from the quantization unit 112, according to the characteristics corresponding to the characteristics of the quantization performed at Step S73. Then, the inverse quantization unit 114 sends the transformation coefficient Coeff_IQ, which is obtained as a result of the inverse quantization, to the inverse orthogonal transformation unit 115.

At Step S75, based on the transformation information Tinfo received from the control unit 101, the inverse orthogonal transformation unit 115 performs inverse orthogonal transformation with respect to the transformation coefficient Coeff_IQ, which is received from the inverse quantization unit 114, according to the method corresponding to the orthogonal transformation performed at Step S72; and calculates the predictive residue image D'.

At Step S76, the arithmetic unit 116 adds the predictive residue image D', which is calculated as a result of the operation performed at Step S75, to the predicted image P, which is received from the inter-prediction unit 122; and generates the local decoded image Rec.

At Step S77, using the local decoded image Rec obtained as a result of the operation performed at Step S76, the frame memory 117 rebuilds the decoded image for each picture unit, and stores the rebuilt decoded image in an internal buffer.

At Step S78, the encoding unit 113 encodes the encoding parameters, which are set as a result of the operation performed at Step S10 illustrated in FIG. 14, and the quantized transform coefficient level "level", which is obtained as a result of the operation performed at Step S73, according to a predetermined method. Moreover, the encoding unit 113 multiplexes the encoding data obtained as the result of encoding, and outputs the result of multiplexing as an encoded stream to the image encoding device 100a. Then, the encoded stream is transmitted to the decoding side via, for example, a transmission path or a recording medium.

(Explanation of motion prediction operation in merge mode)

Given below is the explanation of the flow of operations performed during the motion prediction operation in the merge mode.

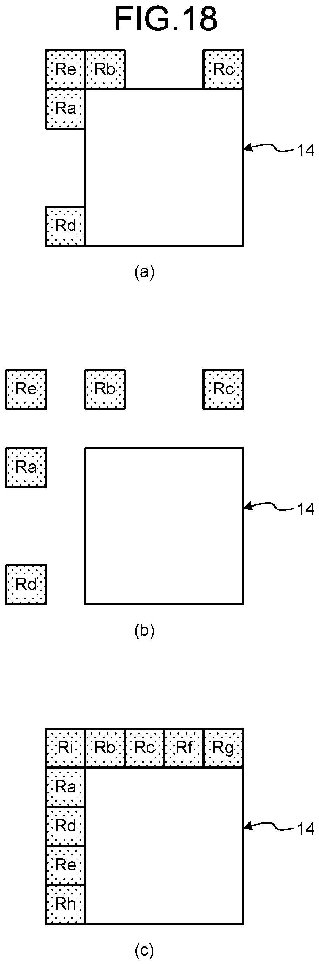

Firstly, explained below with reference to FIG. 18 are the neighboring areas present at the time of implementing the merge mode. FIG. 18 is a diagram illustrating an example of the neighboring areas set at the time of performing the motion prediction operation in the merge mode.

In FIG. 18(a) is illustrated an example in which five motion-compensated neighboring areas (encoded neighboring areas) are set in the neighborhood of a CU 14 that is to be subjected to motion prediction (herein, the CU 14 can also be a PU). That is, the CU 14 is an example of a partial area according to the application concerned. From among the set neighboring areas, neighboring areas Ra, Rb, and Re are areas adjacent to the upper left side of the CU 14 with 8-adjacency. Particularly, the neighboring area Ra is adjacent to the upper left apex of the CU 14 on the lower left side. The neighboring area Rb is adjacent to the upper left apex of the CU 14 on the upper right side. The neighboring area Re is adjacent to the upper left apex of the CU 14 on the upper left side. Moreover, the neighboring area Rc is adjacent to the upper right apex of the CU 14 on the upper left side. The neighboring area Rd is adjacent to the lower left apex of the CU 14 on the upper left side. Meanwhile, the neighboring areas can be set to have 4-adjacenecy instead of 8-adjacency. That is, in FIG. 18(a), it is possible to set only the neighboring areas Ra, Rb, Rc, and Rd at four positions.

In the motion-compensated (encoded) neighboring areas Ra to Re, it is assumed that the state of the motion is detected in each neighboring area and the motion compensation mode is decided. That is, in the example illustrated in FIG. 18(a), in order to detect the state of the motion in the CU 14 and performing motion prediction, it is possible to use a total of five types of motion states detected in the five neighboring areas.

More particularly, at the time of performing motion prediction with respect to the CU 14 in the merge mode, the condition determining unit 122b of the image encoding device 100a determines the motion states of the CU 14 in descending order of frequency of appearance of the detected motion states from among the motion states detected in the neighboring areas Ra to Re (i.e., from among the translation mode, the translation-rotation mode, the translation-scaling mode, and the affine transformation mode). Then, subject to satisfaction of a predetermined condition by the condition determining unit 122b, that is, subject to determination that a predetermined motion state is detected; the motion compensation execution control unit 122c (an execution control unit) of the image encoding device 100a skips the motion compensation mode corresponding to that predetermined condition. That is, in the neighborhood of the CU 14, if a predetermined motion state is detected with high frequency, it can be predicted that the motion state in the CU 14 is identical to the motion state detected with high frequency. Thus, by determining the motion state in order of the frequency of appearance, it becomes possible to promptly finalize the motion state, and to discontinue further determination.

Meanwhile, the number of neighboring regions to be set in the neighborhood of the CU 14 is not limited to five as illustrated in FIG. 18(a). That is, as illustrated in FIG. 18(c), it is possible to set a greater number of neighboring areas, such as neighboring areas Ra to Ri. Herein, greater the number of the neighboring areas, the greater is the number of referable motion states. That leads to an increase in the frequency of occurrence of the motions having high certainty, thereby enabling achieving enhancement in the accuracy of the motion prediction in the CU 14.

Meanwhile, the neighboring areas set in the neighborhood of the CU 14 need not always be adjacent to the CU 14. That is, as illustrated in FIG. 18(b), the neighboring areas can be set at positions not adjacent to the CU 14. As a result of setting the neighboring areas at positions not adjacent to the CU 14, the motion state in the CU 14 can be predicted based on the state of the motion over a wider range as compared to the neighborhood of the CU 14.

(Explanation of flow of motion prediction operation in merge mode)

Explained below with reference to FIG. 19 is the flow of the motion prediction operation performed when the image encoding device 100a is operating in the merge mode. In the flowchart illustrated in FIG. 19 is explained the detailed flow of the operations performed at Step S20 illustrated in FIG. 14.

At Step S81, the motion detecting unit 122a counts the number of appearances of the motion compensation modes in the neighboring areas (or the adjacent areas) of the CU 14 representing the target for motion prediction. That is, the motion detecting unit 122a counts the number of neighboring areas (or the number of adjacent areas) in which each compensation mode, namely, the translation mode, the translation-rotation mode, the translation-scaling mode, and the affine transformation mode, has occurred. Then, the counting results are sent to the condition determining unit 122b.

At Step S82, the condition determining unit 122b lines up the results counted at Step S81 in order of the frequency of appearance of the motion compensation modes.

Then, at Step S83, the motion compensation execution control unit 122c applies the motion compensation mode having the highest frequency of appearance (hereinafter, called rank 1), and calculates an RD cost $J_1$ in the case of encoding the CU 14 that represents the target for motion prediction.

Subsequently, at Step S84, the condition determining unit 122b determines whether the determination about the motion compensation mode to be applied to the CU 14, which represents the target for motion prediction, is to be discontinued after obtaining the result of the rank 1. If it is determined to discontinue the determination after obtaining the result of the rank 1 (Yes at Step S84), then the system control proceeds to Step S90. On the other hand, if it is not determined to discontinue the determination after obtaining the result of the rank 1 (No at Step S84), then the system control proceeds to Step S85. Meanwhile, for example, if the RD cost $J_1$ is smaller than a predetermined threshold value $J_{TH}$, then it can be determined to discontinue the determination after obtaining the result of the rank 1.

When the determination indicates No at Step S84; at Step S85, the motion compensation execution control unit 122c applies the motion compensation mode having the second highest frequency of appearance (hereinafter, called rank 2), and calculates an RD cost $J_2$ in the case of encoding the CU 14 that represents the target for motion prediction.

Then, at Step S86, the condition determining unit 122b determines whether the determination about the motion compensation mode to be applied to the CU 14, which represents the target for motion prediction, is to be discontinued after obtaining the result of the rank 2. If it is determined to discontinue the determination after obtaining the result of the rank 2 (Yes at Step S86), then the system control proceeds to Step S90. On the other hand, if it is not determined to discontinue the determination after obtaining the result of the rank 2 (No at Step S86), then the system control proceeds to Step S87. Meanwhile, for example, if the RD cost $J_2$ is smaller than the predetermined threshold value $J_{TH}$, then it can be determined to discontinue the determination after obtaining the result of the rank 2.

When the determination indicates No at Step S86; at Step S87, the motion compensation execution control unit 122c applies the motion compensation mode having the third highest frequency of appearance (hereinafter, called rank 3), and calculates an RD cost $J_3$ in the case of encoding the CU 14 that represents the target for motion prediction.

Then, at Step S88, the condition determining unit 122b determines whether the determination about the motion compensation mode to be applied to the CU 14, which represents the target for motion prediction, is to be discontinued after obtaining the result of the rank 3. If it is determined to discontinue the determination after obtaining the result of the rank 3 (Yes at Step S88), then the system control proceeds to Step S90. On the other hand, if it is not determined to discontinue the determination after obtaining the result of the rank 3 (No at Step S88), then the system control proceeds to Step S89. Meanwhile, for example, if the RD cost $J_3$ is smaller than the predetermined threshold value $J_{TH}$, then it can be determined to discontinue the determination after obtaining the result of the rank 3.

When the determination indicates No at Step S88; at Step S89, the motion compensation execution control unit 122c applies the motion compensation mode having the fourth highest frequency of appearance (hereinafter, called rank 4), and calculates an RD cost $J_4$ in the case of encoding the CU 14 that represents the target for motion prediction. Then, the system control proceeds to Step S90.

At each of Steps S84, S86, and S88; when the determination indicates Yes, that is, when it is determined to discontinue the determination about the motion compensation mode to be applied to the CU 14 representing the target for motion prediction; the system control proceeds to Step S90. Moreover, the operation at Step S89 is followed by the operation at Step S90. At Step S90, the condition determining unit 122b determines whether the RD cost $J_1$ is the smallest. If it is determined that the RD cost $J_1$ is the smallest (Yes at Step S90), then the system control proceeds to Step S94. On the other hand, if it is not determined that the RD cost $J_1$ is the smallest (No at Step S90), then the system control proceeds to Step S91.

Meanwhile, when the system control proceeds to Step S90 as a result of the determination indicating Yes at Step S84; although the RD cost $J_1$ has a value, the RD costs $J_2$ to $J_4$ do not yet have values. Hence, the determination unconditionally indicates Yes at Step S90, and the system control returns to Step S84. On the other hand, when the system control proceeds to Step S90 as a result of the determination indicating Yes at Step S86 or Step S88 as well as when the system control proceeds to Step S90 after performing the operation at Step S89, the RD cost $J_1$ has a value and at least one of the RD costs $J_2$ to $J_4$ also has a value. Hence, at Step S90, those values are compared to determine whether the RD cost $J_1$ is the smallest.

When the determination indicates No at Step S90; at Step S91, the condition determining unit 122b determines whether the RD cost $J_2$ is the smallest. If it is determined that the RD cost $J_2$ is the smallest (Yes at Step S91), then the system control proceeds to Step S95. On the other hand, if it is not determined that the RD cost $J_2$ is the smallest (No at Step S91), then the system control proceeds to Step S92.

When the determination indicates No at Step S91; at Step S92, the condition determining unit 122b determines whether the RD cost $J_3$ is the smallest. If it is determined that the RD cost $J_3$ is the smallest (Yes at Step S92), then the system control proceeds to Step S96. On the other hand, if it is not determined that the RD cost $J_3$ is the smallest (No at Step S92), then the system control proceeds to Step S93.

Meanwhile, when the determination indicates Yes at Step S90; at Step S94, the motion compensation execution control unit 122c makes the motion detecting unit 122a perform motion compensation with respect to the CU 14, which represents the target for motion prediction, in the motion compensation mode corresponding to the rank 1. At that time, the motion compensation execution control unit 123c sends, to the motion detecting unit 122a, a signal inter_mode=0 indicating that motion compensation was performed in the motion compensation mode corresponding to the rank 1. Then, the operations illustrated in FIG. 19 are ended, and the system control returns to the main routine illustrated in FIG. 14.

When the determination indicates Yes at Step S91; at Step S95, the motion compensation execution control unit 122c makes the motion detecting unit 122a perform motion compensation with respect to the CU 14, which represents the target for motion prediction, in the motion compensation mode corresponding to the rank 2. At that time, the motion compensation execution control unit 123c sends, to the motion detecting unit 122a, a signal inter_mode=1 indicating that motion compensation was performed in the motion compensation mode corresponding to the rank 2. Then, the operations illustrated in FIG. 19 are ended, and the system control returns to the main routine illustrated in FIG. 14.

When the determination indicates Yes at Step S92; at Step S96, the motion compensation execution control unit 122c makes the motion detecting unit 122a perform motion compensation with respect to the CU 14, which represents the target for motion prediction, in the motion compensation mode corresponding to the rank 3. At that time, the motion compensation execution control unit 123c sends, to the motion detecting unit 122a, a signal inter_mode=2 indicating that motion compensation was performed in the motion compensation mode corresponding to the rank 3. Then, the operations illustrated in FIG. 19 are ended, and the system control returns to the main routine illustrated in FIG. 14.

When the determination indicates No at Step S92; at Step S93, the motion compensation execution control unit 122c makes the motion detecting unit 122a perform motion compensation with respect to the CU 14, which represents the target for motion prediction, in the motion compensation mode corresponding to the rank 4. At that time, the motion compensation execution control unit 123c sends, to the motion detecting unit 122a, a signal inter_mode=1 indicating that motion compensation was performed in the motion compensation mode corresponding to the rank 4. Then, the operations illustrated in FIG. 19 are ended, and the system control returns to the main routine illustrated in FIG. 14.

In this way, according to the operations illustrated in FIG. 19, by calculating the RD costs $J_1$ to $J_4$ in order of the frequency of appearance of the motion compensation modes in the neighboring areas (or the adjacent areas) of the CU 14 representing the target for motion prediction; the motion compensation mode that is likely to be assigned to the CU 14 representing the target for motion prediction can be found at an early stage. Once the motion compensation mode that is likely to be assigned to the CU 14 is found, the subsequent determination can be discontinued (i.e., the determination about the other motion compensation modes, other than the motion compensation mode that is likely to be assigned to the CU 14, can be skipped). That enables taking decision about the motion compensation mode in an efficient manner.

Moreover, according to the flow of operations explained with reference to FIG. 19, the motion compensation mode that is likely to be assigned to the CU 14, which represents the target for motion prediction, has the shortest code (the signal inter_mode) assigned thereto. That contributes in achieving improvement in the encoding efficiency.

The operations illustrated in FIG. 19 represent an example in which, as the predetermined condition, the condition determining unit 122b determines whether the motion state detected by the motion detecting unit 122a matches with a predetermined motion compensation mode.

(Effects of first embodiment)

In this way, according to the first embodiment, when the motion detecting unit 122a (a motion compensating unit), which has a plurality of motion compensation modes meant for compensating the state of the motion occurring with time, detects the state of the motion occurring with time in a partial area representing some part of an image; if the state of the motion detected by the motion detecting unit 122a satisfies a predetermined condition, the motion compensation execution control unit 122c (an execution control unit) makes the motion detecting unit 122a skip the motion compensation mode corresponding to the predetermined condition. That eliminates the need to perform determination about the motion compensation modes other than the predetermined condition, thereby enabling motion compensation in the partial area at a fast rate (with efficiency).

Particularly, according to the first embodiment, when the image encoding device 100a determines the state or the motion in the partial area (for example, the PU 11 or the CU 14), which represents the target for motion prediction, based on the motion vector in the partial area; the condition determining unit 122b promptly discontinues the motion state determination based on the RD costs and the evaluation costs. The motion compensation execution control unit 123c performs motion compensation of the partial area in the motion compensation mode corresponding to the state of the motion determined to have occurred in the partial area, and generates the predicted image P. That is, the undetermined motion compensation modes are skipped. That enables performing motion compensation in the partial area at a fast rate, as well as enables achieving enhancement in the encoding efficiency of the image. Particularly, in the case of performing motion prediction in the merge mode, that is, in the case of calculating the motion vector in the partial area, which represents the target for motion prediction, based on the motion vectors in the neighboring areas of that partial area; the condition determining unit 122b determines the state of the motion in the partial area, which represents the target for motion prediction, in order of the frequency of occurrence of the motion vectors in the neighboring areas. Then, the motion compensation execution control unit 123c performs motion compensation of the partial area in the motion compensation mode corresponding to the state of the motion determined to have occurred in the partial area, and generates the predicted image P. That enables performing motion compensation in the partial area at a fast rate, as well as enables achieving enhancement in the encoding efficiency of the image.

Moreover, based on the direction and the length of the motion vectors at the maximum of three apices of the rectangular partial area and based on the width w and the height h of the partial area as detected by the motion detecting unit 122a (a motion compensating unit), the condition determining unit 122b determines whether the state of the motion of the partial area satisfies a predetermined condition. Hence, the determination of the state of the motion of the partial area can be performed in an easy and reliable manner.

<Second embodiment>

(Explanation of flow of motion prediction operation according to CU size)

In the application concerned, the explanation is given for an example in which, at the time of performing motion compensation, the image encoding device 100a decides on the motion compensation mode to be applied according to the set CU. That is, when the size of the set partial area (CU), which represents the condition under which the motion detecting unit 122a (a motion compensating unit) of the image encoding device 100a generates the predicted image P, satisfies a predetermined condition; the motion compensation execution control unit 122c makes the motion detecting unit 122a skip the motion compensation mode corresponding to the predetermined condition.

In a second embodiment, when the condition under which the motion detecting unit 122a (a motion compensating unit) generates the predicted image P satisfies a predetermined condition, the motion compensation execution control unit 122c makes the motion detecting unit 122a skip the motion compensation mode corresponding to the predetermined condition.

Moreover, when the predetermined condition indicates that the size of the partial area is smaller than a predetermined value and when that predetermined condition is satisfied, the motion compensation execution control unit 122c makes the motion detecting unit 122a skip predetermined motion compensation.

More particularly, when the predetermined condition indicates that the size of the partial area is smaller than a predetermined value and when that predetermined condition is satisfied, the motion compensation execution control unit 122c makes the motion detecting unit 122a skip the motion compensation modes other than the following: the translation mode in which the motion involving translation is compensated, the translation-rotation mode in which the motion involving translation and rotation is compensated, and the translation-scaling mode in which the motion involving translation and enlargement-reduction is compensated.

Furthermore, when the predetermined condition indicates that the size of the partial area is equal to or greater than a predetermined value and when that predetermined condition is satisfied, the motion compensation execution control unit 122c makes the motion detecting unit 122a apply a plurality of motion compensation modes with respect to the partial area and then skip the motion compensation modes other than motion compensation mode in which the RD cost, which represents the extent of prediction according to the predicted image P generated at the time of performing motion compensation, is the lowest.

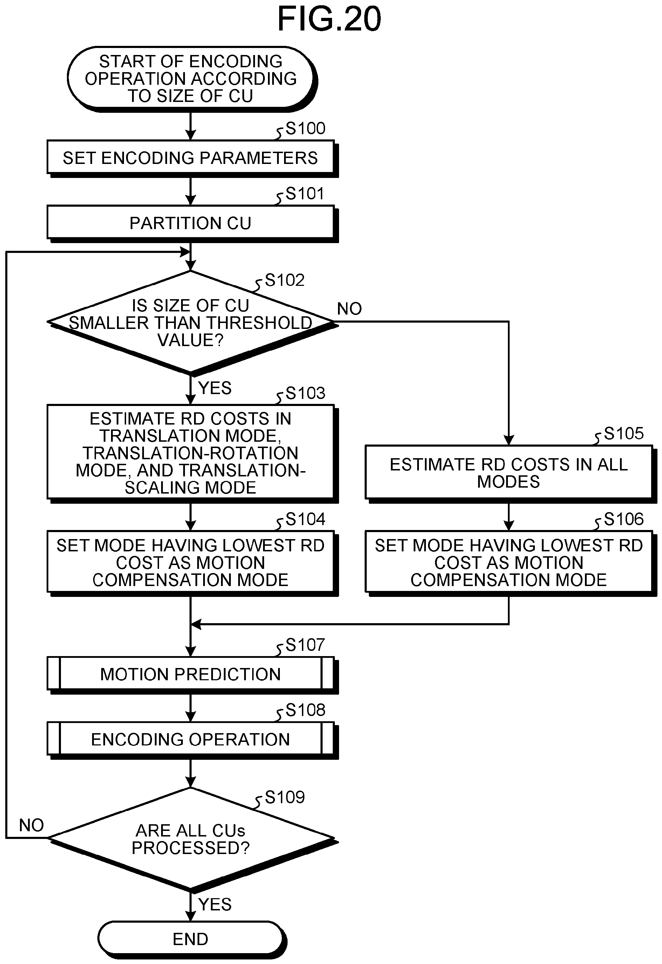

Explained below with reference to FIG. 20 is an example of the operations by which, while performing motion compensation, the image encoding device 100a decides on the motion compensation mode according to the set size of the CU. FIG. 20 is a flowchart for explaining an exemplary flow of operations by which the image encoding device 100a sets the motion compensation mode according to the size of the CU (the product of the width w and the height h), and performs motion compensation and encoding. Meanwhile, in FIG. 20, for the sake of simplicity, the flow of operations is illustrated in the case of performing inter-prediction in the AMVP mode.

The operations performed at Steps S100 and S101 are identical to the operations performed at Steps S10 and S12, respectively, illustrated in FIG. 14. Hence, that explanation is not given again.

Then, at Step S102, the condition determining unit 123b determines whether the size of the CU set at Step S101 is smaller than a threshold value. If it is determined that the size of the CU is smaller than the threshold value (Yes at Step S102), then the system control proceeds to Step S103. On the other hand, if it is not determined that the size of the CU is smaller than the threshold value (No at Step S102), then the system control proceeds to Step S105. Herein, the threshold value for the size of the CU is assumed to be equal to, for example, $hw=32\times32=1024$.

When the determination indicates Yes at Step S102; at Step S103, the motion compensation execution control unit 123c applies each of the translation mode, the translation-rotation mode, and the translation-scaling mode; and calculates the RD cost in the case of encoding the CU representing the target for motion prediction. That is, the motion compensation execution control unit 123c does not just estimate the RD cost in the case of applying the affine transformation mode in which the number of parameters is the highest.

Subsequently, at Step S104, the motion compensation execution control unit 123c sets the motion compensation mode having the lowest RD cost, from among the RD costs calculated at Step S103, as the motion compensation mode for the CU representing the target for motion prediction. Then, the motion compensation execution control unit 123c sends a signal representing the decided motion compensation mode to the inter-prediction unit 122. Subsequently, the system control proceeds to Step S107. That is, in this case, the setting is such that all other motion compensation modes other than the motion compensation mode having the lowest RD cost are skipped.

Meanwhile, when the determination indicates No at Step S102; at Step S105, the motion compensation execution control unit 123c applies each provided motion compensation mode (i.e., the translation mode, the translation-rotation mode, the translation-scaling mode, and the affine transformation mode), and calculates the RD cost in the case of encoding the CU that represents the target for motion prediction.

At Step S106, the motion compensation execution control unit 123c sets the motion compensation mode having the lowest RD cost, from among the RD costs calculated at Step S105, as the motion compensation mode for the CU representing the target for motion prediction. Subsequently, the motion compensation execution control unit 123c sends a signal representing the decided motion compensation mode to the inter-prediction unit 122. Then, the system control proceeds to Step S107. That is, in this case, the setting is such that all other motion compensation modes other than the motion compensation mode having the lowest RD cost are skipped.

Subsequently, motion prediction is performed at Step S107 and the encoding operation is performed at Step S108. Those operations are identical to the operations performed at Steps S16 and S17, respectively, illustrated in FIG. 14.

Then, at Step S109, the inter-prediction unit 122 determines whether or not the encoding operation has been performed for all CUs in the image. At Step S109, if it is determined that the encoding operation has been performed for all CUs in the image (Yes at Step S109), then the image encoding device 100a ends the operations illustrated in FIG. 20. On the other hand, at Step S109, if it is not determined that the encoding operation has been performed for all CUs in the image (No at Step S109), then the system control returns to Step S102 and the subsequent operations are performed with respect to the next PU.

In this way, according to the operations illustrated in FIG. 20, when the size of the CU is smaller than a threshold value, it is taken into account that the overhead of the motion information per pixel count increases, and only the motion compensation modes having less motion information (smaller parameter count) are used. In this way, by restricting the motion compensation modes to be used, the amount of encoding required in specifying the motion compensation mode can be reduced. That results in an improvement in the encoding efficiency.

Meanwhile, also in the case of performing inter-prediction in the merge mode, the flow of operations illustrated in FIG. 20 can be applied. That is, when the CU, which represents the target for encoding, has a smaller size than the threshold value; from among a plurality of motion compensation modes already decided in the neighboring areas (or the adjacent areas), the order of frequency of appearance can be calculated only for the translation mode, the translation-rotation mode, and the translation-scaling mode.

(Effects of second embodiment)

In this way, in the operations illustrated in FIG. 20, according to the size of the CU (the partial area) representing the target for motion prediction, the image encoding device 100a decides on the motion compensation mode to be applied to that partial area. More particularly, when the size of the partial area is smaller than the threshold value, motion compensation according to the affine transformation mode, which has the highest amount of calculation, is skipped for the concerned partial area. That enables performing motion compensation at a fast rate and enables achieving enhancement in the encoding efficiency of the image.

<Third embodiment>

(Explanation of flow of motion prediction operation according to QP value)

In the application concerned, the explanation is given for an example in which, when the image encoding device 100a performs motion compensation, the motion compensation mode to be applied is decided according to the QP value set in the quantization unit 112. That is, in the image encoding device 100a, when the motion detecting unit 122a (a motion compensating unit) determines the QP value representing the condition for generating the predicted image P, and when the QP value satisfies a predetermined condition; the motion compensation execution control unit 122c makes the motion detecting unit 122a skip the motion compensation mode corresponding to the predetermined condition.

In a third embodiment, when the predetermined condition indicates that the quantization parameter (QP value) used at the time of quantizing the result of motion compensation is smaller than a predetermined value, and when that predetermined condition is satisfied; the motion compensation execution control unit 122c makes the motion detecting unit 122a skip the translation-scaling mode, in which the motion involving translation and enlargement-reduction is compensated, and skip the translation-rotation mode, in which the motion involving translation and rotation is compensated.

Moreover, when the predetermined condition indicates that the quantization parameter (QP value) used at the time of quantizing the result of motion compensation is smaller than a predetermined value and indicates that the RD cost indicating the extent of prediction according to the predicted image P, which is generated as a result of performing motion compensation in the partial area by applying the affine transformation mode meant for compensating the motion involving translation, rotation, enlargement-reduction, and skew deformation, is smaller than a predetermined threshold value, and when that predetermined condition is satisfied; the motion compensation execution control unit 122c makes the motion detecting unit 122a skip the motion compensation modes other than the affine transformation mode meant for compensating the motion involving translation, rotation, enlargement-reduction, and skew deformation.

Furthermore, when the predetermined condition indicates that the quantization parameter (QP value) used at the time of quantizing the result of motion compensation is smaller than a predetermined value and indicates that the RD cost indicating the extent of prediction according to the predicted image P, which is generated as a result of performing motion compensation with respect to the target partial area for prediction by applying the affine transformation mode meant for compensating the motion involving translation, rotation, enlargement-reduction, and skew deformation, is equal to or greater than a predetermined threshold value, and when that predetermined condition is satisfied; the motion compensation execution control unit 122c makes the motion detecting unit 122a skip the motion compensation modes other than the translation mode meant for compensating the motion involving translation.

Moreover, when the predetermined condition indicates that the quantization parameter (QP value) used at the time of quantizing the result of motion compensation is equal to or greater than a predetermined value, and when that predetermined condition is satisfied; the motion compensation execution control unit 122c makes the motion detecting unit 122a skip the motion compensation modes other than the motion compensation mode having the lowest RD cost, which indicates the extent of prediction according to the predicted image P generated as a result of performing motion compensation with respect to the target partial area for prediction by applying each of a plurality motion compensation modes.

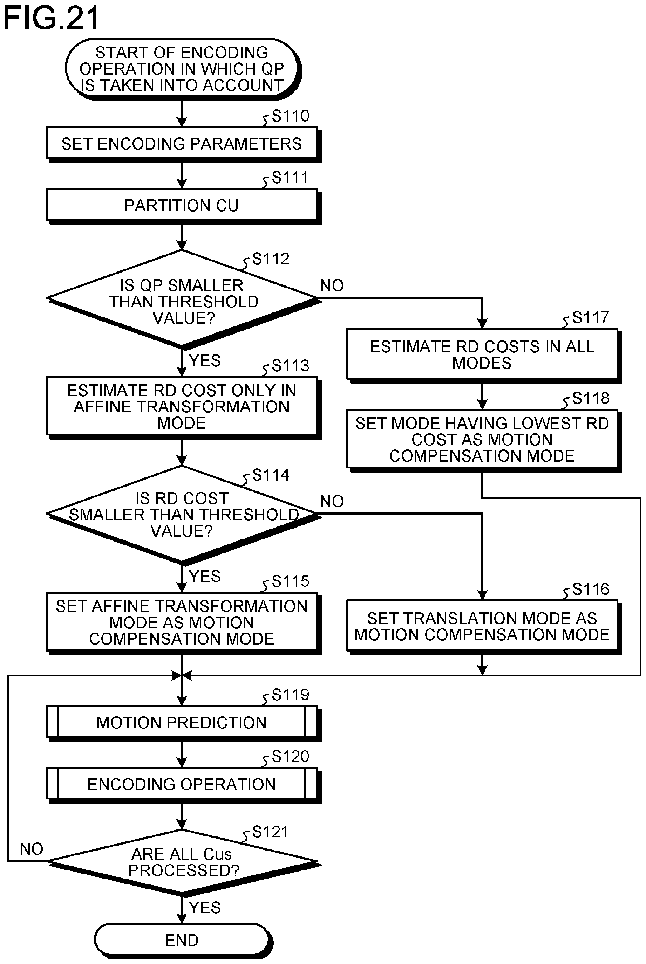

Explained below with reference to FIG. 21 is an example of the operations performed by which, at the time of performing motion compensation, the image encoding device 100a decides on the motion compensation mode according to the QP value set in the quantization unit 112. FIG. 21 is a flowchart for explaining an exemplary flow of operations by which the image encoding device 100a sets the motion compensation mode according to the QP value, and performs motion compensation and encoding. Meanwhile, in FIG. 21, for the sake of simplicity, the flow of operations is illustrated in the case of performing inter-prediction in the AMVP mode.

The operations performed at Steps S110 and S111 are identical to the operations performed at Steps S10 and S12, respectively, illustrated in FIG. 14. Hence, that explanation is not given again.

At Step S112, the condition determining unit 123b determines whether the QP value that is set in the quantization unit 112 is smaller than a threshold value. If it is determined that the QP value is smaller than the threshold value (Yes at Step S112), then the system control proceeds to Step S113. On the other hand, if it is not determined that the QP is smaller than the threshold value (No at Step S112), then the system control proceeds to Step S117. Meanwhile, the threshold value for the QP value is set to, for example, QP=30.

When the determination indicates Yes at Step S112; at Step S113, the motion compensation execution control unit 123c applies the affine transformation mode and calculates the RD cost in the case of encoding the CU that represents the target for motion prediction.

Then, at Step S114, the motion compensation execution control unit 123c determines whether the RD cost, which is calculated at Step S113, is smaller than a predetermined threshold value. If it is determined that the RD cost is smaller than the predetermined threshold value (Yes at Step S114), then the system control proceeds to Step S115. On the other hand, if it is not determined that the RD cost is smaller than the predetermined threshold value (No at Step S114), then the system control proceeds to Step S116.

When the determination indicates Yes at Step S114, that is, when it is determined that the RD cost is smaller than the predetermined threshold value; at Step S115, the motion compensation execution control unit 123c sets the affine transformation mode as the motion compensation mode for the CU representing the target for motion prediction. Then, the system control proceeds to Step S119. That is, in that case, the setting is such that the motion compensation modes other than the affine transformation mode are skipped.

On the other hand, when the determination indicates No at Step S114, that is, when it is determined that the RD cost is equal to or greater than the predetermined value; at Step S116, the motion compensation execution control unit 123c sets the translation mode as the motion compensation mode for the CU representing the target for motion prediction. Then, the system control proceeds to Step S119. That is, in that case, the setting is such that the motion compensation modes other than the translation mode are skipped.

Meanwhile, when the determination indicates No at Step S112, that is, when it is determined that the QP value is equal to or greater than the threshold value; at Step S117, the motion compensation execution control unit 123c calculates the RD costs in the case in which the CU representing the target for motion prediction is encoded by applying all motion compensation modes.

Then, at Step S118, the motion compensation execution control unit 123c searches for the motion compensation mode having the smallest RD cost from among the RD costs calculated at Step S117; and sets the retrieved motion compensation mode as the motion compensation mode for the CU representing the target for motion prediction. Then, the system control proceeds to Step S119. That is, in this case, the setting is such that the motion compensation modes other than the motion compensation mode having the smallest RD cost are skipped.

Subsequently, motion prediction is performed at Step S119 and the encoding operation is performed at Step S120. Those operations are identical to the operations performed at Steps S16 and S17, respectively, illustrated in FIG. 14.

Then, at Step S121, the inter-prediction unit 122 determines whether the encoding operation has been performed with respect to all CUs in the image. At Step S121, if it is determined that the encoding operation has been performed with respect to all CUs in the image (Yes at Step S121), then the image encoding device 100a ends the operations illustrated in FIG. 21. On the other hand, at Step S121, if it is not determined that the encoding operation has been performed with respect to all CUs in the image (No at Step S121), then the system control returns to Step S119 and the subsequent operations are performed with respect to the next PU.

In this way, in the operations illustrated in FIG. 21, when the QP value is small, that is, when the amount of encoding to be sent is small and the bitrate is high; even a large overhead does not have much impact, and hence the RD cost is estimated only for the case of applying the affine transformation mode having a high parameter count. That is, for the other motion compensation modes, namely, the translation mode, the translation-rotation mode, and the translation-scaling mode; the RD cost estimation is not performed. That enables speeding up of the operation of setting the motion compensation mode.

(Effects of third embodiment)

In this way, according to the third embodiment, the image encoding device 100a decides on the motion compensation mode, which is to be applied to the partial area representing the target for motion prediction, according to the QP value representing the quantization parameter used at the time of generating (encoding) a predicted image. That is, when the QP value is smaller than a threshold value, the RC cost is estimated for the case of applying the affine transformation mode, and motion compensation is performed according to the affine transformation mode or the translation mode. Thus, particularly when the QP value is smaller than the threshold value, motion compensation can be performed at a fast rate and the encoding efficiency of the image can be enhanced.

Till now, the explanation was given about the flow of the motion prediction operation and the encoding operation performed by the image encoding device 100a. The motion prediction operation according to the RD cost and the evaluation cost, the motion prediction operation according to the CU size, and the motion prediction operation according to the QP value can be performed independently from each other, or any two or three of those operations can be performed in combination. For example, when the size of the CU representing the target for prediction is smaller than the threshold value, the prediction operation explained in the second embodiment can be performed. On the other hand, when the size of the CU is equal to or greater than the threshold value, the prediction operation explained in the first embodiment can be performed. When the QP value is smaller than the threshold value, the RD cost can be estimated for the case of performing motion compensation in the affine transformation mode; and motion compensation is performed in the affine transformation mode or the translation mode depending on the RD cost. When the QP value is equal to or greater than the threshold value, the motion prediction operation can be performed according to the CU size, the RD cost, and the estimation cost.

<Fourth embodiment>

(Explanation of configuration of image decoding device)

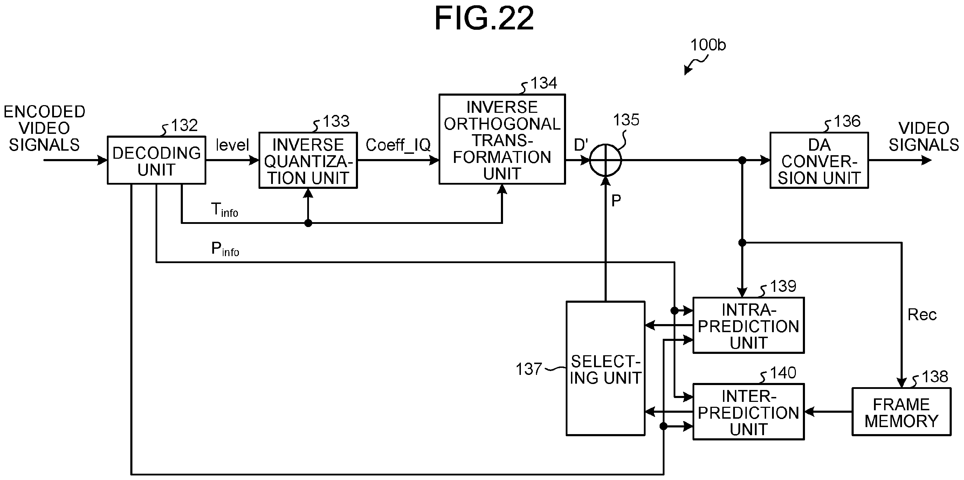

FIG. 22 is a functional block diagram illustrating an exemplary configuration of an image decoding device 100b, which represents an example of an image processing device in which the application concerned is applied, according to an embodiment. Regarding the functions illustrated in FIG. 22, for example, the CPU 801 and memory devices such as the ROM 802 and the RAM 803 can be used as illustrated in FIG. 28 (described later), and the functions of each constituent element (described later) of the image encoding device 100a can be implemented when the CPU 801 executes programs stored in the ROM 802 or the RAM 803. Alternatively, the functions of some or all of the constituent elements illustrated in FIG. 11 can be implemented using dedicated hardware.

The image decoding device 100b illustrated in FIG. 22 decodes an encoded stream, which is generated in the image encoding device 100a illustrated in FIG. 11, according to a decoding method corresponding to the encoding method implemented in the image encoding device 100a. The image encoding device 100b implements, for example, the technology proposed in the HEVC or the technology proposed in the JVET.

Meanwhile, in FIG. 22, only the main details such as the processing units and the data flow are illustrated, and the details illustrated in FIG. 22 do not necessarily represent the entire configuration. That is, there can be processing units that are not illustrated as blocks in the image decoding device 100b in FIG. 22, and there can be operations and data flows that are not illustrated as arrows in FIG. 22.

The image decoding device 100b includes a decoding unit 132, an inverse quantization unit 133, an inverse orthogonal transformation unit 134, an arithmetic unit 135, a DA conversion unit 136, a selecting unit 137, a frame memory 138, an intra-prediction unit 139, and an inter-prediction unit 140. The image decoding device 100b performs CU-by-CU decoding with respect to an encoded stream generated in the image encoding device 100a.

In the image decoding device 100b, the decoding unit 132 decodes an encoded stream, which is generated in the image encoding device 100a, according to a predetermined decoding method corresponding to the encoding method implemented by the encoding unit 113. For example, in line with the definition of a syntax table, the decoding unit 132 decodes the encoding parameters (the header information Hinfo, the prediction information Pinfo, and the transformation information Tinfo) and the quantized transform coefficient level "level" from the bit sequence of the encoded stream. The decoding unit 132 partitions the LCU based on a split flag included in the encoding parameters; and sets the CUs (PUs and TUs), which represent the targets for decoding, in order of CUs corresponding to the quantized transform coefficient level "level".

Then, the decoding unit 132 sends the encoding parameters to the other blocks. For example, the decoding unit 132 sends the prediction information Pinfo to the intra-prediction unit 139 and the inter-prediction unit 140; sends the transformation information Tinfo to the inverse quantization unit 133 and the inverse orthogonal transformation unit 134; and sends the header information Hinfo to each block. Moreover, the decoding unit 132 sends the quantized transform coefficient level "level" to the inverse quantization unit 133.

The inverse quantization unit 133 performs scaling (inverse quantization) of the quantized transform coefficient level "level", which is received from the decoding unit 132, based on the transformation information Tinfo received from the decoding unit 132; and derives the transformation coefficient Coeff_IQ. The inverse quantization is the inverse operation of the quantization performed by the quantization unit 112 (see FIG. 11) of the image encoding device 100a. Meanwhile, the inverse quantization unit 114 (see FIG. 11) performs inverse quantization in an identical manner to the inverse quantization performed by the inverse quantization unit 133. Then, the inverse quantization unit 133 sends the transformation coefficient Coeff_IQ to the inverse orthogonal transformation unit 134.

The inverse orthogonal transformation unit 134 performs inverse orthogonal transformation with respect to the transformation coefficient Coeff_IQ, which is received from the inverse quantization unit 133, based on the transformation information Tinfo received from the decoding unit 132; and calculates the predictive residue image D'. This inverse orthogonal transformation is the inverse operation of orthogonal transformation performed by the orthogonal transformation unit 111 (see FIG. 11) of the image encoding device 100a. That is, the inverse orthogonal transformation unit 134 performs inverse orthogonal transformation in an identical manner to the inverse orthogonal transformation performed by the inverse orthogonal transformation unit 115 (see FIG. 11). Then, the inverse orthogonal transformation unit 134 sends the predictive residue image D' to the arithmetic unit 135.

The arithmetic unit 135 adds the predictive residue image D', which is received from the inverse orthogonal transformation unit 134, and the predicted image P corresponding to the predictive residue image D'; and calculates the local decoded image Rec. Then, using the local decoded image Rec, the arithmetic unit 135 rebuilds the decoded image for each picture unit, and outputs the decoded image to the outside of the image decoding device 100b. Moreover, the arithmetic unit 135 sends the local decoded image Rec to the frame memory 138. Meanwhile, either the arithmetic unit 135 can output the decoded image without modification in the form of digital video signals; or the DA conversion unit 136 can convert the digital video signals into analog video signals and then output the analog video signals.

The frame memory 138 rebuilds the decoded image for each picture unit using the local decoded image Rec received from the arithmetic unit 135, and stores the rebuilt decoded image in an internal buffer. Moreover, the frame memory 138 reads, as a reference image from the buffer, a decoded image specified by the intra-predicting unit 139 or the inter-predicting unit 140; and sends the read decoded image to the intra-predicting unit 139 or the inter-predicting unit 140 that specified the reading operation. Furthermore, the frame memory 138 can store, in an internal buffer, the header information Hinfo, the prediction information Pinfo, and the transformation information Tinfo related to the generation of that decoded image.

When the mode information pred_mode_flag of the prediction information Pinfo indicates the intra-prediction operation; the intra-predicting unit 139 obtains, as a reference image, the decoded image that has the same timing as the target CU for encoding and that is stored in the frame memory 138. Then, using the reference image, the intra-prediction unit 139 performs the intra-prediction operation with respect to the target PU for encoding in the intra-prediction mode indicated by the intra-prediction mode information. Subsequently, the intra-prediction unit 139 sends the predicted image P, which is generated as a result of performing the intra-prediction operation, to the selecting unit 137.

When the mode information pred_mode_flag indicates the inter-prediction operation, the inter-predicting unit 140 obtains, as a reference image based on the reference image identification information, a decoded image that has a different timing than the target CU for encoding and that is stored in the frame memory 138. Then, in an identical manner to the inter-prediction unit 122 illustrated in FIG. 11, based on the merge flag, the motion compensation mode information, and the parameter information; the inter-prediction unit 140 performs the inter-prediction operation of the target PU for encoding using the reference image. Subsequently, the inter-prediction unit 140 sends the predicted image P, which is generated as a result of performing the inter-prediction operation, to the selecting unit 137.

The inter-prediction unit 140 has the same configuration as the inter-prediction unit 122 of the image encoding device 100a. That is, the inter-prediction unit 140 includes the motion detecting unit 122a, the condition determining unit 122b, and the motion compensation execution control unit 122c.

The selecting unit 137 sends, to the arithmetic unit 135, the predicted image P output by the intra-prediction unit 139 or the inter-prediction unit 140.

(Explanation of flow of decoding operation)

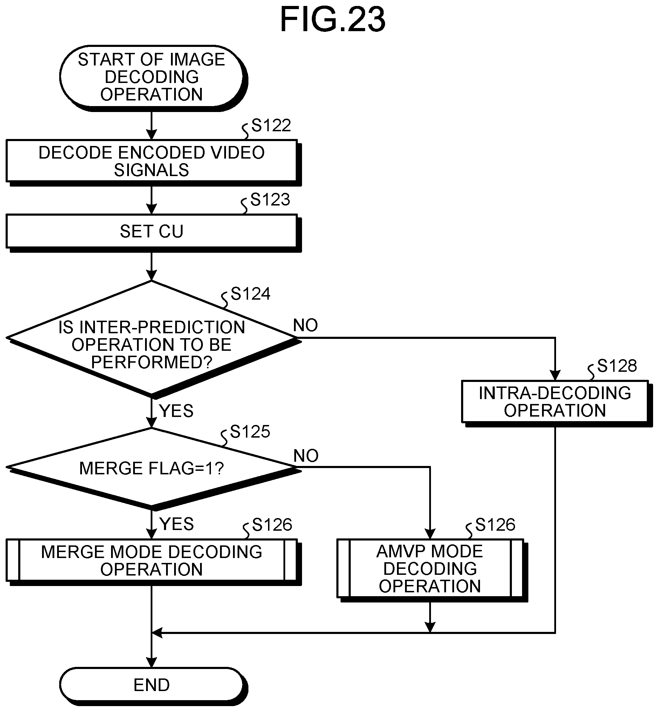

FIG. 23 is a flowchart for explaining an exemplary flow of a decoding operation performed by the image decoding device 100b.

At Step S122, the decoding unit 132 decodes the encoded video signals that are received in the image decoding device 100b, and obtains the encoding parameters and the quantized transform coefficient level "level". Then, the decoding unit 132 sends the encoding parameters to each block of the image decoding device 100b. Moreover, the decoding unit 132 sends the quantized transform coefficient level "level" to the inverse quantization unit 133.

At Step S123, the decoding unit 132 partitions a CU based on the split flag included in the encoding parameters, and sets the CU corresponding to the quantized transform coefficient level "level" as the target CU for decoding. Thus, the operations from Step S124 to Step S128 explained below are performed for each target CU for decoding.

At Step S124, the inter-prediction unit 140 determines whether the mode information pred_mode of the prediction information Pinfo indicates the inter-prediction information. If it is determined that the inter-prediction information is indicated (Yes at Step S124), then the system control proceeds to Step S125. On the other hand, if it is not determined that the inter-prediction information is indicated (No at Step S124), then the system control proceeds to Step S128.

When the determination indicates Yes at Step S124, that is, when it is determined that the inter-prediction information is indicated; at Step S125, the inter-prediction unit 140 determines whether the merge flag of the prediction information is set to "1". If it is determined that the merge flag is set to "1" (Yes at Step S125), then the system control proceeds to Step S126. On the other hand, if it is not determined that the merge flag is set to "1" (No at Step S125), then the system control proceeds to Step S127.

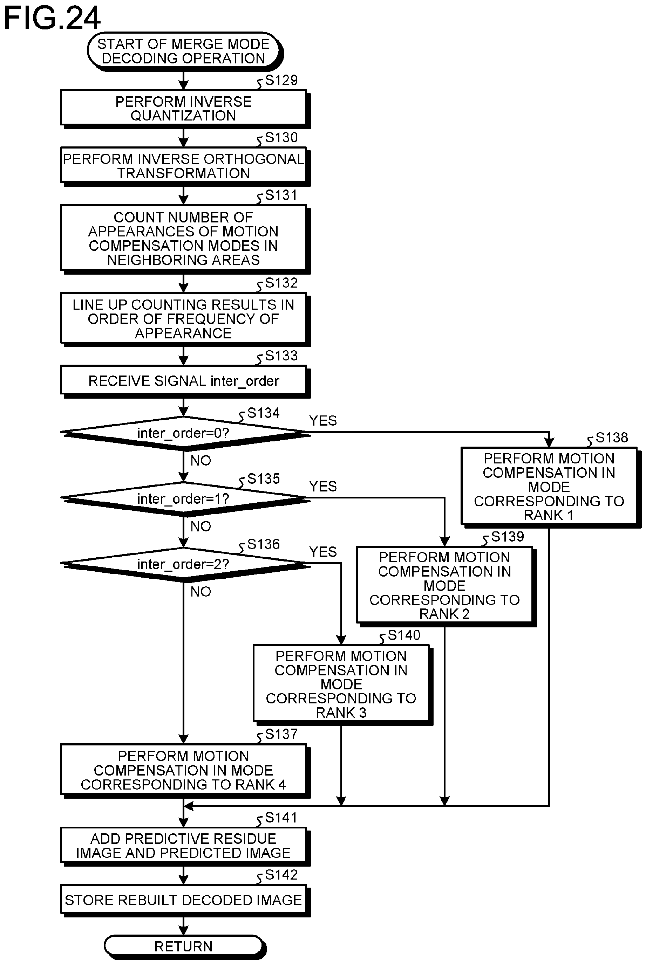

When the determination indicates Yes at Step S125, that is, when it is determined that the merge flag is set to "1"; at Step S126, the inter-prediction unit 140 uses the predicted image P, which is generated as a result of performing the inter-prediction operation in the merge mode, and performs a merge mode decoding operation for decoding the target image for decoding. The detailed flow of the merge mode decoding operation is explained later with reference to FIG. 24. Once the merge mode decoding operation is finished, the image decoding device 100b ends the image decoding operation.

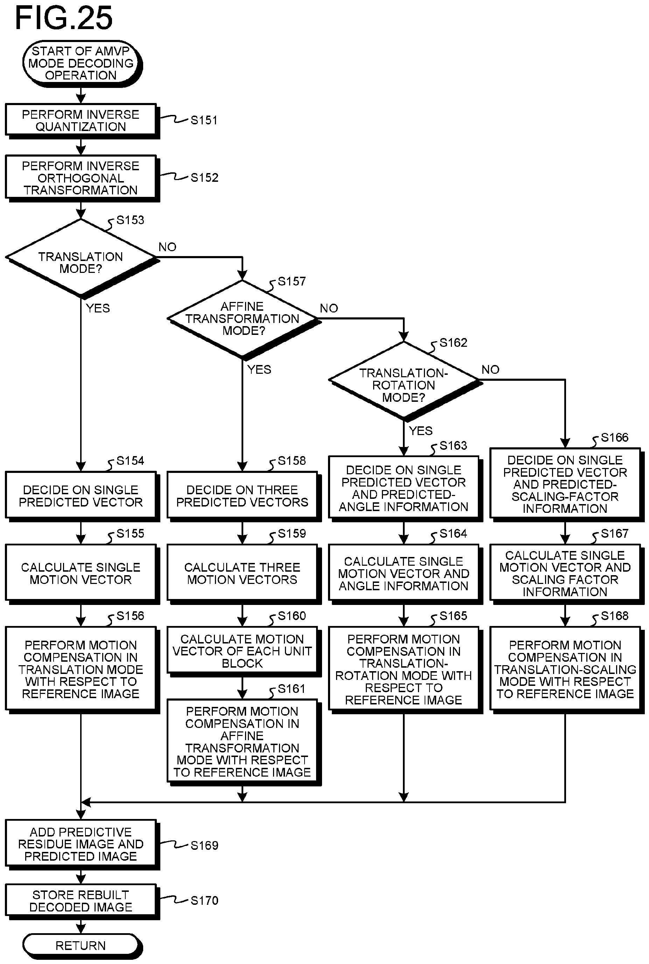

On the other hand, when the determination indicates No at Step S125, that is, when it is not determined that the merge flag is set to "1"; at Step S127, the inter-prediction unit 140 uses the predicted image P, which is generated as a result of performing the inter-prediction operation in the AMVP mode, and performs an AMVP mode decoding operation for decoding the target image for decoding. The detailed flow of the AMVP mode decoding operation is explained later with reference to FIG. 25. Once the AMVP mode decoding operation is finished, the image decoding device 100b ends the image decoding operation.

Meanwhile, when the determination indicates No at Step S124, that is, when it is determined that the inter-prediction operation is not indicated; at Step S128, the intra-prediction unit 139 uses the predicted image P, which is generated as a result of performing the intra-prediction operation, and performs an intra-decoding operation for decoding the target image for decoding. Once the intra-decoding operation is finished, the image decoding device 100b ends the image decoding operation.

(Explanation of flow of merge mode decoding operation)

Explained below with reference to FIG. 24 is the flow of the merge mode decoding operation. FIG. 24 is a flowchart for explaining an exemplary flow of operations by which the image decoding device 100b decodes video signals that have been encoded in the merge mode. In FIG. 24 is illustrated the detailed flow of operations performed at Step S126 illustrated in the flowchart in FIG. 23.

At Step S129, the inverse quantization unit 133 performs inverse quantization of the quantized transform coefficient level "level" obtained at Step S122 illustrated in FIG. 23, and calculates the transformation coefficient Coeff_IQ. The operation of inverse quantization is the inverse operation of the quantization performed at Step S73 (see FIG. 17) in the image encoding operation, and is identical to the inverse quantization performed at Step S74 (see FIG. 17) in the image encoding operation.

At Step S130, the inverse orthogonal transformation unit 134 performs inverse orthogonal transformation with respect to the transformation coefficient Coeff_IQ obtained at Step S129, and generates the predictive residue image D'. The inverse orthogonal transformation is the inverse operation of the orthogonal transformation performed at Step S72 (see FIG. 17) in the image encoding operation, and is identical to the inverse orthogonal transformation performed at Step S75 (see FIG. 17) in the image encoding operation.

At Step S131, the inter-prediction unit 140 counts the number of appearances of the motion compensation modes in the neighboring areas (or the adjacent areas) of the CU 14 representing the target for motion prediction. That is, the inter-prediction unit 140 counts the number of neighboring areas (or the number of adjacent areas) in which each compensation mode, namely, the translation mode, the translation-rotation mode, the translation-scaling mode, and the affine transformation mode, has occurred. Then, the counting results are sent to the condition determining unit 123b.

At Step S132, the condition determining unit 123b lines up the results counted at Step S131 in order of the frequency of appearance of the motion compensation modes.

At Step S133, the condition determining unit 123b receives a signal inter_oder from the motion compensation execution control unit 123c.

At Step S134, the condition determining unit 123b determines whether the signal inter_oder is set to "0". If it is determined that the signal inter_oder is set to "0" (Yes at Step S134), then the system control proceeds to Step S138. On the other hand, if it is not determined that the signal inter_oder is set to "0" (No at Step S134), then the system control proceeds to Step S135.

When the determination indicates Yes at Step S134; at Step S138, the motion compensation execution control unit 123c sets the motion compensation mode having the highest frequency of appearance, from among the motion compensation modes that have appeared in the neighboring areas (or the adjacent areas) of the CU 14, as the motion compensation mode corresponding to the rank 1, that is, as the compensation mode to be applied to the CU 14 representing the target for motion prediction. Then, the motion compensation execution control unit 123c makes the motion detecting unit 122a perform motion compensation with respect to the CU 14 in the motion compensation mode set at Step S138, and generates the predicted image P. Then, the system control proceeds to Step S141.

On the other hand, when the determination indicates No at Step S134; at Step S135, the condition determining unit 123b determines whether the signal inter_oder is set to "1". If it is determined that the signal inter_oder is set to "1" (Yes at Step S135), then the system control proceeds to Step S139. However, if it is not determined that the signal inter_oder is set to "1" (No at Step S135), then the system control proceeds to Step S136.

When the determination indicates Yes at Step S135; at Step S139, the motion compensation execution control unit 123c sets the motion compensation mode having the second highest frequency of appearance, from among the motion compensation modes that have appeared in the neighboring areas (or the adjacent areas) of the CU 14, as the motion compensation mode corresponding to the rank 2, that is, the motion compensation mode to be applied to the CU 14 representing the target for motion prediction. Then, the motion compensation execution control unit 123c makes the motion detecting unit 122a perform motion compensation with respect to the CU 14 in the motion compensation mode set at Step S139, and generates the predicted image P. Then, the system control proceeds to Step S141.

Meanwhile, when the determination indicates No at Step S135; at Step S136, the condition determining unit 123b determines whether the signal inter_oder is set to "2". If it is determined that the signal inter_oder is set to "2" (Yes at Step S136), then the system control proceeds to Step S140. On the other hand, if it is not determined that the signal inter_oder is set to "2" (No at Step S136), then the system control proceeds to Step S137.

When the determination indicates Yes at Step S136; at Step S140, the motion compensation execution control unit 123c sets the motion compensation mode having the third highest frequency of appearance, from among the motion compensation modes that have appeared in the neighboring areas (or the adjacent areas) of the CU 14, as the motion compensation mode corresponding to the rank 3, that is, as the compensation mode to be applied to the CU 14 representing the target for motion prediction. Then, the motion compensation execution control unit 123c makes the motion detecting unit 122a perform motion compensation with respect to the CU 14 in the motion compensation mode set at Step S140, and generates the predicted image P. Then, the system control proceeds to Step S141.

Meanwhile, when the determination indicates No at Step S136; at Step S137, the motion compensation execution control unit 123c sets the motion compensation mode having the fourth highest frequency of appearance, from among the motion compensation modes that have appeared in the neighboring areas (or the adjacent areas) of the CU 14, as the motion compensation mode corresponding to the rank 4, that is, as the compensation mode to be applied to the CU 14 representing the target for motion prediction. Then, the motion compensation execution control unit 123c makes the motion detecting unit 122a perform motion compensation with respect to the CU 14 in the motion compensation mode set at Step S137, and generates the predicted image P. Then, the system control proceeds to Step S141.

At Step S141, the arithmetic unit 135 adds the predictive residue image D', which is generated at Step S130, and the predicted image P, which is received from the inter-prediction unit 140 via the selecting unit 137; and generates the local decoded image Rec. Then, the arithmetic unit 135 rebuilds the decoded image for each picture unit using the local decoded image Rec and outputs the rebuilt decoded image as video signals to the outside of the image decoding device 100b. Moreover, the arithmetic unit 135 sends the local decoded image Rec to the frame memory 138.

At Step S142, the frame memory 138 rebuilds the decoded image for each picture unit using the local decoded image Rec, and stores the rebuilt decoded image in an internal buffer. Then, the system control returns to the flowchart illustrated in FIG. 23, and the image decoding device 100b ends the decoding operation.

(Explanation of flow of AMVP decoding operation)

Explained below with reference to FIG. 25 is the flow of the AMVP mode decoding operation. FIG. 25 is a flowchart for explaining an exemplary flow of operations by which the image decoding device 100b decodes video signals that have been encoded in the AMVP mode. In FIG. 25 is illustrated the detailed flow of operations performed at Step S127 illustrated in the flowchart in FIG. 23.

The operations performed at Steps S151 and S152 are identical to the operations performed at Steps S129 and S130, respectively, illustrated in FIG. 24.

From Step S153 to Step S168, the predicted vector in each CU is decided based on the motion compensation mode determined by the condition determining unit 122b. Moreover, the predicted vector, the motion vector, the angle information, and the scaling information that are required in motion compensation are calculated according to the motion compensation mode. Then, based on the motion vector, the angle information, and the scaling information that are calculated; the motion compensation execution control unit 123c makes the motion detecting unit 122a perform motion compensation in each CU. This sequence of operations is identical to the prediction operation (see FIG. 16) performed by the image encoding device 100a. Thus, with reference to FIG. 16, only the flow of operations is explained in brief.

At Step S153, the condition determining unit 122b determines whether the motion compensation mode is set to the translation mode (corresponding step to Step S51). Moreover, at Step S157, the condition determining unit 122b determines whether the motion compensation mode is set to the affine transformation mode (corresponding step to Step S55). Furthermore, at Step S162, the condition determining unit 122b determines whether the motion compensation mode is set to the translation-rotation mode (corresponding step to Step S60).

When it is determined that the motion compensation mode is set to the translation mode (Yes at Step S153), a single predicted vector is decided at Step S154 (corresponding step to Step S52), and a single motion vector is calculated at Step S155 (corresponding step to Step S53). Moreover, at Step S156, motion compensation is performed in the translation mode and the predicted image P is generated (corresponding step to Step S54).

When it is determined that the motion compensation mode is set to the affine transformation mode (Yes at Step S157), a single predicted vector is decided at Step S158 (corresponding step to Step S56), and three motion vectors are calculated at Step S159 (corresponding step to Step S57). Moreover, at Step S160, the motion vector of each unit block is calculated (corresponding step to Step S58); and, at Step S161, motion compensation is performed in the affine transformation mode and the predicted image P is generated (corresponding step to Step S59).

When it is determined that the motion compensation mode is set to the translation-rotation mode (Yes at Step S162), a single predicted vector is decided at Step S163 (corresponding step to Step S61), and a single motion vector and angle information is calculated at Step S164 (corresponding step to Step S62). Moreover, at Step S165, motion compensation is performed in the translation-rotation mode and the predicted image P is generated (corresponding step to Step S63).

When it is determined that the motion compensation mode is set to the translation-scaling mode (No at Step S162), a single predicted vector is decided at Step S166 (corresponding step to Step S64), and a single motion vector and scaling information is calculated at Step S167 (corresponding step to Step S65). Moreover, at Step S168, motion compensation is performed in the translation-scaling mode and the predicted image P is generated (corresponding step to Step S66).

Subsequently, at Step S169, the predicted image P and the predictive residue image D' generated at Step S152 are added. That is identical to the operation performed at Step S141 (see FIG. 24) in the decoding operation.

At Step S170, the frame memory 138 rebuilds the decoded image for each picture unit using the local decoded image Rec received from the arithmetic unit 135, and stores the rebuilt decoded image in an internal buffer. That is identical to the operation performed at Step S142 (see FIG. 24) in the decoding operation. After the operation at Step S142 is performed, the system control returns to the flowchart illustrated in FIG. 23, and the image decoding device 100b ends the decoding operation.

(Effects of fourth embodiment)

In this way, according to the fourth embodiment, in the image decoding device 100b, at the time of decoding encoded video signals that were encoded in the merge mode, motion compensation mode is decided based on the signal inter_order that indicates the motion compensation mode and that is received from the image encoding device 100a. As a result, the motion compensation mode can be decided in a prompt manner.

<Fifth embodiment>

(Explanation of flow of decoding operation according to CU size)

In the application concerned, the explanation is given for an example in which the image decoding device 100b performs the decoding operation for decoding the encoded video signals with respect to which the image encoding device 100a has performed the inter-prediction operation and the encoding operation in the motion compensation mode corresponding to the CU size. That is, the condition determining unit 122b determines the size of the CU set at the time of encoding; and, based on the determination result of the condition determining unit 122b, the motion compensation execution control unit 122c makes the motion detecting unit 122a skip predetermined motion compensation modes.

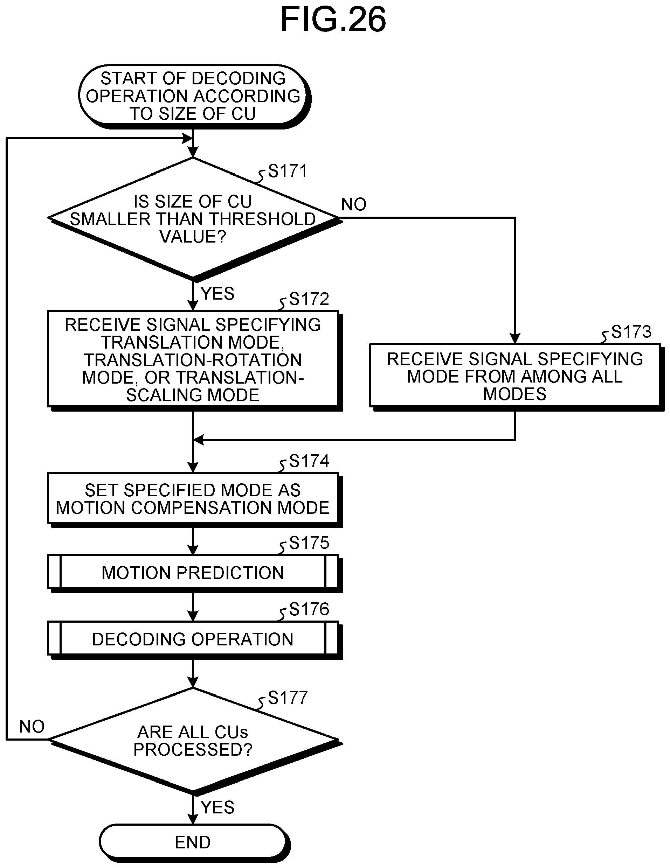

FIG. 26 is a flowchart for explaining an exemplary flow of operations by which the image decoding device 100b sets the motion compensation mode according to the size of the CU and performs the decoding operation.

At Step S171, the condition determining unit 122b determines whether the size of the CU, which represents the target for decoding, is smaller than a threshold value. At Step S171, if it is determined that the size of the CU is smaller than the threshold value (Yes at Step S171), then the system control proceeds to Step S172. On the other hand, if it is not determined that the size of the CU is smaller than the threshold value (No at Step S171), then the system control proceeds to Step S173. Herein, the threshold value for the size of the CU is set to, for example, hw=$32\times32$=1024.

When the determination indicates Yes at Step S171, that is, when it is determined that the size of the CU is smaller than the threshold value; at Step S172, the motion detecting unit 122a receives, from the motion compensation execution control unit 122c, the signal inter_mode that specifies the translation mode, the translation-rotation mode, or the translation-scaling mode. Regarding the signal inter_mode received at Step S172, when the image encoding device 100a performs the encoding operation illustrated in FIG. 20, the signal inter_mode specifies the motion compensation mode set at Step S104. Once the signal inter_mode is received, the system control proceeds to Step S174.

Meanwhile, when the determination indicates No at Step S171; at Step S173, the motion detecting unit 122a receives, from the motion compensation execution control unit 122c, the signal inter_mode that specifies the motion compensation mode from among all motion compensation modes, namely, the translation mode, the translation-rotation mode, the translation-scaling mode, and the affine transformation mode. Regarding the signal inter_mode received at Step S173, when the image encoding device 100a performs the encoding operation illustrated in FIG. 20, the signal inter_mode specifies the motion compensation mode set at Step S106. Once the signal inter_mode is received, the system control proceeds to Step S174.

At Step S174, the motion compensation execution control unit 122c sets, as the motion compensation mode, the motion compensation mode specified in the signal inter_mode received at Step S172 or Step S173.

At Step S175, the motion compensation execution control unit 122c makes the motion detecting unit 122a perform motion prediction in the motion compensation mode specified at Step S174. The motion prediction operation is identical to the operations performed from Step S51 to Step S66 illustrated in FIG. 16.

At Step S176, the image decoding device 100b performs the decoding operation, which is identical to the operations performed from Step S122 to Step S128 illustrated in FIG. 23.

At Step S177, the condition determining unit 122b determines whether the decoding operation has been performed with respect to all CUs in the target image for decoding. At Step S177, if it is determined that the decoding operation has been performed with respect to all CUs in the image (Yes at Step S177), then the image decoding device 100b ends the decoding operation. On the other hand, at Step S177, if it is not determined that the decoding operation has been performed with respect to all CUs in the image (No at Step S177), then the system control returns to Step S171 and the operations from Step S171 to Step S177 are performed with respect to the next CU.

(Effects of fifth embodiment)

In this way, according to a fifth embodiment, at the time of decoding the encoded video signals with respect to which the image encoding device 100a has performed motion compensation in the motion compensation mode corresponding to the size of the CU, the image decoding device 100b performs motion compensation in the motion compensation mode corresponding to the size of the CU. As a result, the motion compensation mode can be decided in a prompt manner.

<Sixth embodiment>

(Explanation of flow of decoding operation according to QP value)

In the application concerned, the explanation is given for an example in which the image decoding device 100b performs the decoding operation for decoding the encoded video signals with respect to which the image encoding device 100a has performed the inter-prediction operation and the encoding operation in the motion compensation mode corresponding to the QP value. That is, the condition determining unit 122b determines the QP value set at the time of encoding; and, based on the determination result of the condition determining unit 122b, the motion compensation execution control unit 122c makes the motion detecting unit 122a skip predetermined motion compensation modes.

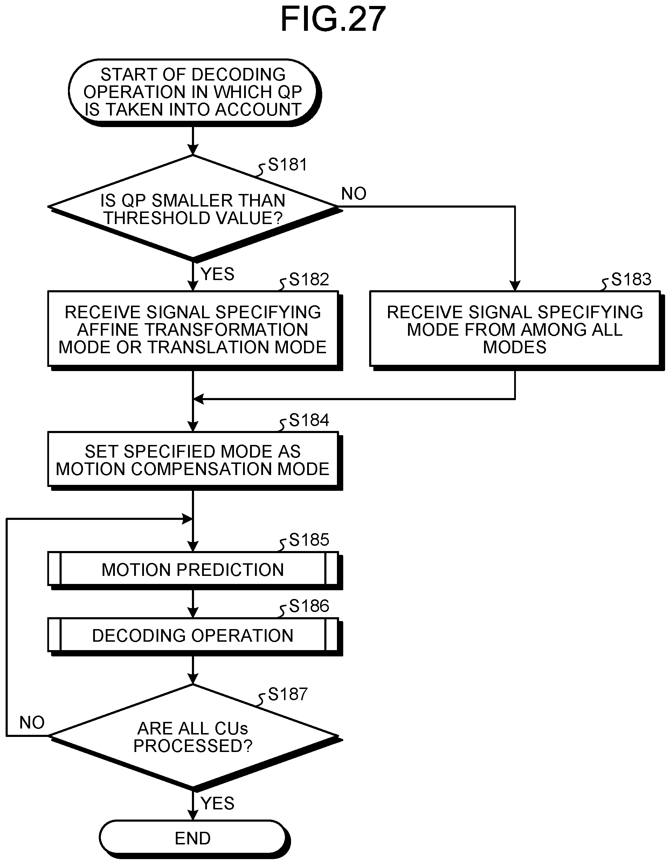

FIG. 27 is a flowchart for explaining an exemplary flow of operations by which the image decoding device 100b sets the motion compensation mode corresponding to the QP value and performs the decoding operation.

At Step S181, the condition determining unit 122b determines whether the QP value used during the encoding operation is smaller than a threshold value. At Step S181, if it is determined that the QP value is smaller than the threshold value (Yes at Step S181), then the system control proceeds to Step S182. On the other hand, if it is not determined that the QP value is smaller than the threshold value (No at Step S111), then the system control proceeds to Step S183. Meanwhile, the threshold value for the QP value is set to, for example, QP=30.

When the determination indicates Yes at Step S181; at Step S182, the motion detecting unit 122a receives, from the motion compensation execution control unit 122c, the signal inter_mode that specifies the affine transformation mode or the translation mode. Regarding the signal inter_mode received at Step S182, when the image encoding device 100a performs the encoding operation illustrated in FIG. 21, the signal inter_mode specifies the motion compensation mode set at Step S115 or Step S116. Once, the signal inter_mode is received, the system control proceeds to Step S184.

On the other hand, when the determination indicates No at Step S181; at Step S183, the motion detecting unit 122a receives, from the motion compensation execution control unit 122c, the signal inter_mode that specifies the motion compensation mode from among all motion compensation modes, namely, the translation mode, the translation-rotation mode, the translation-scaling mode, and the affine transformation mode. Regarding the signal inter_mode received at Step S183, when the image encoding device 100a performs the encoding operation illustrated in FIG. 21, the signal inter_mode specifies the motion compensation mode set at Step S118. Once the signal inter_mode is received, the system control proceeds to Step S184.

At Step S184, the motion compensation execution control unit 122c sets, as the motion compensation mode, the motion compensation mode specified in the signal inter_mode received at Step S182 or Step S183.

At Step S185, the motion compensation execution control unit 122c makes the motion detecting unit 122a perform motion prediction in the motion compensation mode specified at Step S184. The motion prediction operation is identical to the operations performed from Step S51 to Step S66 illustrated in FIG. 16.

At Step S186, the image decoding device 100b performs the decoding operation, which is identical to the operations performed from Step S122 to Step S128 illustrated in FIG. 23.

At Step S187, the condition determining unit 122b determines whether the decoding operation has been performed with respect to all CUs in the target image for decoding. At Step S187, if it is determined that the decoding operation has been performed with respect to all CUs in the image (Yes at Step S187), then the image decoding device 100b ends the decoding operation. On the other hand, at Step S187, if it is not determined that the decoding operation has been performed with respect to all CUs in the image (No at Step S187), then the system control returns to Step S185 and the operations from Step S185 to Step S187 are performed with respect to the next CU.

(Effects of sixth embodiment)

In this way, according to the sixth embodiment, at the time of decoding the encoded video signals with respect to which the image encoding device 100a has performed motion compensation in the motion compensation mode corresponding to the QP value, the image decoding device 100b performs motion compensation in the motion compensation mode corresponding to the QP value. As a result, the motion compensation mode can be decided in a prompt manner.

<Explanation of computer in which application concerned is applied>

The series of operations explained above can be performed using hardware or using software. In the case of performing the series of operations using software, programs constituting that software are installed in a computer. The computer can be a computer having dedicated hardware embedded therein or can be, for example, a general-purpose personal computer in which various programs are installed so to enable implementation of various functions.

FIG. 28 is a block diagram illustrating an exemplary hardware configuration of a computer in which the abovementioned sequence of operations is implemented using programs.

In a computer 800; the CPU (Central Processing Unit) 801, the ROM (Read Only Memory) 802, and the RAM (Random Access Memory) 803 are connected to each other by a bus 804.

Moreover, to the bus 804 is connected an input-output interface 810. To the input-output interface 810 are further connected an input unit 811, an output unit 812, a memory unit 813, a communication unit 814, and a drive 815.

The input unit 811 is configured with a keyboard, a mouse, and a microphone. The output unit 812 is configured with a display and a speaker. The memory unit 813 is configured with a hard disk and a nonvolatile memory. The communication unit 814 is configured with a network interface. The drive 815 drives a removable media 821 such as a magnetic disk, an optical disk, a magnetooptical disk, or a semiconductor memory.

In the computer 800 configured in the abovementioned manner, for example, the CPU 801 loads the programs, which are stored in the memory unit 813, in the RAM 803 via the input-output interface 810 and the bus 804, and executes the programs; so that the abovementioned series of operations is carried out.

The programs executed by the computer 800 (the CPU 801) can be recorded in, for example, the removable media 821 serving as a package media. Alternatively, the programs can be provided via a wired transmission medium or a wireless transmission medium such as a local area network, the Internet, or a digital satellite broadcast.

In the computer 800, the removable media 821 can be inserted in the drive 815, and the programs can be installed in the memory unit 813 via the input-output interface 810. Alternatively, the communication unit 814 can receive the programs via a wired transmission medium or a wireless transmission medium, and then the programs can be installed in the memory unit 813. Still alternatively, the programs can be installed in advance in the ROM 802 or the memory unit 813.

The programs executed by the computer 800 can be such that either the operations are performed in chronological order according to the order explained in the present written description, or the operations are performed in parallel, or the operations are performed at necessary timings such as at the timings of calling the respective programs.

<Explanation of television device in which application concerned is applied>

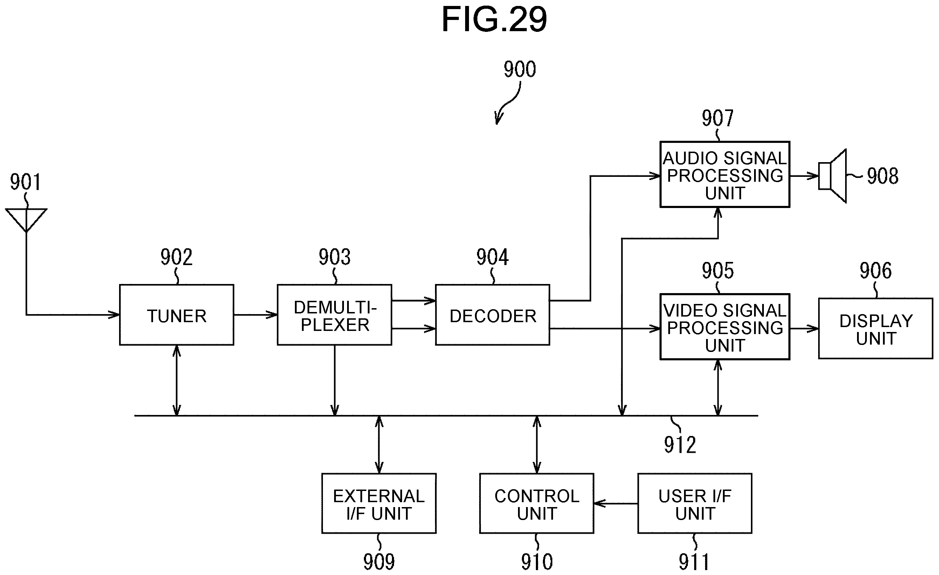

FIG. 29 is a block diagram illustrating an exemplary schematic configuration of a television device in which the embodiments described above are applied. A television device 900 includes an antenna 901, a tuner 902, a demultiplexer 903, a decoder 904, a video signal processing unit 905, a display unit 906, an audio signal processing unit 907, a speaker 908, an external interface (I/F) unit 909, a control unit 910, a user interface (I/F) unit 911, and a bus 912.

The tuner 902 extracts the signals of the desired channel from the broadcasting signals received via the antenna 901, and demodulates the extracted signals. Then, the tuner 902 outputs an encoded bit stream, which is obtained as a result of demodulation, to the demultiplexer 903. That is, the tuner 902 fulfils the role of a transmitting unit in the television device 900 for receiving encoded streams obtained by encoding the images.

From the encoded bit stream, the demultiplexer 903 separates the video stream and the audio stream of the television program to be watched, and outputs the separated streams to the decoder 904. Moreover, the demultiplexer 903 extracts auxiliary data such an EPG (Electronic Program Guide) from the encoded bit stream, and sends the extracted data to the control unit 910. Meanwhile, if the encoded bit stream is in the scrambled state, then the demultiplexer 903 can perform descrambling.

The decoder 904 decodes the video stream and the audio stream that are input from the demultiplexer 903. Then, the decoder 904 outputs the video data, which is generated as a result of the decoding operation, to the video signal processing unit 905. Moreover, the decoder 904 outputs the audio data, which is generated as a result of the decoding operation, to the audio signal processing unit 907.

The video signal processing unit 905 reproduces the video data that is input from the decoder 904, and displays a video in the display unit 906. Moreover, the video signal processing unit 905 can also display application screens, which are received via a network, in the display unit 906. Furthermore, depending on the settings, the video signal processing unit 905 can perform additional operations such as noise removal with respect to the video data. Moreover, the video signal processing unit 905 can generate GUI (Graphical User Interface) images of menus, buttons, and a cursor, and superimpose the generated images onto the output image.

The display unit 906 is driven by the driving signals received from the video signal processing unit 905, and displays videos or images on a video screen of a display device (for example, a liquid crystal display, a plasma display, or an OELD (Organic Electro Luminescence Display (organic EL display)).

The audio signal processing unit 907 performs reproduction operations such as DA conversion and amplification with respect to the audio data input from the decoder 904, and outputs audio from the speaker 908. Moreover, the audio signal processing unit 907 can perform additional operations such as noise removal with respect to the audio data.

The external interface unit 909 is an interface for establishing connection of the television device 900 with external devices or networks. For example, the video streams or the audio streams that are received via the external interface unit 909 can be decoded by the decoder 904. That is, the external interface unit 909 too fulfils the role of a transmitting unit in the television device 900 for receiving encoded streams in which images are encoded.

The control unit 910 includes a processor such as a CPU, and includes memories such as a RAM and a ROM. The memories are used to store programs to be executed by the CPU, and to store program data, EPG data, and data obtained via the network. For example, at the time of booting of the television device 900, the CPU reads the programs stored in the memories and executes them. As a result of executing the programs, the CPU controls the operations of the television device 900 according to, for example, operation signals input from the user interface unit 911.

The user interface unit 911 is connected to the control unit 910. For example, the user interface unit 911 includes buttons and switches for enabling the user to operate the television device 900, and includes a receiving unit for remote control signals. Thus, via such constituent elements, the user interface unit 911 detects user operations and generates operation signals, and outputs the generated operation signals to the control unit 910.

The bus 912 connects the tuner 902, the demultiplexer 903, the decoder 904, the video signal processing unit 905, the audio signal processing unit 907, the external interface unit 909, and the control unit 910.

In the television device 900 configured in the abovementioned manner, the decoder 904 can be equipped with the functions of the image decoding device 100b. That is, the decoder 904 can be configured to decode the encoded data according to the methods explained in the embodiments. As a result, the television device 900 enables achieving the effects identical to the effects achieved in the embodiments.

Moreover, in the television device 900 configured in the abovementioned manner, the video signal processing unit 905 can be configured to, for example, encode the image data received from the decoder 904 and to output the encoded data to the outside of the television device 900 via the external interface unit 909. Moreover, the video signal processing unit 905 can be equipped with the functions of the image encoding device 100a. That is, the video signal processing unit 905 can be configured to encode the image data, which is received from the decoder 904, according to the methods explained in the embodiments. As a result, the television device 900 enables achieving the effects identical to the effects achieved in the embodiments.

<Explanation of cellular phone in which application concerned is applied>

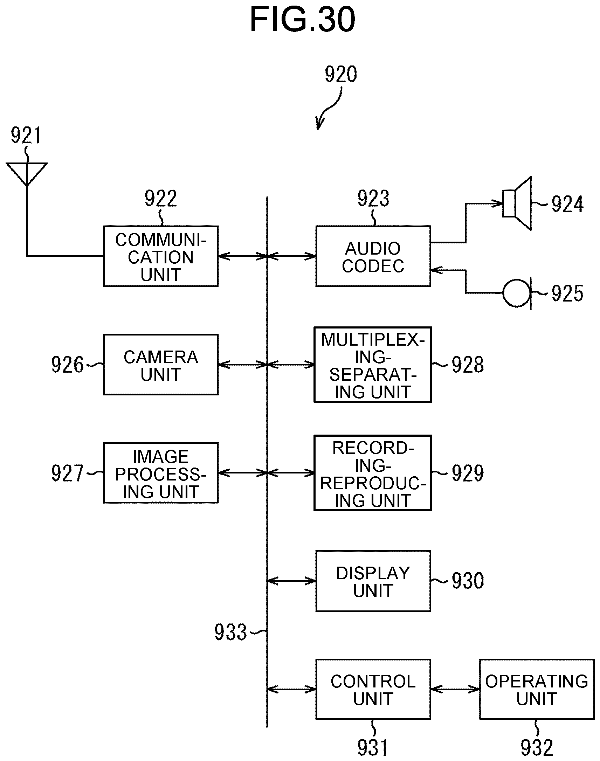

FIG. 30 is a block diagram illustrating an exemplary schematic configuration of a cellular phone in which the embodiments described above are applied. A cellular phone 920 includes an antenna 921, a communication unit 922, an audio codec 923, a speaker 924, a microphone 925, a camera unit 926, an image processing unit 927, a multiplexing-separating unit 928, a recording-reproducing unit 929, a display unit 930, a control unit 931, an operating unit 932, and a bus 933.

The antenna 921 is connected to the communication unit 922. The speaker 924 and the microphone 925 are connected to the audio codec 923. The operating unit 932 is connected to the control unit 931. The bus 933 is used to connect the communication unit 922, the audio codec 923, the camera unit 926, the image processing unit 927, the multiplexing-separating unit 928, the recording-reproducing unit 929, the display unit 930, and the control unit 931 to each other.

The cellular phone 920 operates in various operation modes including a voice calling mode, a data communication mode, a photographing mode, and a televisionphone mode; and performs operations such as transmission and reception of audio signals, transmission and reception of electronic mails and image data, and taking images and recording data.

In the voice calling mode, analog audio signals generated in the microphone 925 are sent to the audio codec 923. The audio codec 923 converts the analog audio signals into audio data; performs AD conversion of the audio data; and compresses the digital audio data. Then, the audio codec 923 outputs the compressed audio data to the communication unit 922. The communication unit 922 performs encoding and modulation of the audio data and generates transmission signals. Then, the communication unit 922 sends the transmission signals to a base station (not illustrated) via the antenna 921. Moreover, the communication unit 922 performs amplification and frequency conversion of radio signals received via the antenna 921, and obtains received signals. Then, the communication unit 922 performs demodulation and decoding of the received signals and generates audio data, and outputs the generated audio data to the audio codec 923. The audio codec 923 expands the audio data and performs DA conversion to generate analog audio signals. Then, the audio codec 923 sends the audio signals to the speaker 924, so that an audio is output from the speaker 924.

In the data communication mode, for example, according to a user operation performed using the operating unit 932, the control unit 931 generates character data that constitutes an electronic mail. Moreover, the control unit 931 displays the characters in the display unit 930. Furthermore, in response to a transmission instruction issued by the user via the operating unit 932, the control unit 931 generates electronic mail data and outputs it to the communication unit 922. The communication unit 922 performs encoding and modulation of the electronic mail data and generates transmission signals. Then, the communication unit 922 sends the transmission signals to the base station (not illustrated) via the antenna 921. Moreover, the communication unit 922 performs amplification and frequency conversion of radio signals received via the antenna 921, and obtains received signals. Then, the communication unit 922 performs demodulation and decoding of the received signals and generates audio data so as to restore the electronic mail data, and outputs the restored electronic mail data to the control unit 931. The control unit 931 displays the contents of the electronic mail in the display unit 930, and sends the electronic mail data to the recording-reproducing unit 929 in which the electronic mail data is written in a memory medium.

The recording-reproducing unit 929 includes an arbitrary readable-writable memory medium. For example, the memory medium can be an embedded memory medium such as a RAM or a flash memory; or can be an externally-attachable memory medium such as a hard disk, a magnetic disk, a magneto-optical disk, an optical disk, a USB (Universal Serial Bus) memory, or a memory card.

In the photographing mode, for example, the camera unit 926 takes an image of a photographic subject and generates image data, and outputs the image data to the image processing unit 927. Then, the image processing unit 927 encodes the image data input from the camera unit 926 and sends an encoded stream to the recording-reproducing unit 929 in which the encoded stream is written in the memory medium.

In the image display mode, the recording-reproducing unit 929 reads the encoded stream recorded in the memory medium and outputs it to the image processing unit 927. The image processing unit 927 decodes the encoded stream that is input from the recording-reproducing unit 929, and sends image data to the display unit 930 for displaying the image.

In the television-phone mode, for example, the multiplexing-separating unit 928 multiplexes a video stream, which has been decoded by the image processing unit 927, and an audio stream, which has been compressed by the audio codec 923; and outputs the multiplexed stream to the communication unit 922. The communication unit 922 performs encoding and modulation of the stream and generates transmission signals. Then, the communication unit 922 sends the transmission signals to a base station (not illustrated) via the antenna 921. Moreover, the communication unit 922 performs amplification and frequency conversion of radio signals received via the antenna 921, and obtains received signals. The transmission signals and the received signals can include an encoded bit stream. Then, the communication unit 922 performs demodulation and decoding of the received signals to restore the stream, and outputs the restored stream to the multiplexing-separating unit 928. The multiplexing-separating unit 928 separates the video stream and the audio stream from the input stream; outputs the video stream to the image processing unit 927; and outputs the audio stream to the audio codec 923. The image processing unit 927 decodes the video stream and generates video data. Then, the video data is sent to the display unit 930, so that a series of images is displayed in the display unit 930. The audio codec 923 expands the audio stream and performs DA conversion to generate analog audio signals. Then, the audio codec 923 sends the audio signals to the speaker 924, so that an audio is output from the speaker 924.

In the cellular phone 920 configured in the abovementioned manner, for example, the image processing unit 927 can be equipped with the functions of the image encoding device 100a. That is, the image processing unit 927 can be configured to encode the image data according to the methods explained in the embodiments. As a result, the cellular phone 920 enables achieving the effects identical to the effects achieved in the embodiments.

Moreover, in the cellular phone 920 configured in the abovementioned manner, for example, the image processing unit 927 can be equipped with the functions of the image decoding device 100b. That is, the image processing unit 927 can be configured to decode the encoded data according to the methods explained in the embodiments. As a result, the cellular phone 920 enables achieving the effects identical to the effects achieved in the embodiments.

<Explanation of recording-reproducing device in which application concerned is applied>

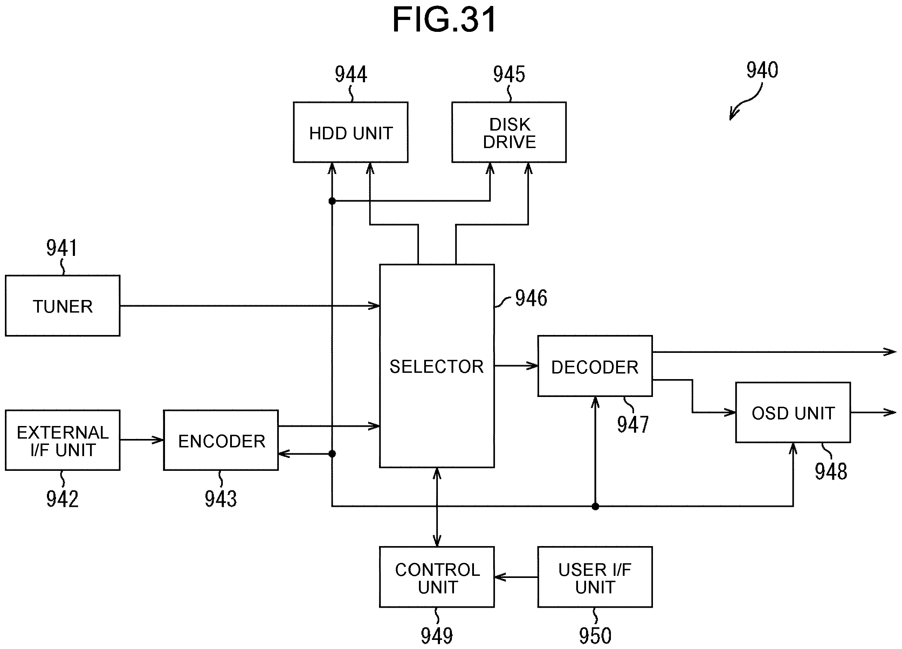

FIG. 31 is a block diagram illustrating an exemplary schematic configuration of a recording-reproducing device in which the embodiments described above are applied. A recording-reproducing device 940 encodes audio data and video data of, for example, a received feed; and records the encoded data in a recording medium. Moreover, the recording-reproducing device 940 can encode audio data and video data obtained from, for example, other devices; and record the encoded data in a recording medium.

Furthermore, for example, in response to a user instruction, the recording-reproducing device 940 reproduces the data, which is recorded in the recording medium, using a monitor and a speaker. At that time, the recording-reproducing device 940 decodes the audio data and the video data.

The recording-reproducing device 940 includes a tuner 941, an external interface (I/F) unit 942, an encoder 943, an HDD (Hard Disk Drive) unit 944, a disk drive 945, a selector 946, a decoder 947, an OSD (On-Screen Display) unit 948, a control unit 949, and a user interface (I/F) unit 950.

The tuner 941 extracts the signals of the desired channel from the broadcast signals received via an antenna (not illustrated), and demodulates the extracted signals. Then, the tuner 941 outputs an encoded bit stream, which is obtained as a result of demodulation, to the selector 946. That is, the tuner 941 fulfils the role of a transmission unit in the recording-reproducing device 940.

The external interface unit 942 is an interface for connecting the recording-reproducing device 940 to external devices or a network. Examples of the external interface unit 942 include an IEEE (Institute of Electrical and Electronic Engineers) 1394 interface, a network interface, a USB interface, and a flash memory interface. For example, the video data and the audio data received via the external interface unit 942 is input to the encoder 943. That is, the external interface unit 942 fulfils the role of a transmitting unit in the recording-reproducing device 940.

When the video data and the audio data input from the external interface unit 942 is not encoded, the encoder 943 encodes the video data and the audio data. Then, the encoder 943 outputs the encoded bit stream to the selector 946.

The HDD unit 944 records, in an internal hard disk, the encoded bit stream, which has the content data of videos and audios in a compressed form, along with various programs and other data. Moreover, the HDD unit 944 reads the data from a hard disk at the time of reproduction of videos and audios.

The disk drive 945 records data in and reads data from a recording medium inserted therein. Examples of the recording medium inserted in the disk drive 945 include a DVD (Digital Versatile Disc) (DVD-Video, DVD-RAM (DVD-Random Access Memory), DVD-R (DVD-Recordable), DVD-RW (DVD-Rewritable), DVD+R (DVD+Recordable), or DVD+RW (DVD+Rewritable)) and a Blu-ray (registered trademark) disc.

The selector 946 selects, at the time of recording videos and audios, the encoded bit stream input from the tuner 941 or the encoder 943; and outputs the selected bit stream to the HDD unit 944 or the disk drive 945. Moreover, at the time of reproducing videos and audios, the selector 946 outputs the encoded bit stream, which is input from the HDD unit 944 or the disk drive 945, to the decoder 947.

The decoder 947 decodes the encoded bit stream, and generates video data and audio data. Then, the decoder 947 outputs the video data to the OSD unit 948. Moreover, the decoder 947 outputs the audio data to an external speaker.

The OSD unit 948 generates video data input from the decoder 947 and displays videos. Moreover, the OSD unit 948 can superimpose, on the displayed video, GUI images of, for example, a menu, buttons, or a cursor.

The control unit 949 includes a processor such as a CPU, and includes memories such as a RAM and a ROM. The memories are used to store programs to be executed by the CPU, and to store program data. For example, at the time of booting of the recording-reproducing device 940, the CPU reads the programs stored in the memories and executes them. As a result of executing the programs, the CPU controls the operations of the recording-reproducing device 940 according to, for example, operation signals input from the user interface unit 950.

The user interface unit 950 is connected to the control unit 949. For example, the user interface unit 950 includes buttons and switches for enabling the user to operate the recording-reproducing device 940, and includes a receiving unit for remote control signals. Thus, the user interface unit 950 detects user operations via such constituent elements. Then, the user interface unit 950 generates operation signals corresponding to user operations, and outputs the operation signals to the control unit 949.

In the recording-reproducing device 940 configured in the abovementioned manner, for example, the encoder 943 can be equipped with the functions of the image encoding device 100a. That is, the encoder 943 can be configured to encode the image data according to the methods explained in the embodiments. As a result, the recording-reproducing device 940 enables achieving the effects identical to the effects achieved in the embodiments.

Moreover, in the recording-reproducing device 940 configured in the abovementioned manner, for example, the decoder 947 can be equipped with the functions of the image decoding device 100b. That is, the decoder 947 can be configured to decode the encoded data according to the methods explained in the embodiments. As a result, the recording-reproducing device 940 enables achieving the effects identical to the effects achieved in the embodiments.

<Explanation of imaging device in which application concerned is applied>

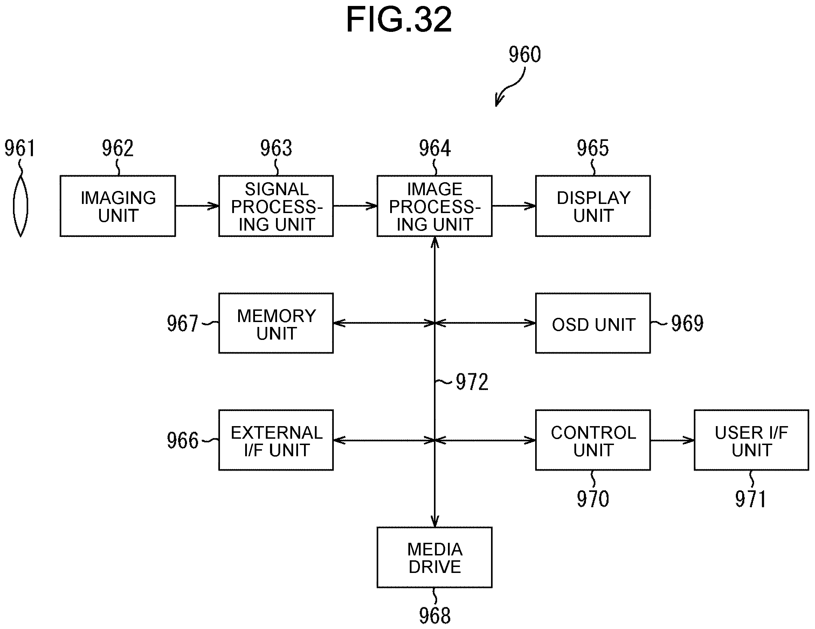

FIG. 32 is a block diagram illustrating an exemplary schematic configuration of an imaging device in which the embodiments described above are applied. An imaging device 960 performs imaging of a photographic subject, generates images, encodes image data, and stores the encoded image data in a recording medium.

The imaging device 960 includes an optical block 961, an imaging unit 962, a signal processing unit 963, an image processing unit 964, a display unit 965, an external interface (I/F) unit 966, a memory unit 967, a media drive 968, an OSD unit 969, a control unit 970, a user interface (I/F) unit 971, and a bus 972.

The optical block 961 is connected to the imaging unit 962. The imaging unit 962 is further connected to the signal processing unit 963. The display unit 965 is connected to the image processing unit 964. The user interface unit 971 is connected to the control unit 970. The bus 972 is used to connect the image processing unit 964, the external interface unit 966, the memory unit 967, the media drive 968, the OSD unit 969, and the control unit 970 to each other.

The optical block 961 includes a focusing lens and an aperture mechanism. The optical block 961 performs image formation of an optical image of the photographic subject on the imaging surface of the imaging unit 962. The imaging unit 962 includes an image sensor such as a CCD (Charge Coupled Device) or a CMOS (Complementary Metal Oxide Semiconductor); and performs photoelectric conversion of the optical image, which is formed in the imaging surface, and converts it into image signals representing electrical signals. Then, the imaging unit 962 outputs the image signals to the signal processing unit 963.

The signal processing unit 963 performs a variety of camera signal processing such as knee correction, gamma correction, and color correction with respect to the image signals that are input from the imaging unit 962. Then, the signal processing unit 963 outputs the post-camera-signal-processing image data to the image processing unit 964.

The image processing unit 964 encodes the image data that is input from the signal processing unit 963, and generates encoded data. Then, the image processing unit 964 outputs the encoded data to the external interface unit 966 or the media drive 968. Moreover, the image processing unit 964 decodes the encoded data that is input from the external interface unit 966 or the media drive 968, and generates image data. Then, the image processing unit 964 outputs the image data to the display unit 965. Furthermore, the image processing unit 964 can output the image data, which is input from the signal processing unit 963, to the display unit 965 for displaying images. Moreover, the image processing unit 964 can superimpose display data, which is obtained from the OSD unit 969, onto the images to be output to the display unit 965.

The OSD unit 969 generates GUI images of, for example, a menu, buttons, or a cursor; and outputs the GUI images to the image processing unit 964.

The external interface unit 966 is configured with, for example, a USB input-output terminal. For example, when an image is to be printed, the external interface unit 966 connects the imaging device 960 to a printer. Moreover, to the external interface unit 966, a drive is connected as may be necessary. In the drive, a removable media such as a magnetic disk or an optical disk is inserted, and the programs read from the removable media are installable in the imaging device 960. Furthermore, the external interface unit 966 can also be configured as a network interface connected to a network such as a LAN or the Internet. That is, the external interface unit 966 fulfils the role of a transmitting unit in the imaging device 960.

The recording medium inserted in the media drive 968 can be an arbitrary readable-writable removable media such as a magnetic disk, a magneto-optical disk, an optical disk, or a semiconductor memory. Alternatively, in the media drive 968, a recording medium can be inserted in a fixed manner so that a non-portable memory unit such as an embedded hard disk drive or an SSD (Solid State Drive) is configured.

The control unit 970 includes a processor such as a CPU, and includes memories such as a RAM and a ROM. The memories are used to store programs to be executed by the CPU, and to store program data. For example, at the time of booting of the imaging device 960, the CPU reads the programs stored in the memories and executes them. As a result of executing the programs, the CPU controls the operations of the imaging device 960 according to, for example, operation signals input from the user interface unit 971.

The user interface unit 971 is connected to the control unit 970. For example, the user interface unit 971 includes buttons and switches for enabling the user to operate the imaging device 960. Thus, the user interface unit 971 detects user operations via such constituent elements. Then, the user interface unit 971 generates operation signals corresponding to user operations, and outputs the operation signals to the control unit 970.

In the imaging device 960 configured in the abovementioned manner, for example, the image processing unit 964 can be equipped with the functions of the image encoding device 100a. That is, the image processing unit 964 can be configured to encode the image data according to the methods explained in the embodiments. As a result, the imaging device 960 enables achieving the effects identical to the effects achieved in the embodiments.

Moreover, in the imaging device 960 configured in the abovementioned manner, for example, the image processing unit 964 can be equipped with the functions of the image decoding device 100b. That is, the image processing unit 964 can be configured to decode the encoded data according to the methods explained in the embodiments. As a result, the imaging device 960 enables achieving the effects identical to the effects achieved in the embodiments.

<Explanation of video set in which application concerned is applied>

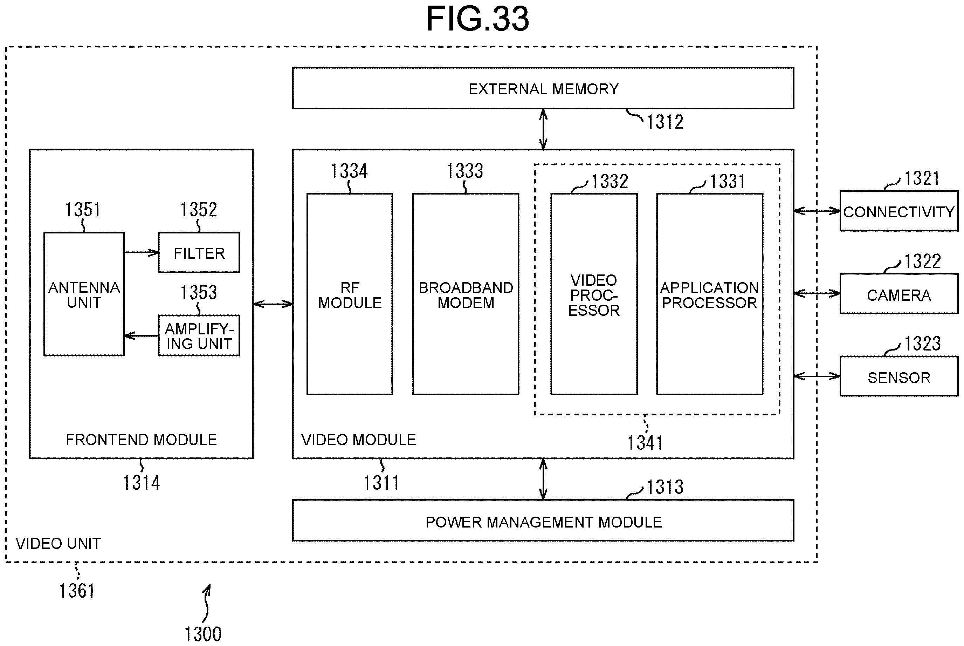

The application concerned can be implemented as any type of configuration installed in a device constituting an arbitrary device or an arbitrary system. For example, the application concerned can be implemented as a processor representing system LSI (Large Scale Integration); or as a module in which a plurality of processors is used; or as a unit in which a plurality of modules is used; or as a set configured by providing other functions to a unit (i.e., a partial configuration of a device). FIG. 33 is a block diagram illustrating an exemplary schematic configuration of a video set.

In recent years, electronic devices are getting equipped with more and more functions. In the development and manufacturing of such an electronic device, in the case of making some of the configuration available for sale or service, instead of providing the configuration with only a single function, it is often seen that a plurality of configurations having related functions is combined and a single set having a plurality of functions is provided.

A video set 1300 illustrated in FIG. 33 has such a multi-functionalized configuration in which a device having the functions related to encoding-decoding (either one of encoding and decoding, or both encoding and decoding) of images is combined with devices having other functions related to the encoding-decoding function.

As illustrated in FIG. 33, the video set 1300 includes a group of modules, namely, a video module 1311, an external memory 1312, a power management module 1313, and a frontend module 1314; and includes devices having related functions such as connectivity 1321, a camera 1322, and a sensor 1323.

A module has a collection of few mutually-related component functions, and represents a component having cohesive functions. Although a module can have a specific physical configuration of any arbitrary type, it is possible to think of a configuration in which, for example, a plurality of processors equipped with various functions; electronic circuit devices such as a resistance and a capacitor; and other devices are arranged on a wiring substrate in an integrated manner. Moreover, it is also possible to think of combining a module with other modules and processors so as to configure a new module. In the example illustrated in FIG. 33, the group of modules constitutes a video unit 1361.

In the example illustrated in FIG. 33, the video module 1311 is configured by combining configurations having functions related to image processing; and includes an application processor 1331, a video processor 1332, a broadband modem 1333, and an RF module 1334.

A processor can be configured by integrating configurations having predetermined functions on a semiconductor chip according to the SoC (System on a Chip); and, for example, sometimes also has a configuration called system LSI. A configuration having a predetermined function can be a logical circuit (a hardware configuration); or can be a CPU, a ROM, a RAM, and programs executed using them (a software configuration); or can be a combination of a hardware configuration and a software configuration. For example, a processor can include a logical circuit, a CPU, a ROM, a RAM; can have some of the functions implemented using the logical circuit (a hardware configuration); and can have the other functions implemented using programs executed by the CPU (a software configuration).

The application processor 1331 illustrated in FIG. 33 is a processor for executing applications related to image processing. The applications executed in the application processor 1331 not only can perform arithmetic processing but can also control configurations inside and outside of the video module 1311, such as the video processor 1332, as may be necessary.

The video processor 1332 is a processor having the functions related to encoding/decoding (either one or both) of images.

The broadband modem 1333 performs digital modulation of data (digital signals), which are transmitted using wired broadband communication or wireless broadband communication (or both wired broadband communication and wireless broadband communication) performed via a broadband connection such as the Internet or a public telephone network; and converts the data into analog signals. Moreover, the broadband modem 1333 demodulates the analog signals received using broadband communication, and converts the analog signals into data (digital signals). The broadband modem 1333 processes arbitrary information such as: the image data processed by the video processor 1332; streams having encoded image data; application programs; and setting data.

The RF module 1334 is a module for performing frequency conversion, modulation-demodulation, amplification, and filter processing with respect to RF (Radio Frequency) signals transmitted and received via antennas. For example, the RF module 1334 performs frequency conversion with respect to the baseband signals generated by the broadband modem 1333, and generates RD signals. Moreover, the RF module 1334 performs frequency conversion with respect to RF signals received via the frontend module 1314, and generates baseband signals.

Meanwhile, as illustrated by dotted lines 1341 in FIG. 33, the application processor 1331 and the video processor 1332 can be integrated to configure as a single processor.

The external memory 1312 is a module that is installed on the outside of the video module 1311 and that includes a memory device used by the video module 1311. The memory device in the external memory 1312 can have any arbitrary physical configuration. Since the memory device is often used in storing large-volume data such as image data in the units of frames, it is desirable to use a semiconductor memory that is low in cost but that has a large storage capacity, such as a DRAM (Dynamic Random Access Memory), as the memory device.

The power management module 1313 manages and controls the power supply to the video module 1311 (the constituent elements of the video module 1311).

The frontend module 1314 is a module for providing the frontend function (a circuit at the transmission and reception ends on the antenna side) to the RF module 1334. As illustrated in FIG. 33, the frontend module 1314 includes, for example, an antenna unit 1351, a filter 1352, and an amplifying unit 1353.

The antenna unit 1351 includes an antenna for transmitting and receiving radio signals, and includes the peripheral configuration. The antenna unit 1351 transmits, as radio signals, the signals received from the amplifying unit 1353, and sends the received radio signals as electrical signals (RF signals) to the filter 1352. The filter 1352 performs filtering with respect to the RF signals received via the antenna unit 1351, and sends the processed RF signals to the RF module 1334. The amplifying unit 1353 amplifies the RF signals, which are received from the RF module 1334, and sends the amplified RF signals to the antenna unit 1351.

The connectivity 1321 is a module having the functions related to establishing connection with the outside. The connectivity 1321 can have any arbitrary physical configuration. For example, the connectivity 1321 includes a configuration having the communication function not compatible to the communication standard to which the broadband modem 1333 is compatible, and includes an external input-output terminal.

For example, the connectivity can be configured to include a module having the communication function compatible to a wireless communication standard such as Bluetooth (registered trademark), IEEE802.11 (for example, Wi-Fi (Wireless Fidelity, registered trademark)), NFC (Near Field Communication, or IrDA (Infrared Data Association); and to include an antenna for transmitting and receiving signals compatible to that standard. Alternatively, for example, the connectivity 1321 can be configured to include a module having the communication function compatible to a wired communication standard such as the USB (Universal Serial Bus) or the HDMI (registered trademark) (High-Definition Multimedia Interface); and to include a terminal compatible to that standard. Still alternatively, for example, the connectivity 1321 can be configured to include some other data (signal) transmission function such as an analog input-output terminal.

Meanwhile, the connectivity 1321 can be configured to include the device at the transmission destination of data (signals). For example, the connectivity 1321 can be configured to include a drive for performing data reading and data writing with respect to a recording medium such as a magnetic disk, an optical disk, a magneto-optical disk, or a semiconductor memory (herein, the drive is not limited to a drive for a removable media, and also includes a hard disk, an SSD (Solid State Drive), and an NAS (Network Attached Storage). Moreover, the connectivity 1321 can be configured to include an image output device or an audio output device (a monitor or a speaker).

The camera 1322 is a module having the function of performing imaging of the photographic subject and obtaining image data thereof. The image data obtained as a result of imaging performed by the camera 1322 is sent to, for example, the video processor 1332 for encoding purposes.

The sensor 1323 is a module having an arbitrary sensor function of, for example, a voice sensor, an ultrasonic sensor, a light sensor, an illumination sensor, an infrared sensor, an image sensor, a rotation sensor, an angle sensor, an angular velocity sensor, a velocity sensor, an acceleration sensor, an inclination sensor, a magnetic sensor, or a temperature sensor. The data detected by the sensor 1323 is sent to, for example, the application processor 1331 and is used by applications.

Meanwhile, the configurations explained above as modules can be implemented as processors, and the configurations explained above as processors can be implemented as modules.

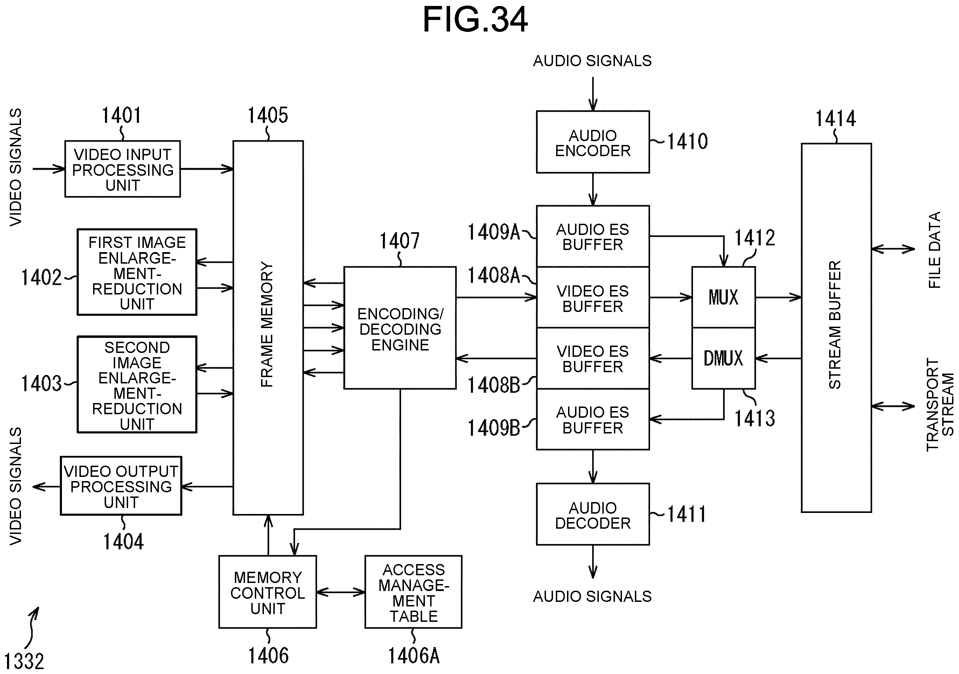

In the video set 1300 configured in the abovementioned manner, for example, as described later, the application concerned can be applied in the video processor 1332 (see FIG. 34). Hence, the video set 1300 can be implemented as a set having the application concerned implemented therein.

<Explanation of video processor in which application concerned is applied>

FIG. 34 is a block diagram illustrating an exemplary schematic configuration of the video processor 1332 (see FIG. 33) in which the application concerned is applied.

In the example illustrated in FIG. 34, the video processor 1332 has the function of receiving input of video signals and audio signals and encoding them according to a predetermined method, and has the function of decoding the encoded video data and the encoded audio data so as to reproduce and output video signals and audio signals.

As illustrated in FIG. 34, the video processor 1332 includes a video input processing unit 1401, a first image enlargement-reduction unit 1402, a second image enlargement-reduction unit 1403, a video output processing unit 1404, a frame memory 1405, and a memory control unit 1406. Moreover, the video processor 1332 includes an encoding/decoding engine 1407, video ES (Elementary Stream) buffers 1408A and 1408B, and audio ES buffers 1409A and 1409B. Furthermore, the video processor 1332 includes an audio encoder 1410, an audio decoder 1411, a multiplexer (MUX) 1412, a demultiplexer (DMUX) 1413, and a stream buffer 1414.

The video input processing unit 1401 obtains video signals input from, for example, the connectivity 1321 (see FIG. 33), and converts them into digital image data. The first image enlargement-reduction unit 1402 performs format conversion with respect to the image data and performs image enlargement-reduction. The second image enlargement-reduction unit 1403 performs image enlargement-reduction with respect to the image data according to the format used in the output destination of the video output processing unit 1404. Moreover, the second image enlargement-reduction unit 1403 performs format conversion and image enlargement-reduction in an identical manner to the first image enlargement-reduction unit 1402. The video output processing unit 1404 performs format conversion with respect to the image data for converting the image data into analog signals, and outputs the analog signals as reproduced video signals to, for example, the connectivity 1321.

The frame memory 1405 is a memory for storing the image data shared among the video input processing unit 1401, the first image enlargement-reduction unit 1402, the second image enlargement-reduction unit 1403, the video output processing unit 1404, and the encoding/decoding engine 1407. The frame memory 1405 is implemented as a semiconductor memory such as a DRAM.

The memory control unit 1406 receives synchronization signals from the encoding/decoding engine 1407, and controls the reading/writing access with respect to the frame memory 1405 according to the access schedule for the frame memory 1405 as written in an access management table 1406A. The access management table 1406A is updated by the memory control unit 1406 according to the operations performed by the encoding/decoding engine 1407, the first image enlargement-reduction unit 1402, and the second image enlargement-reduction unit 1403.

The encoding/decoding engine 1407 encodes image data as well as decodes video streams representing encoded image data. For example, the encoding/decoding engine 1407 encodes the image data read from the frame memory 1405, and sequentially writes the encoded image data as video streams in the video ES buffer 1408A. Moreover, for example, the encoding/decoding engine 1407 sequentially reads video streams from the video ES buffer 1408B, decodes the video streams, and sequentially writes the decoded video streams as image data in the frame memory 1405. In the encoding operation and the decoding operation, the encoding/decoding engine 1407 uses the frame memory 1405 as the work area. Moreover, the encoding/decoding engine 1407 outputs synchronization signals to the memory control unit 1406 at, for example, the timing of starting the operations for each macro block.

The video ES buffer 1408A buffers the video streams generated by the encoding/decoding engine 1407, and sends them to the multiplexer (MUX) 1412. The video ES buffer 1408B buffers the video streams received from the demultiplexer (DMUX) 1413, and sends them to the encoding/decoding engine 1407.

The audio ES buffer 1409A buffers the audio streams generated by the audio encoder 1410, and sends them to the multiplexer (MUX) 1412. The audio ES buffer 1409B buffers the audio streams received from the demultiplexer (DMUX) 1413, and sends them to the audio decoder 1411.

The audio encoder 1410 performs digital conversion of the audio signals input from, for example, the connectivity 1321; and encodes the digital data according to a predetermined method such as the MPEG audio method or the AC3 (Audio Code number 3) method. The audio encoder 1410 sequentially writes the audio streams, which represent the data obtained as a result of encoding the audio signals, in the audio ES buffer 1409A. The audio decoder 1411 decodes the audio streams received from the audio ES buffer 1409B; for example, converts the audio streams into analog signals; and sends the analog signals as reproduced audio signals to the connectivity 1321.

The multiplexer (MUX) 1412 multiplexes the video streams and the audio streams. Herein, any arbitrary multiplexing method can be implemented (i.e., the bit streams generated as a result of multiplexing can have an arbitrary format). Moreover, at the time of multiplexing, the multiplexer (MUX) 1412 can also add predetermined header information to the bit streams. That is, the multiplexer (MUX) 1412 can convert the format of the streams as a result of performing multiplexing. For example, the multiplexer (MUX) 1412 multiplexes the video streams and the audio streams, and converts the multiplexing result into transport streams representing the bit streams of the format for transporting. Moreover, for example, the multiplexer (MUX) 1412 multiplexes the video streams and the audio streams, and converts the multiplexing result into data (file data) having the file format for recording.

The demultiplexer (DMUX) 1413 demultiplexes the bit streams, which are obtained as a result of multiplexing the video streams and the audio streams, according to the method corresponding to the multiplexing performed by the multiplexer (MUX) 1412. That is, the demultiplexer (DMUX) 1413 extracts the video streams and the audio streams (separates the video streams and the audio streams) from the bit streams read from the stream buffer 1414. That is, as a result of performing demultiplexing, the demultiplexer (DMUX) 1413 can convert the format of the streams (inverse conversion to the conversion performed by the multiplexer (MUX) 1412). For example, the demultiplexer (DMUX) 1413 can obtain, via the stream buffer 1414, the transport streams received from the connectivity 1321 or the broadband modem 1333 and demultiplex the transport streams so as to convert them into video streams and audio streams. Moreover, the demultiplexer (DMUX) 1413 can obtain, via the stream buffer 1414, the file data read by, for example, the connectivity 1321 from various recording mediums and demultiplex the file data so as to convert it into video streams and audio streams.

The stream buffer 1414 buffers the bit streams. For example, the stream buffer 1414 buffers the transport streams received from the multiplexer (MUX) 1412, and sends them to the connectivity 1321 or the broadband modem 1333 at a predetermined timing or in response to a request issued from outside.

Moreover, the stream buffer 1414 buffers the file data received from the multiplexer (MUX) 1412; sends it to the connectivity 1321 at a predetermined timing or in response to a request issued from outside; and records it in various recording mediums.

Furthermore, the stream buffer 1414 buffers the transport streams obtained via the connectivity 1321 or the broadband modem 1333, and sends them to the demultiplexer (DMUX) 1413 at a predetermined timing or in response to a request issued from outside.

Moreover, the stream buffer 1414 buffers the file data that is read, for example, into the connectivity 1321 from various recording mediums; and sends the file data to the demultiplexer (DMUX) 1413 at a predetermined timing or in response to a request issued from outside.

Given below is the explanation of an example of the operations performed in the video processor 1332 having the abovementioned configuration. For example, regarding the video signals that are input from the connectivity 1321 to the video processor 1332, the video input processing unit 1401 converts the video signals into digital image data of a predetermined format such as the 4:2:2 Y/Cb/Cr format, and sequentially writes the image data into the frame memory 1405. Then, the first image enlargement-reduction unit 1402 or the second image enlargement-reduction unit 1403 reads the digital image data; converts the format of the digital image data into a predetermined format, such as the 4:2:0 Y/Cb/Cr format, and performs the enlargement-reduction operation; and again writes the image data in the frame memory 1405. Subsequently, the encoding/decoding engine 1407 encodes the image data and writes it as video streams in the video ES buffer 1408A.

Moreover, regarding the audio signals that are input from the connectivity 1321 to the video processor 1332, the audio encoder 1410 encodes the audio signals and writes them as audio streams in the audio ES buffer 1409A.

Then, the multiplexer (MUX) 1412 reads and multiplexes the video streams written in the video ES buffer 1408A and the audio streams written in the audio ES buffer 1409A, and converts the multiplexing result into transport streams or file data. The transport streams generated by the multiplexing unit (MUX) are buffered in the stream buffer 1414 and are then output to an external network via, for example, the connectivity 1321 or the broadband modem 1333. Moreover, the file data generated by the multiplexer (MUX) 1412 is buffered in the stream buffer 1414 and is then output to, for example, the connectivity 1321 and recorded in various recording mediums.

Moreover, the transport streams that are input from an external network to the video processor 1332 via, for example, the connectivity 1321 or the broadband modem 1333 are buffered in the stream buffer 1414 and are then demultiplexed by the demultiplexer (DMUX) 1413. Furthermore, the file data that is read into the connectivity 1321 from various recording mediums and that is input to the video processor 1332 is buffered in the stream buffer 1414 and is then demultiplexed by the demultiplexer (DMUX) 1413. That is, the demultiplexer (DMUX) 1413 separates the transport streams or the file data, which are input to the video processor 1332, into video streams and audio streams.

The audio streams are sent to the audio decoder 1411 via the audio ES buffer 1409B, so that the audio decoder 1411 decodes the audio streams and reproduces audio signals. The video streams are written in the video ES buffer 1408B, and then the encoding/decoding engine 1407 sequentially reads the video streams, decoded them, and writes them in the frame memory 1405. The second image enlargement-reduction unit 1403 performs enlargement-reduction of the decoded image data and writes it the frame memory 1405. Then, the video output processing unit 1404 reads the decoded image data; performs format conversion in a predetermined format such as the 4:2:2 Y/Cb/Cr format; converts the image data into analog signals; and reproduces and outputs video signals.

In the case of applying the application concerned to the video processor 1332 configured in the abovementioned manner, the application concerned explained in the embodiments can be applied in the encoding/decoding engine 1407. That is, for example, the encoding/decoding engine 1407 can be equipped with the functions of the image encoding device 100a or the functions of the image decoding device 100b. Alternatively, the encoding/decoding engine 1407 can be equipped with the functions of the image encoding device 100a as well as the functions of the image decoding device 100b. As a result, the video processor 1332 enables achieving the effects identical to the effects achieved in the embodiments.

In the encoding/decoding engine 1407, the application concerned (i.e., the functions of the image encoding device 100a, or the functions of the image decoding device 100b, or the functions of both those devices) can be implemented using hardware such as a logical circuit, or can be implemented using software such as embedded programs, or can be implemented using hardware and software.

(Another exemplary configuration of video processor)

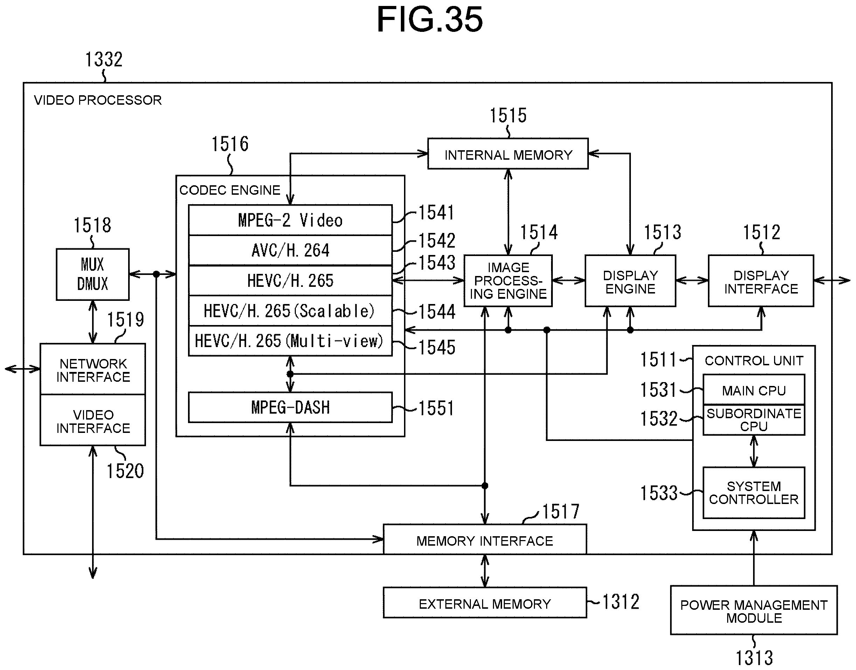

FIG. 35 is a block diagram illustrating another exemplary schematic configuration of the video processor 1332 in which the application concerned is applied. In the example illustrated in FIG. 35, the video processor 1332 has the function of encoding/decoding video data according to a predetermined method.

More particularly, as illustrated in FIG. 35, the video processor 1332 includes a control unit 1511, a display interface 1512, a display engine 1513, an image processing engine 1514, and an internal memory 1515. Moreover, the video processor 1332 includes a codec engine 1516, a memory interface 1517, a multiplexer/demultiplexer (MUX/DMUX) 1518, a network interface 1519, and a video interface 1520.

The control unit 1511 controls the operations of the processing units of the video processor 1332, namely, the display interface 1512, the display engine 1513, the image processing engine 1514, and the codec engine 1516.

As illustrated in FIG. 35, the control unit 1511 includes, for example, a main CPU 1531, a subordinate CPU 1532, and a system controller 1533. The main CPU 1531 executes programs for controlling the operations of the processing units of the video processor 1332. The main CPU 1531 generates control signals according to the programs and sends the controls signals to the processing units, and thus controls the operations of the processing units. The subordinate CPU 1532 fulfils a supplementary role to the main CPU 1531. For example, the subordinate CPU 1532 executes the child processes and the subroutines of the programs executed by the main CPU 1531. The system controller 1533 controls the operations of the main CPU 1531 and the subordinate CPU 1532 by instructing them about the programs to be executed.

The display interface 1512 outputs image data to, for example, the connectivity 1321 (see FIG. 33) under the control of the control unit 1511. More particularly, the display interface 1512 either converts digital image data into analog signals and outputs them as reproduced video signals to the monitor device of the connectivity 1321, or outputs the digital image data without modification to the monitor device of the connectivity 1321.

The display engine 1513 performs various conversion operations such as format conversion, size conversion, and spectrum conversion with respect to the image data under the control of the control unit 1511 and with the aim of matching the image data to the hardware specifications of the monitor device in which the images are to be displayed.

The image processing engine 1514 performs predetermined image processing such as filtering with respect to the image data under the control of the control unit 1511 and with the aim of improving the image quality.

The internal memory 1515 is a memory installed inside the video processor 1332 and shared among the display engine 1513, the image processing engine 1514, and the codec engine 1516. The internal memory 1515 is used, for example, in the communication of data among the display engine 1513, the image processing engine 1514, and the codec engine 1516. For example, the data sent by the display engine 1513, the image processing engine 1514, or the codec engine 1516 is stored in the internal memory 1515; and the stored data is sent to the display engine 1513, the image processing engine 1514, or the codec engine 1516 as may be necessary (for example, in response to a request). The internal memory 1515 can be implemented using any arbitrary memory device. Since the internal memory 1515 is often used in storing low-volume data such as image data in the units of blocks and parameters, it is desirable to use a semiconductor memory such as an SRAM (Static Random Access Memory) that is relatively low-volume (as compared to, for example, the external memory 1312) but that has a quick response speed.

The codec engine 1516 performs operations related to encoding and decoding of image data. The codec engine 1516 can be compatible to an arbitrary encoding/decoding method, and there can be one or more such encoding/decoding methods. For example, the codec engine 1516 can be equipped with codec functions of a plurality of encoding/decoding methods, and can encode image data and decode the encoded data according to the selected method.

In the example illustrated in FIG. 35, for example, the codec engine 1516 includes, as functional blocks for codec-related processing, an MPEG-2 Video 1541, an AVC/H.264 1542, an HEVC/H.265 1543, an HEVC/H.265 (Scalable) 1544, an HEVC/H.265 (Multi-view) 1545, and an MPEG-DASH 1551.

The MPEG-2 Video 1541 is a functional block for encoding and decoding image data according to the MPEG-2 method. The AVC/H.264 1542 is a functional block for encoding and decoding image data according to the AVC method. The HEVC/H.265 1543 is a functional block for encoding and decoding image data according to the HEVC method. The HEVC/H.265 (Scalable) 1544 is a functional block for performing scalable encoding and scalable decoding of image data according to the HEVC method. The HEVC/H.265 (Multi-view) 1545 is a functional block for performing multi-view encoding and multi-view decoding of image data according to the HEVC method.

The MPEG-DASH 1551 is a functional block for transmitting and receiving image data according to the MPEG-DASH (MPEG-Dynamic Adaptive Streaming over HTTP) method. The MPEG-DASH 1551 is a technology for streaming videos using the HTTP (HyperText Transfer Protocol), and is characterized by selecting, in the units of segments, appropriate encoded data from among a plurality of sets of provided encoded data having mutually different resolutions; and then transmitting the selected encoded data. In the MPEG-DASH 1551, streams compatible to a standard are generated and transmission control of those streams is performed; and, as far as encoding/decoding of image data is concerned, the MPEG-2 Video 1541 or the HEVC/H.265 (Multi-view) 1545 explained above is used.

The memory interface 1517 is an interface for the external memory 1312. Thus, the data sent by the image processing engine 1514 or the codec engine 1516 is provided to the external memory 1312 via the memory interface 1517. Moreover, the data read from the external memory 1312 is sent to the video processor 1332 (the image processing engine 1514 or the codec engine 1516) via the memory interface 1517.

The multiplexer/demultiplexer (MUX/DMUX) 1518 multiplexes and demultiplexes a variety of data related to images, such as the bit streams of encoded data, image data, and video signals. Herein, multiplexing/demultiplexing can be performed according to an arbitrary method. For example, at the time of performing multiplexing, the multiplexer/demultiplexer (MUX/DMUX) 1518 not only can bundle a plurality of sets of data but can also add predetermined header information to the bundled data. Moreover, at the time of performing demultiplexing, the multiplexer/demultiplexer (MUX/DMUX) 1518 not only can divide a single set of data into a plurality of sets of data, but also can add predetermined header information to each divided set of data. That is, the multiplexer/demultiplexer (MUX/DMUX) 1518 can convert the format of data by performing multiplexing/demultiplexing. For example, the multiplexer/demultiplexer (MUX/DMUX) 1518 multiplexes bit streams and convert them into transport streams, which represent bit streams having the format for transportation, and into data (file data) having the file format for recording. Of course, demultiplexing can be performed for inverse conversion.

The network interface 1519 is an interface for establishing connection with, for example, the broadband modem 1333 or the connectivity 1321 illustrated in FIG. 33. The video interface 1520 is an interface for establishing connection with, for example, the connectivity 1321 or the camera 1322.

Given below is the explanation about an example of the operations performed in the video processor 1332. For example, when a transport stream is received from an external network via the connectivity 1321 or the broadband modem 1333, the transport stream is sent to the multiplexer/demultiplexer (MUX/DMUX) 1518 via the network interface 1519, so that the multiplexer/demultiplexer (MUX/DMUX) 1518 demultiplexes the transport stream. Then, the codec engine 1516 decodes the demultiplexed transport stream. Subsequently, the image processing engine 1514 performs predetermined image processing with respect to the image data obtained as a result of the decoding performed by the coded engine 1516. Then, the display engine 1513 performs predetermined conversion with respect to the processed image data, and the converted image data is sent to, for example, the connectivity 1321 and the corresponding image is displayed in the monitor. Moreover, for example, regarding the image data obtained as a result of decoding performed by the codec engine 1516, the codec engine 1516 again decodes the image data and the multiplexer/demultiplexer (MUX/DMUX) 1518 multiplexes the re-decoded image data and converts it into file data. Then, the file data is output to, for example, the connectivity 1321 via the video interface 1520, and is recorded in various recording mediums.

Moreover, the connectivity 1321 sends file data of encoded data, which is read from a recording medium (not illustrated) and which is obtained as a result of encoding the image data, to the multiplexer/demultiplexer (MUX/DMUX) 1518 via the video interface 1520. Then, the multiplexer/demultiplexer (MUX/DMUX) 1518 demultiplexes the file data, and the codec engine 1516 decodes the demultiplexed file data. Subsequently, the image processing engine 1514 performs predetermined image processing with respect to the image data obtained as a result of decoding performed by the codec engine 1516, and the display engine 1513 performs predetermined conversion with respect to the processed image data. Then, the image data is sent to, for example, the connectivity 1321 via the display interface 1512, and the corresponding image is displayed in the monitor. Moreover, for example, regarding the image data obtained as a result of decoding performed by the codec engine 1516, the codec engine 1516 again decodes the image data and the multiplexer/demultiplexer (MUX/DMUX) 1518 multiplexes the re-decoded image data and converts it into a transport stream. Then, the transport stream is output to, for example, the connectivity 1321 or the broadband modem 1333 via the network interface 1519, and is transmitted to other devices (not illustrated).

Meanwhile, the communication of image data and other data among the processing units of the video processor 1332 is performed using, for example, the internal memory 1515 or the external memory 1312. Moreover, the power management module 1313 controls, for example, the power supply to the control unit 1511.

In the case of applying the application concerned to the video processor 1332 configured in the abovementioned manner, the application concerned explained in the embodiments can be applied to the codec engine 1516. That is, for example, the codec engine 1516 can be equipped with the functions of the image encoding device 100a, or the functions of the image decoding device 100b, or the functions of both those devices. As a result, the video processor 1332 enables achieving the effects identical to the effects achieved in the embodiments.

In the codec engine 1516, the application concerned (i.e., the functions of the image encoding device 100a) can be implemented using hardware such as a logical circuit, or can be implemented using software such as embedded programs, or can be implemented using hardware and software.

Till now, two exemplary configurations of the video processor 1332 were explained. However, the video processor 1332 can have an arbitrary configuration that can be different than the two configurations explained above. Meanwhile, the video processor 1332 can be configured as a single semiconductor chip or can be configured as a plurality of semiconductor chips. For example, the video processor 1332 can be three-dimensional laminating LSI having a plurality of semiconductors laminated therein. Alternatively, the video processor 1332 can be implemented using a plurality of LSI.

<Example of application in devices>

The video set 1300 can be embedded in various devices that process image data. For example, the video set 1300 can be embedded in the television device 900 (see FIG. 29), or the cellular phone 920 (see FIG. 30), or the recording-reproducing device 940 (see FIG. 31), or the imaging device 960 (see FIG. 32). As a result of embedding the video set 1300 in a device, that device enables achieving the effects identical to the effects achieved in the embodiments.

Meanwhile, regarding only a partial configuration of the video set 1300; as long as the partial configuration includes the video processor 1332, it can be treated as a configuration in which the application concerned is applied. For example, only the video processor 1332 can be treated as a video processor in which the application concerned is applied. Moreover, for example, the processor illustrated by the dotted lines 1341 in FIG. 33 or the video module 1311 can be treated as a processor or a module in which the application concerned is applied. Moreover, for example, the video module 1311, the external memory 1312, the power management module 1313, and the frontend module 1314 can be combined and treated as the video unit 1361 (see FIG. 33) in which the application concerned is applied. In any of the abovementioned configurations, it becomes possible to achieve the effects identical to the effects achieved in the embodiments.

That is, as long as the video processor 1332 is included, any type of configuration can be embedded in various devices that process image data, in an identical manner to the case of the video set 1300. For example, the video processor 1332, or the processor illustrated by the dotted lines 1341, or the video module 1311, or the video unit 1361 can be embedded in the television device 900 (see FIG. 29), or the cellular phone 920 (see FIG. 29), or the recording-reproducing device 940 (see FIG. 31), or the imaging device 960 (see FIG. 32). Thus, as a result of incorporating any one configuration in which the application concerned is to be applied; in an identical manner to the case of the video set 1300, it becomes possible to achieve the effects identical to the effects achieved in the embodiments.

<Network system>

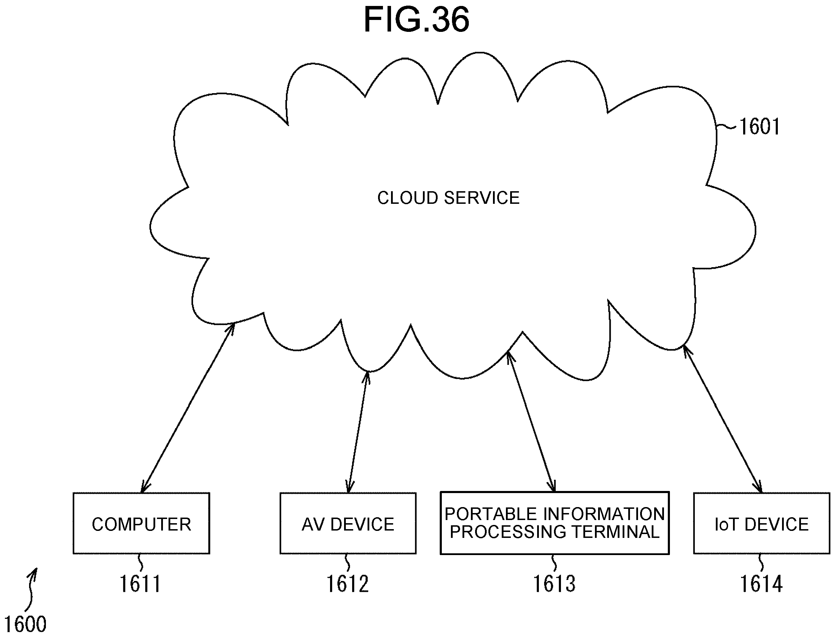

Meanwhile, the application concerned can be applied also to a network system configured with a plurality of devices. FIG. 36 is a block diagram illustrating an exemplary schematic configuration of a network system in which the application concerned is applied.

A network system 1600 illustrated in FIG. 36 is a system in which devices communicate information related to images (moving images) via a network. In the network system 1600, a cloud service 1601 is a system for providing services related to images (moving images) to terminals such as a computer 1611, an AV (Audio Visual) device 1612, a portable information processing terminal 1613, and an IoT (Internet of Things) device 1614 that are communicably connected to the cloud service 1601. For example, the cloud service 1601 provides services such as an image (moving image) content supply service, such as what is called video transmission (on-demand or live streaming), to the terminals. Moreover, for example, the cloud service 1601 provides a backup service for receiving images (moving images) from the terminals, and archiving them. Furthermore, for example, the cloud service 1601 provides a service of relaying the communication of the contents of images (moving images) among the terminals.

The cloud service 1601 can have an arbitrary physical configuration. For example, the cloud service 1601 can be configured to include various servers such as a server for storing and managing moving images, a server for broadcasting the moving images to terminals, a server for obtaining moving images from terminals, and a server for managing the users (terminals) and the charging of fees; and to include an arbitrary network such as the Internet or a LAN.

The computer 1611 is configured using an information processing device such as a personal computer, a server, or a workstation. The AV device 1612 is configured using an image processing device such as a television receiver, a hard disk recorder, a game console, or a camera. The portable information processing terminal 1613 is configured using an information processing device, such as a notebook personal computer, a tablet terminal, a cellular phone, or a smartphone, that is portable. The IoT device 1614 is configured using an arbitrary object, such as a machine, a home electrical appliance, an article of furniture, some other object, an IC tag, or a card-type device, that performs processing related to images. Each of the abovementioned terminal is equipped with the communication function, establishes connection (establishes a session) with the cloud service 1601, and sends information to and receives information from (i.e., performs communication with) the cloud service 1601. Moreover, each terminal can perform communication with the other terminals too. The communication among the terminals can be performed either via the cloud service 1601 or without involving the cloud service 1601.

When the application concerned is applied to the network system 1600 explained above and when data of images (moving images) is sent and received either among the terminals or between the terminals and the cloud service 1601, the image data can be encoded/decoded as explained above in the embodiments. That is, each terminal (the computer 1611 to the IoT device 1614) and the cloud service 1601 can be equipped with the functions of the image encoding device 100a and the image decoding device 100b. As a result, the terminals that send and receive image data (i.e., the computer 1611 to the IoT device 1614) and the cloud service 1601 enable achieving the effects identical to the effects achieved in the embodiments.

Meanwhile, a variety of information related to the encoded data (bit streams) can be multiplexed into encoded data before being transmitted or recorded, or can be transmitted or recorded as non-multiplexed separate data that is associated to the encoded data. Herein, the term "association" implies, for example, the case in which, when one set of data is to be processed, it is made possible to use (link) some other set of data. That is, mutually-associated sets of data can be bundled as a single set of data, or can be treated as separate sets of data. For example, the information associated to the encoded data (images) can be transmitted using a different transmission path than the transmission path used to transmit the encoded data (images). Alternatively, for example, the information associated to the encoded data (images) can be recorded in a different recording medium than (or in a different recording area of the same recording medium as) the recording medium used to record the encoded data (images). Meanwhile, the "association" need not be for the entire data, and only some part of the data can be associated. For example, images and the information corresponding to the images can be mutually associated in arbitrary units such as a plurality of frames, a single frame, of some part of a single frame.

Meanwhile, the effects described in the present written description are only explanatory and exemplary, and are not limited in scope. That is, it is also possible to achieve other effects.

Moreover, the technical scope of the application concerned is not limited to the embodiments described above. That is, the application concerned is to be construed as embodying all modifications that fairly fall within the basic teaching herein set forth.

Meanwhile, a configuration as explained below also falls within the technical scope of the application concerned.

(1) An image processing device comprising:

a motion compensating unit that
has a plurality of motion compensation modes for compensating state of motion occurring with time in a partial area representing some part of an image,
detects state of motion occurring in the partial area, and
compensates the detected state of motion and generates a predicted image; and
an execution control unit that, either when the state of motion detected by the motion compensating unit satisfies a predetermined condition or when condition under which the motion compensating unit generates the predicted image satisfies the predetermined condition, makes the motion compensating unit skip motion compensation mode corresponding to the predetermined condition.

(2) The image processing device according to (1), further comprising a condition determining unit that,
based on direction and length of motion vectors at maximum of three apices of a rectangular partial area detected by the motion compensating unit, and
based on width and height of the partial area,
determines whether state of motion of the partial area satisfies the predetermined condition.
(3) The image processing device according to (1) or (2), wherein
the predetermined condition indicates that state of motion of the partial area involves translation and rotation, and
when the predetermined condition is satisfied, the execution control unit makes the motion compensating unit skip

a translation-scaling mode in which motion involving translation and enlargement-reduction is compensated, and
an affine transformation mode in which motion involving translation, rotation, enlargement-reduction, and skew deformation is compensated.

(4) The image processing device according to any one of (1) to (3), wherein
the predetermined condition indicates that state of motion of the partial area involves translation and enlargement-reduction, and
when the predetermined condition is satisfied, the execution control unit makes the motion compensating unit skip

a translation-rotation mode in which motion involving translation and rotation is compensated, and
an affine transformation mode in which motion involving translation, rotation, enlargement-reduction, and skew deformation is compensated.

(5) The image processing device according to any one of (1) to (4), wherein
the predetermined condition indicates that state of motion of the partial area involves translation, rotation, enlargement-reduction, and skew deformation, and
when the predetermined condition is satisfied, the execution control unit makes the motion compensating unit skip

> a translation-scaling mode in which motion involving translation and enlargement-reduction is compensated, and
> a translation-rotation mode in which motion involving translation and rotation is compensated.

(6) The image processing device according to any one of (1) to (5), wherein
when the motion compensating unit uses result of motion compensation performed in a plurality of neighboring areas which are positioned in neighborhood of the partial areas and in which motion compensation is already performed, and compensates state of motion of the partial area so as to generate the predicted image,
the execution control unit detects state of motion in the partial area based on

> frequency of occurrence of motion compensation modes used for motion compensation in the plurality of neighboring areas, and
> costs indicating extent of prediction according to predicted images that are generated when motion compensation is performed by applying, to the partial area, the motion compensation modes used for motion compensation in the plurality of neighboring areas.

(7) The image processing device according to (6), wherein the motion compensating unit calculates the costs in order of frequency of occurrence of the motion compensation modes in the plurality of neighboring areas.
(8) The image processing device according to (6) or (7), wherein
the predetermined condition indicates that state of motion of the partial area involves translation and rotation, and
when the predetermined condition is satisfied, the execution control unit makes the motion compensating unit skip

> a translation-scaling mode in which motion involving translation and enlargement-reduction is compensated, and
> an affine transformation mode in which motion involving translation, rotation, enlargement-reduction, and skew deformation is compensated.

(9) The image processing device according to any one of (6) to (8), wherein
the predetermined condition indicates that state of motion of the partial area involves translation and enlargement-reduction, and
when the predetermined condition is satisfied, the execution control unit makes the motion compensating unit skip

> a translation-rotation mode in which motion involving translation and rotation is compensated, and
> an affine transformation mode in which motion involving translation, rotation, enlargement-reduction, and skew deformation is compensated.

(10) The image processing device according to any one of (6) to (9), wherein
the predetermined condition indicates that state of motion of the partial area involves translation, rotation, enlargement-reduction, and skew deformation, and
when the predetermined condition is satisfied, the execution control unit makes the motion compensating unit skip

> a translation-scaling mode in which motion involving translation and enlargement-reduction is compensated, and
> a translation-rotation mode in which motion involving translation and rotation is compensated.

(11) The image processing device according to any one of (1) to (10), wherein
the predetermined condition indicates that size of the predetermined area is smaller than a predetermined size, and
when the predetermined condition is satisfied, the execution control unit makes the motion compensating unit skip predetermined motion compensation.
(12) The image processing device according to any one of (1) to (11), wherein
the predetermined condition indicates that size of the predetermined area is smaller than a predetermined size, and
when the predetermined condition is satisfied, the execution control unit makes the motion compensating unit skip motion compensation modes other than

> a translation mode in which motion involving translation is compensated,
> a translation-rotation mode in which motion involving translation and rotation is compensated, and

a translation-scaling mode in which motion involving translation and enlargement-reduction is compensated.

(13) The image processing device according to any one of (1) to (12), wherein
the predetermined condition indicates that size of the predetermined area is equal to or greater than a predetermined size, and
when the predetermined condition is satisfied, the execution control unit makes the motion compensating unit skip motion compensation modes other than a motion compensation mode which has lowest cost from among costs that represent extent of prediction according to predicted images generated as a result of performing motion compensation in the partial area by applying a plurality of motion compensation modes provided in the motion compensating unit.

(14) The image processing device according to any one of (1) to (13), wherein
the predetermined condition indicates that a quantization parameter, which is used in quantizing result of motion compensation, is smaller than a predetermined value, and
when the predetermined condition is satisfied, the execution control unit makes the motion compensating unit skip

a translation-scaling mode in which motion involving translation and enlargement-reduction is compensated, and
a translation-rotation mode in which motion involving translation and rotation is compensated.

(15) The image processing device according to any one of (1) to (14), wherein
the predetermined condition indicates that

a quantization parameter, which is used in quantizing result of motion compensation, is smaller than a predetermined value, and
a cost which represents extent of prediction according to a predicted image generated as a result of performing motion compensation in the partial area by applying an affine transformation mode, in which motion involving translation, rotation, enlargement-reduction, and skew deformation is compensated, is smaller than a predetermined threshold value, and

when the predetermined condition is satisfied, the execution control unit makes the motion compensating unit skip motion compensation modes other than the affine transformation mode in which motion involving translation, rotation, enlargement-reduction, and skew deformation is compensated.

(16) The image processing device according to any one of (1) to (15), wherein
the predetermined condition indicates that

a quantization parameter, which is used in quantizing result of motion compensation, is smaller than a predetermined value, and
a cost which represents extent of prediction according to a predicted image generated as a result of performing motion compensation in the partial area by applying an affine transformation mode, in which motion involving translation, rotation, enlargement-reduction, and skew deformation is compensated, is equal to or greater than a predetermined threshold value, and

when the predetermined condition is satisfied, the execution control unit makes the motion compensating unit skip motion compensation modes other than a translation mode in which motion involving translation is compensated.

(17) The image processing device according to any one of (1) to (16), wherein
the predetermined condition indicates that a quantization parameter, which is used in quantizing result of motion compensation, is equal to or greater than a predetermined value, and
when the predetermined condition is satisfied, the execution control unit makes the motion compensating unit skip motion compensation modes other than a motion compensation mode which has lowest cost from among costs that represent extent of prediction according to predicted images generated as a result of performing motion compensation in the partial area by applying a plurality of motion compensation modes.

(18) An image processing method in which
a plurality of motion compensation modes is provided for compensating state of motion occurring with time in a partial area representing some part of an image,
state of motion occurring in the partial area is detected, and
the detected state of motion is compensated and a predicted image is generated,
the image processing method comprising:
skipping that, either when state of motion detected in the partial area satisfies a predetermined condition or when condition for generating the predicted image satisfies the predetermined condition, includes skipping motion compensation mode corresponding to the predetermined condition.

(19) A program that causes a computer, which is included in an image processing device, to function as:
a motion compensating unit that

has a plurality of motion compensation modes for compensating state of motion occurring with time in a partial area representing some part of an image,
detects state of motion occurring in the partial area, and
compensates the detected state of motion and generates a predicted image; and

an execution control unit that, either when the state of motion detected by the motion compensating unit satisfies a predetermined condition or when condition under which the motion compensating unit generates the predicted image satisfies the predetermined condition, makes the motion compensating unit skip motion compensation mode corresponding to the predetermined condition.

Reference Signs List

11 PU (partial area)
14 CU (partial area)
100a image coding device (image processing device)
100b image decoding device (image processing device)
122 inter-prediction unit
122a motion detecting unit (motion compensating unit)
122b condition determining unit
122c motion compensation execution control unit (execution control unit)
P predicted image

**Claims**

1. An image processing device comprising:

    a motion compensating unit that

        has a plurality of motion compensation modes for compensating state of motion occurring with time in a partial area representing some part of an image,
        detects state of motion occurring in the partial area, and
        compensates the detected state of motion and generates a predicted image; and

    an execution control unit that, either when the state of motion detected by the motion compensating unit satisfies a predetermined condition or when condition under which the motion compensating unit generates the predicted image satisfies the predetermined condition, makes the motion compensating unit skip motion compensation mode corresponding to the predetermined condition.

2. The image processing device according to claim 1, further comprising a condition determining unit that,
based on direction and length of motion vectors at maximum of three apices of a rectangular partial area detected by the motion compensating unit, and
based on width and height of the partial area, determines whether state of motion of the partial area satisfies the predetermined condition.

3. The image processing device according to claim 1, wherein
the predetermined condition indicates that state of motion of the partial area involves translation and rotation, and
when the predetermined condition is satisfied, the execution control unit makes the motion compensating unit skip

    a translation-scaling mode in which motion involving translation and enlargement-reduction is compensated, and
    an affine transformation mode in which motion involving translation, rotation, enlargement-reduction, and skew deformation is compensated.

4. The image processing device according to claim 1, wherein
the predetermined condition indicates that state of motion of the partial area involves translation and enlargement-reduction, and
when the predetermined condition is satisfied, the execution control unit makes the motion compensating unit skip

a translation-rotation mode in which motion involving translation and rotation is compensated, and
an affine transformation mode in which motion involving translation, rotation, enlargement-reduction, and skew deformation is compensated.

5. The image processing device according to claim 1, wherein
the predetermined condition indicates that state of motion of the partial area involves translation, rotation, enlargement-reduction, and skew deformation, and
when the predetermined condition is satisfied, the execution control unit makes the motion compensating unit skip

a translation-scaling mode in which motion involving translation and enlargement-reduction is compensated, and
a translation-rotation mode in which motion involving translation and rotation is compensated.

6. The image processing device according to claim 1, wherein
when the motion compensating unit uses result of motion compensation performed in a plurality of neighboring areas which are positioned in neighborhood of the partial areas and in which motion compensation is already performed, and compensates state of motion of the partial area so as to generate the predicted image,
the execution control unit detects state of motion in the partial area based on

frequency of occurrence of motion compensation modes used for motion compensation in the plurality of neighboring areas, and
costs indicating extent of prediction according to predicted images that are generated when motion compensation is performed by applying, to the partial area, the motion compensation modes used for motion compensation in the plurality of neighboring areas.

7. The image processing device according to claim 6, wherein the motion compensating unit calculates the costs in order of frequency of occurrence of the motion compensation modes in the plurality of neighboring areas.

8. The image processing device according to claim 6, wherein
the predetermined condition indicates that state of motion of the partial area involves translation and rotation, and
when the predetermined condition is satisfied, the execution control unit makes the motion compensating unit skip

a translation-scaling mode in which motion involving translation and enlargement-reduction is compensated, and
an affine transformation mode in which motion involving translation, rotation, enlargement-reduction, and skew deformation is compensated.

9. The image processing device according to claim 6, wherein
the predetermined condition indicates that state of motion of the partial area involves translation and enlargement-reduction, and
when the predetermined condition is satisfied, the execution control unit makes the motion compensating unit skip

a translation-rotation mode in which motion involving translation and rotation is compensated, and
an affine transformation mode in which motion involving translation, rotation, enlargement-reduction, and skew deformation is compensated.

10. The image processing device according to claim 6, wherein
the predetermined condition indicates that state of motion of the partial area involves translation, rotation, enlargement-reduction, and skew deformation, and
when the predetermined condition is satisfied, the execution control unit makes the motion compensating unit skip

a translation-scaling mode in which motion involving translation and enlargement-reduction is compensated, and
a translation-rotation mode in which motion involving translation and rotation is compensated.

11. The image processing device according to claim 1, wherein

the predetermined condition indicates that size of the predetermined area is smaller than a predetermined size, and when the predetermined condition is satisfied, the execution control unit makes the motion compensating unit skip predetermined motion compensation.

12. The image processing device according to claim 1, wherein
the predetermined condition indicates that size of the predetermined area is smaller than a predetermined size, and when the predetermined condition is satisfied, the execution control unit makes the motion compensating unit skip motion compensation modes other than

a translation mode in which motion involving translation is compensated,
a translation-rotation mode in which motion involving translation and rotation is compensated, and
a translation-scaling mode in which motion involving translation and enlargement-reduction is compensated.

13. The image processing device according to claim 1, wherein
the predetermined condition indicates that size of the predetermined area is equal to or greater than a predetermined size, and
when the predetermined condition is satisfied, the execution control unit makes the motion compensating unit skip motion compensation modes other than a motion compensation mode which has lowest cost from among costs that represent extent of prediction according to predicted images generated as a result of performing motion compensation in the partial area by applying a plurality of motion compensation modes provided in the motion compensating unit.

14. The image processing device according to claim 1, wherein
the predetermined condition indicates that a quantization parameter, which is used in quantizing result of motion compensation, is smaller than a predetermined value, and
when the predetermined condition is satisfied, the execution control unit makes the motion compensating unit skip

a translation-scaling mode in which motion involving translation and enlargement-reduction is compensated, and
a translation-rotation mode in which motion involving translation and rotation is compensated.

15. The image processing device according to claim 1, wherein
the predetermined condition indicates that

a quantization parameter, which is used in quantizing result of motion compensation, is smaller than a predetermined value, and
a cost which represents extent of prediction according to a predicted image generated as a result of performing motion compensation in the partial area by applying an affine transformation mode, in which motion involving translation, rotation, enlargement-reduction, and skew deformation is compensated, is smaller than a predetermined threshold value, and

when the predetermined condition is satisfied, the execution control unit makes the motion compensating unit skip motion compensation modes other than the affine transformation mode in which motion involving translation, rotation, enlargement-reduction, and skew deformation is compensated.

16. The image processing device according to claim 1, wherein
the predetermined condition indicates that

a quantization parameter, which is used in quantizing result of motion compensation, is smaller than a predetermined value, and
a cost which represents extent of prediction according to a predicted image generated as a result of performing motion compensation in the partial area by applying an affine transformation mode, in which motion involving translation, rotation, enlargement-reduction, and skew deformation is compensated, is equal to or greater than a predetermined threshold value, and

when the predetermined condition is satisfied, the execution control unit makes the motion compensating unit skip motion compensation modes other than a translation mode in which motion involving translation is compensated.

17. The image processing device according to claim 1, wherein
the predetermined condition indicates that a quantization parameter, which is used in quantizing result of motion compensation, is equal to or greater than a predetermined value, and

when the predetermined condition is satisfied, the execution control unit makes the motion compensating unit skip motion compensation modes other than a motion compensation mode which has lowest cost from among costs that represent extent of prediction according to predicted images generated as a result of performing motion compensation in the partial area by applying a plurality of motion compensation modes.

18. An image processing method in which

a plurality of motion compensation modes is provided for compensating state of motion occurring with time in a partial area representing some part of an image,

state of motion occurring in the partial area is detected, and

the detected state of motion is compensated and a predicted image is generated,

the image processing method comprising:

skipping that, either when state of motion detected in the partial area satisfies a predetermined condition or when condition for generating the predicted image satisfies the predetermined condition, includes skipping motion compensation mode corresponding to the predetermined condition.

19. A program that causes a computer, which is included in an image processing device, to function as:

a motion compensating unit that

has a plurality of motion compensation modes for compensating state of motion occurring with time in a partial area representing some part of an image,

detects state of motion occurring in the partial area, and

compensates the detected state of motion and generates a predicted image; and

an execution control unit that, either when the state of motion detected by the motion compensating unit satisfies a predetermined condition or when condition under which the motion compensating unit generates the predicted image satisfies the predetermined condition, makes the motion compensating unit skip motion compensation mode corresponding to the predetermined condition.

# FIG.1

# FIG.2

# FIG.3

# FIG.4

# FIG.5

| | TWO PARAMETERS (SINGLE MOTION VECTOR) | | | |
|---|---|---|---|---|
| NUMBER OF DETECTED PARAMETERS | THREE PARAMETERS (SINGLE MOTION VECTOR + ROTATION ANGLE OR SCALING) OR FOUR PARAMETERS (TWO MOTION VECTORS) | | | |
| | SIX PARAMETERS (THREE MOTION VECTORS) | | | |
| TYPES OF DETECTABLE MOTIONS | | | | |
| | TRANSLATION | ROTATION | SCALING (ENLARGEMENT-REDUCTION) | SKEW |
| MOTION COMPENSATION MODE | TRANSLATION MODE | | | |
| | TRANSLATION-ROTATION MODE | | | |
| | TRANSLATION-SCALING MODE | | TRANSLATION-SCALING MODE | |
| | AFFINE TRANSFORMATION MODE | | | |

# FIG.6

# FIG.7

AREA IN WHICH TRANSLATION, SCALING, AND
ROTATIONAL TRANSFER HAS OCCURRED

61

# FIG.8

AREA IN WHICH TRANSLATION AND ROTATIONAL
TRANSFER HAS OCCURRED

62

# FIG.9

AREA IN WHICH TRANSLATION AND SCALING HAS OCCURRED

63

# FIG.10

64A — AREA IN WHICH TRANSLATION AND SCALING HAS OCCURRED

64B — AREA IN WHICH TRANSLATION AND ROTATIONAL TRANSFER HAS OCCURRED

64C — AREA IN WHICH TRANSLATION, SCALING, AND ROTATIONAL TRANSFER HAS OCCURRED

64D — AREA IN WHICH TRANSLATION HAS OCCURRED

64

# FIG.11

# FIG.12

```
                                              ⌐122
┌─────────────────────────────────────────────────┐
│            INTER-PREDICTION UNIT                 │
│                                      ⌐122a       │
│   ┌───────────────────────────────────────────┐ │
│   │        MOTION DETECTING UNIT              │ │
│   └───────────────────────────────────────────┘ │
│                                      ⌐122b       │
│   ┌───────────────────────────────────────────┐ │
│   │        CONDITION DETERMINING              │ │
│   │               UNIT                        │ │
│   └───────────────────────────────────────────┘ │
│                                      ⌐122c       │
│   ┌───────────────────────────────────────────┐ │
│   │        MOTION COMPENSATION                │ │
│   │        EXECUTION CONTROL UNIT             │ │
│   └───────────────────────────────────────────┘ │
└─────────────────────────────────────────────────┘
```

# FIG.13

# FIG.14

START

S10
SET ENCODING PARAMETERS

S11
MERGE FLAG=0?

NO →

YES

S12
PARTITION CU

S19
PARTITION CU

S13
ESTIMATE RD COSTS IN INTRA-PREDICTION MODE

S20
MOTION PREDICTION IN MERGE MODE

S14
ESTIMATION OF RD COSTS IN INTER-PREDICTION MODE

S21
ENCODING OPERATION

S15
SET, AS MOTION COMPENSATION MODE, MODE HAVING SMALLEST RD COST FROM AMONG CALCULATED RD COSTS

S22
ARE ALL CUs PROCESSED?

NO

YES

END

S16
MOTION PREDICTION

S17
ENCODING OPERATION

S18
NO
ARE ALL CUs PROCESSED?

YES

END

# FIG.15

START OF OPERATION
FOR ESTIMATION OF RD
COSTS IN INTER-
PREDICTION MODE

S31
CALCULATE RD COST $J_{RD2}$ (TWO PARAMETERS)

S32
CALCULATE RD COST $J_{RD6A}$ (SIX PARAMETERS)

S33
CALCULATE COST $J_{A4}$ (FOUR PARAMETERS)

S34
$J_{A4} > J_{THA4}$?

YES → RETURN (EARLY DISCONTINUATION)

NO

S35
CALCULATE RD COST $J_{RD4A}$ (FOUR PARAMETERS)

S36
CALCULATE COSTS $J_{R3}$ AND $J_{S3}$ (THREE OR FOUR PARAMETERS)

S37
$J_{S3} > J_{THS3}$?

YES

NO

S38
CALCULATE RD COST $J_{RDS3}$ (THREE OR FOUR PARAMETERS)

S39
$J_{R3} > J_{THR3}$?

YES → RETURN (EARLY DISCONTINUATION)

NO

S40
$J_{S3} > J_{THS3}$?

YES → RETURN (EARLY DISCONTINUATION)

NO

S41
CALCULATE RD COST $J_{RDR3}$ (THREE OR FOUR PARAMETERS)

RETURN

# FIG.16

START OF
AMVP MODE
MOTION
PREDICTION

S51
TRANSLATION
MODE?

NO

YES

S55
AFFINE
TRANSFORMA-
TION MODE?

NO

YES

S60
TRANSLATION-
ROTATION
MODE?

NO

YES S61

S52
DECIDE ON SINGLE
PREDICTED
VECTOR

S56
DECIDE ON THREE
PREDICTED
VECTORS

S61
DECIDE ON SINGLE
PREDICTED
VECTOR AND
PREDICTED-ANGLE
INFORMATION

S64
DECIDE ON SINGLE
PREDICTED
VECTOR AND
PREDICTED-
SCALING-FACTOR
INFORMATION

S53
CALCULATE SINGLE
MOTION VECTOR

S57
CALCULATE THREE
MOTION VECTORS

S62
CALCULATE SINGLE
MOTION VECTOR
AND ANGLE
INFORMATION

S65
CALCULATE SINGLE
MOTION VECTOR
AND SCALING
FACTOR
INFORMATION

S54
PERFORM MOTION
COMPENSATION IN
TRANSLATION
MODE WITH
RESPECT TO
REFERENCE IMAGE

S58
CALCULATE
MOTION VECTOR OF
EACH UNIT BLOCK

S59
PERFORM MOTION
COMPENSATION IN
AFFINE
TRANSFORMATION
MODE WITH
RESPECT TO
REFERENCE IMAGE

S63
PERFORM MOTION
COMPENSATION IN
TRANSLATION-
ROTATION MODE
WITH RESPECT TO
REFERENCE IMAGE

S66
PERFORM MOTION
COMPENSATION IN
TRANSLATION-
SCALING MODE
WITH RESPECT TO
REFERENCE IMAGE

RETURN

# FIG.17

START OF
ENCODING
OPERATION

CALCULATE DIFFERENCE
BETWEEN IMAGE AND
PREDICTED IMAGE ⟩~S71

PERFORM ORTHOGONAL
TRANSFORMATION ⟩~S72

PERFORM QUANTIZATION ⟩~S73

PERFORM INVERSE
QUANTIZATION ⟩~S74

PERFORM INVERSE
ORTHOGONAL
TRANSFORMATION ⟩~S75

ADD PREDICTIVE RESIDUE
IMAGE AND PREDICTED IMAGE ⟩~S76

STORE REBUILT DECODED
IMAGE ⟩~S77

PERFORM ENCODING ⟩~S78

RETURN

# FIG.18

(a)

(b)

(c)

# FIG.19

START OF MOTION PREDICTION IN MERGE MODE

S81
COUNT NUMBER OF APPEARANCES OF MOTION COMPENSATION MODES IN NEIGHBORING AREAS

S82
LINE UP COUNTING RESULTS IN ORDER OF FREQUENCY OF APPEARANCE

S83
CALCULATE RD COST $J_1$ WHEN MOTION COMPENSATION IS PERFORMED AT RANK 1

S84
IS DETERMINATION TO BE DISCONTINUED AFTER OBTAINING RESULT OF RANK 1? — YES

NO

S85
CALCULATE RD COST $J_2$ WHEN MOTION COMPENSATION IS PERFORMED AT RANK 2

S86
IS DETERMINATION TO BE DISCONTINUED AFTER OBTAINING RESULT OF RANK 2? — YES

NO

S87
CALCULATE RD COST $J_3$ WHEN MOTION COMPENSATION IS PERFORMED AT RANK 3

S88
IS DETERMINATION TO BE DISCONTINUED AFTER OBTAINING RESULT OF RANK 3? — YES

NO

S89
CALCULATE RD COST $J_4$ WHEN MOTION COMPENSATION IS PERFORMED AT RANK 4

S90
IS RD COST $J_1$ SMALLEST? — YES

NO

S91
IS RD COST $J_2$ SMALLEST? — YES

NO

S92
IS RD COST $J_3$ SMALLEST? — YES

NO

S93
SEND SIGNAL INDICATING THAT MOTION COMPENSATION WAS PERFORMED AT RANK 4 (inter_order=3)

S94
SEND SIGNAL INDICATING THAT MOTION COMPENSATION WAS PERFORMED AT RANK 1 (inter_order=0)

S95
SEND SIGNAL INDICATING THAT MOTION COMPENSATION WAS PERFORMED AT RANK 2 (inter_order=1)

S96
SEND SIGNAL INDICATING THAT MOTION COMPENSATION WAS PERFORMED AT RANK 3 (inter_order=2)

RETURN

# FIG.20

```
        ┌─────────────────────────┐
        │   START OF ENCODING     │
        │ OPERATION ACCORDING     │
        │    TO SIZE OF CU        │
        └─────────────────────────┘
                    │  S100
                    ▼
        ┌─────────────────────────┐
        │  SET ENCODING PARAMETERS │
        └─────────────────────────┘
                    │  S101
                    ▼
        ┌─────────────────────────┐
        │      PARTITION CU        │
        └─────────────────────────┘
                    │
                    ▼  S102
              IS SIZE OF CU                    NO
          SMALLER THAN THRESHOLD ────────────────┐
                VALUE?                            │
                    │ YES                         │
                    │  S103                       │  S105
                    ▼                             ▼
        ┌─────────────────────────┐   ┌─────────────────────────┐
        │   ESTIMATE RD COSTS IN   │   │  ESTIMATE RD COSTS IN ALL │
        │   TRANSLATION MODE,      │   │         MODES            │
        │  TRANSLATION-ROTATION    │   └─────────────────────────┘
        │  MODE, AND TRANSLATION-  │               │  S106
        │      SCALING MODE        │               ▼
        └─────────────────────────┘   ┌─────────────────────────┐
                    │  S104            │  SET MODE HAVING LOWEST RD │
                    ▼                  │   COST AS MOTION          │
        ┌─────────────────────────┐   │  COMPENSATION MODE        │
        │  SET MODE HAVING LOWEST RD │  └─────────────────────────┘
        │   COST AS MOTION          │              │
        │  COMPENSATION MODE        │              │
        └─────────────────────────┘              │
                    │                             │
                    ▼◄────────────────────────────┘
                    │  S107
                    ▼
        ┌─────────────────────────┐
        │     MOTION PREDICTION     │
        └─────────────────────────┘
                    │  S108
                    ▼
        ┌─────────────────────────┐
        │   ENCODING OPERATION      │
        └─────────────────────────┘
                    │  S109
                    ▼
         NO     ARE ALL CUs
       ◄────────PROCESSED?
                    │ YES
                    ▼
        ┌─────────────────────────┐
        │          END             │
        └─────────────────────────┘
```

# FIG.21

```
         ┌─────────────────────────┐
         │   START OF ENCODING     │
         │ OPERATION IN WHICH QP   │
         │ IS TAKEN INTO ACCOUNT   │
         └─────────────────────────┘
                     │
                     │  S110
         ┌─────────────────────────┐
         │ SET ENCODING PARAMETERS │
         └─────────────────────────┘
                     │
                     │  S111
         ┌─────────────────────────┐
         │      PARTITION CU       │
         └─────────────────────────┘
                     │
                     │  S112
              ╱────────────╲         NO
             ╱ IS QP SMALLER ╲──────────────────┐
             ╲ THAN THRESHOLD ╱                 │
              ╲   VALUE?    ╱                    │
               ╲──────────╱                     │  S117
                  │ YES                ┌──────────────────────┐
                  │  S113              │  ESTIMATE RD COSTS IN │
         ┌─────────────────────────┐  │      ALL MODES        │
         │ ESTIMATE RD COST ONLY IN│  └──────────────────────┘
         │  AFFINE TRANSFORMATION  │             │
         │         MODE            │             │  S118
         └─────────────────────────┘  ┌──────────────────────┐
                     │                │ SET MODE HAVING LOWEST│
                     │  S114          │  RD COST AS MOTION    │
              ╱────────────╲    NO    │  COMPENSATION MODE    │
             ╱  IS RD COST   ╲────────└──────────────────────┘
             ╲SMALLER THAN THRESHOLD╱          │
              ╲   VALUE?    ╱                   │
               ╲──────────╱                    │
                  │ YES                         │
                  │  S115                       │  S116
         ┌─────────────────────────┐  ┌──────────────────────┐
         │  SET AFFINE TRANSFORMATION│  │ SET TRANSLATION MODE AS│
         │   MODE AS MOTION        │  │ MOTION COMPENSATION MODE│
         │  COMPENSATION MODE      │  └──────────────────────┘
         └─────────────────────────┘          │
                     │────────────────────────┘
                     │  S119
         ┌─────────────────────────┐
         │    MOTION PREDICTION    │
         └─────────────────────────┘
                     │
                     │  S120
         ┌─────────────────────────┐
         │    ENCODING OPERATION   │
         └─────────────────────────┘
                     │
                     │  S121
              ╱────────────╲  NO
             ╱  ARE ALL Cus  ╲──────┐
             ╲  PROCESSED?   ╱      │
              ╲──────────╱          │
                  │ YES
               ┌──────┐
               │ END  │
               └──────┘
```

FIG.22

# FIG.23

START OF IMAGE
DECODING
OPERATION

S122
DECODE ENCODED VIDEO
SIGNALS

S123
SET CU

S124
IS INTER-PREDICTION
OPERATION TO BE
PERFORMED?

NO

S128
INTRA-DECODING
OPERATION

YES

S125
MERGE FLAG=1?

NO

YES

S126
MERGE MODE DECODING
OPERATION

S126
AMVP MODE
DECODING
OPERATION

END

# FIG.24

START OF MERGE MODE
DECODING OPERATION

↓ S129

PERFORM INVERSE
QUANTIZATION

↓ S130

PERFORM INVERSE ORTHOGONAL
TRANSFORMATION

↓ S131

COUNT NUMBER OF
APPEARANCES OF MOTION
COMPENSATION MODES IN
NEIGHBORING AREAS

↓ S132

LINE UP COUNTING RESULTS IN
ORDER OF FREQUENCY OF
APPEARANCE

↓ S133

RECEIVE SIGNAL inter_order

↓ S134

inter_order=0? ──YES──→ S138

PERFORM MOTION
COMPENSATION IN
MODE
CORRESPONDING TO
RANK 1

NO ↓ S135

inter_order=1? ──YES──→ S139

PERFORM MOTION
COMPENSATION IN
MODE
CORRESPONDING TO
RANK 2

NO ↓ S136

inter_order=2? ──YES──→ S140

PERFORM MOTION
COMPENSATION IN
MODE
CORRESPONDING TO
RANK 3

NO ↓ S137

PERFORM MOTION
COMPENSATION IN MODE
CORRESPONDING TO RANK 4

↓ S141

ADD PREDICTIVE RESIDUE
IMAGE AND PREDICTED IMAGE

↓ S142

STORE REBUILT DECODED IMAGE

↓

RETURN

# FIG.25

```
START OF AMVP
MODE DECODING
OPERATION
```

PERFORM INVERSE
QUANTIZATION — S151

PERFORM INVERSE
ORTHOGONAL
TRANSFORMATION — S152

S153
TRANSLATION
MODE? —— NO

YES

S157
AFFINE
TRANSFORMATION
MODE? —— NO

YES

S162
TRANSLATION-
ROTATION
MODE? —— NO

YES

S154
DECIDE ON SINGLE
PREDICTED VECTOR

S158
DECIDE ON THREE
PREDICTED VECTORS

S163
DECIDE ON SINGLE
PREDICTED VECTOR
AND PREDICTED-
ANGLE INFORMATION

S166
DECIDE ON SINGLE
PREDICTED VECTOR
AND PREDICTED-
SCALING-FACTOR
INFORMATION

S155
CALCULATE SINGLE
MOTION VECTOR

S159
CALCULATE THREE
MOTION VECTORS

S164
CALCULATE SINGLE
MOTION VECTOR AND
ANGLE INFORMATION

S167
CALCULATE SINGLE
MOTION VECTOR AND
SCALING FACTOR
INFORMATION

S156
PERFORM MOTION
COMPENSATION IN
TRANSLATION MODE
WITH RESPECT TO
REFERENCE IMAGE

S160
CALCULATE MOTION
VECTOR OF EACH UNIT
BLOCK

S165
PERFORM MOTION
COMPENSATION IN
TRANSLATION-
ROTATION MODE WITH
RESPECT TO
REFERENCE IMAGE

S168
PERFORM MOTION
COMPENSATION IN
TRANSLATION-SCALING
MODE WITH RESPECT
TO REFERENCE IMAGE

S161
PERFORM MOTION
COMPENSATION IN
AFFINE
TRANSFORMATION
MODE WITH RESPECT
TO REFERENCE IMAGE

ADD PREDICTIVE
RESIDUE IMAGE AND
PREDICTED IMAGE — S169

STORE REBUILT
DECODED IMAGE — S170

RETURN

# FIG.26

START OF DECODING
OPERATION ACCORDING
TO SIZE OF CU

S171

IS SIZE OF CU
SMALLER THAN THRESHOLD
VALUE?

NO

YES

S172

RECEIVE SIGNAL SPECIFYING
TRANSLATION MODE,
TRANSLATION-ROTATION
MODE, OR TRANSLATION-
SCALING MODE

S173

RECEIVE SIGNAL SPECIFYING
MODE FROM AMONG ALL
MODES

S174

SET SPECIFIED MODE AS
MOTION COMPENSATION MODE

S175

MOTION PREDICTION

S176

DECODING OPERATION

S177

NO

ARE ALL CUs
PROCESSED?

YES

END

# FIG.27

```
     ┌─────────────────────────┐
     │   START OF DECODING     │
     │ OPERATION IN WHICH QP   │
     │  IS TAKEN INTO ACCOUNT  │
     └─────────────────────────┘
                 │
                 ▼                S181
           ╱─────────────╲              NO
          ╱  IS QP SMALLER ╲──────────────────┐
          ╲ THAN THRESHOLD ╱                   │
           ╲    VALUE?    ╱                     │
            ╲───────────╱                       │
                 │ YES                          │
                 ▼        S182                   ▼        S183
     ┌─────────────────────────┐    ┌─────────────────────────┐
     │ RECEIVE SIGNAL SPECIFYING│   │ RECEIVE SIGNAL SPECIFYING│
     │  AFFINE TRANSFORMATION   │   │   MODE FROM AMONG ALL    │
     │ MODE OR TRANSLATION MODE │   │         MODES            │
     └─────────────────────────┘    └─────────────────────────┘
                 │                              │
                 ▼◄─────────────────────────────┘
                 │          S184
     ┌─────────────────────────┐
     │   SET SPECIFIED MODE AS  │
     │ MOTION COMPENSATION MODE │
     └─────────────────────────┘
                 │
       ┌────────►│          S185
       │  ┌─────────────────────────┐
       │  │    MOTION PREDICTION     │
       │  └─────────────────────────┘
       │              │       S186
       │  ┌─────────────────────────┐
       │  │   DECODING OPERATION     │
       │  └─────────────────────────┘
       │              │
       │              ▼        S187
       │   NO    ╱─────────────╲
       └────────╱  ARE ALL CUs  ╲
                ╲  PROCESSED?    ╱
                 ╲─────────────╱
                      │ YES
                      ▼
                 ┌─────────┐
                 │   END   │
                 └─────────┘
```

# FIG.28

# FIG.29

900

EP 3 820 149 A1

# FIG.30

920

921

922
COMMUNI-
CATION
UNIT

923
AUDIO
CODEC

924

925

926 CAMERA
UNIT

928 MULTIPLEX-
ING-
SEPARAT-
ING UNIT

927 IMAGE
PROCESS-
ING UNIT

929 RECORD-
ING-
REPRODUC-
ING UNIT

930 DISPLAY
UNIT

933

931 CONTROL
UNIT

932 OPERATING
UNIT

# FIG.31

# FIG.32

960

961  962  963  964  965

IMAGING UNIT

SIGNAL PROCESS-ING UNIT

IMAGE PROCESS-ING UNIT

DISPLAY UNIT

967 ~ MEMORY UNIT

OSD UNIT ~ 969

~ 972

966 ~ EXTERNAL I/F UNIT

CONTROL UNIT

USER I/F UNIT

970  971

MEDIA DRIVE

968

EP 3 820 149 A1

# FIG.33

# FIG.34

# FIG.35

# FIG.36

EP 3 820 149 A1

## INTERNATIONAL SEARCH REPORT

| International application No. |
| --- |
| PCT/JP2019/018616 |

**A. CLASSIFICATION OF SUBJECT MATTER**
Int.Cl.   H04N19/109(2014.01)i,  H04N19/139(2014.01)i,
          H04N19/176(2014.01)i,  H04N19/54(2014.01)i

According to International Patent Classification (IPC) or to both national classification and IPC

**B. FIELDS SEARCHED**

Minimum documentation searched (classification system followed by classification symbols)
Int.Cl. H04N19/00-19/98

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | WO 2018/061563 A1 (SHARP CORP.) 05 April 2018, paragraph [0281], fig. 4, 6, 20 (Family: none) | 1,11–13,18–19<br>2–10,14–17 |
| X<br>A | JP 2015-92650 A (PANASONIC INTELLECTUAL PROPERTY CORPORATION OF AMERICA) 14 May 2015, paragraph [0064], fig. 1, 4, 8–9 & US 2015/0092851 A1, paragraph [0116], fig. 1, 4, 8–9 | 1,11–13,18–19<br>2–10,14–17 |
| A | SUZUKI, Teruhiko et al., "Description of SDR and HDR video coding technology proposal by Sony", Joint Video Exploration Team (JVET) of ITU—T SG 16 WP 3 and ISO/IEC JTC 1/SC 29/WG 11 10th Meeting: San Diego, US, 10–20 Apr. 2018, [JVET-J0028], pp. 7–9 | 1–19 |

☐  Further documents are listed in the continuation of Box C.          ☐  See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| 08 July 2019 (08.07.2019) | 23 July 2019 (23.07.2019) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**EP 3 820 149 A1**

**Non-patent literature cited in the description**

- **JIANLE CHEN et al.** Algorithm Description of Joint Exploration Test Model 4 (JVET-C1001). *JVET of ITU-T SG16 WP3 and ISO/IEC JTC1/SC29/WG11,* 01 June 2016

- **FENG ZOU.** Improved affine motion prediction (JVET-C0062). *JVET of ITU-T SG16 WP3 and ISO/IEC JTC1/SC29/WG11,* 01 June 2016